# EUROPEAN PATENT APPLICATION

(11) **EP 4 611 461 A1**
(43) Date of publication of application: **03.09.2025**
(21) Application number: 23916789.3
(22) Date of filing: 19.01.2023
(51) Int. Cl.: H04W 72/23

(54) **DATA TRANSMISSION METHOD AND APPARATUS, AND ELECTRONIC DEVICE**

(71) Applicant: New H3C Technologies Co., Ltd., Hangzhou, Zhejiang 310052 (CN)
(72) Inventor: ZHOU, Lei, Beijing 100102 (CN); KONG, Lei, Beijing 100102 (CN)
(74) Representative: Bandpay & Greuter
(86) International application number: PCT/CN2023/073184
(87) International publication number: WO 2024/152309

(57) **Abstract**

The present disclosure provides a data transmission method and apparatus, and an electronic device. The method includes: when there is an overlapping resource between an initial physical downlink control channel (PDCCH) frequency-domain resource of a PDCCH and an initial sub-band full-duplex (SBFD) time-frequency resource of SBFD, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource; sending downlink data corresponding to the PDCCH based on the target PDCCH frequency-domain resource, so that a user equipment (UE) receives the downlink data based on the target PDCCH frequency-domain resource determined by the UE. The technical solution of the present disclosure can improve resource utilization rate.

## Description

### TECHNICAL FIELD

The present disclosure relates to the technical field of communication, and in particular, to a data transmission method and apparatus, and an electronic device.

### BACKGROUND

A TDD (Time Division Duplex) system is widely used in a mobile communication system, such as a 5G system, etc. In a TDD system, a frame structure is divided into a DL (Downlink) slot, a UL (Uplink) slot and a S (Special) slot. The DL slot includes DL symbols, and downlink data is processed in the frequency-domain resources corresponding to these DL symbols. The UL slot includes UL symbols, and uplink data is processed in the frequency-domain resources corresponding to these UL symbol. An F slot includes at least one F (Flexible) symbol, F symbol can be used for DL, that is, downlink data is processed in frequency-domain resources corresponding to the F slot; the F symbol can also be used for UL, that is, uplink data is processed in frequency-domain resources corresponding to the F slot; and the F symbol can also be used for GP (Guard Period), that is, guard of uplink/downlink switching is performed in frequency-domain resources corresponding to the F symbol. The TDD system can operate in a HD (Half Duplex) mode, that is, the same frequency-domain resource can only be used for UL or DL at a moment.

### SUMMARY

The present disclosure provides a data transmission method, performed by a base station, including:
when there is an overlapping resource between an initial physical downlink control channel (PDCCH) frequency-domain resource of a PDCCH and an initial sub-band full-duplex (SBFD) time-frequency resource of SBFD, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource;
sending downlink data corresponding to the PDCCH based on the target PDCCH frequency-domain resource, so that a user equipment (UE) receives the downlink data based on the target PDCCH frequency-domain resource determined by the UE.

The present disclosure provides a data transmission method, performed by a user equipment (UE), including:
when there is an overlapping resource between an initial physical downlink control channel (PDCCH) frequency-domain resource of a PDCCH and an initial sub-band full-duplex (SBFD) time-frequency resource of SBFD, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource;
receiving downlink data corresponding to the PDCCH based on the target PDCCH frequency-domain resource.

The present disclosure provides a data transmission apparatus, applied to a base station, including:
a determining module, configured to, when there is an overlapping resource between an initial physical downlink control channel (PDCCH) frequency-domain resource of a PDCCH and an initial sub-band full-duplex (SBFD) time-frequency resource of SBFD, determine a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource;
a transmitting module, configured to send downlink data corresponding to the PDCCH based on the target PDCCH frequency-domain resource, so that a user equipment (UE) receives the downlink data based on the target PDCCH frequency-domain resource determined by the UE.

The present disclosure provides a data transmission apparatus, applied to a user equipment (UE), including:
a determining module, configured to, when there is an overlapping resource between an initial physical downlink control channel (PDCCH) frequency-domain resource of a PDCCH and an initial sub-band full-duplex (SBFD) time-frequency resource of SBFD, determine a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource;
a transmitting module, configured to receive downlink data corresponding to the PDCCH based on the target PDCCH frequency-domain resource.

The present disclosure provides an electronic device, including a processor and a machine-readable storage medium, where the machine-readable storage medium stores a machine-executable instruction executable by the processor; the processor is configured to execute the machine-executable instruction to implement the above data transmission method.

As can be seen from the above technical solutions, in a case that the SBFD (Sub-Band Full Duplex) time-frequency resource overlaps with the PDCCH (Physical Downlink Control Channel) frequency-domain resource, the base station can fully use the PDCCH frequency-domain resource to schedule UE transmissions on the SBFD time-frequency resource, the UE can be informed of the PDCCH frequency-domain resource, so that blind detect complexity of PDCCH can be reduced, and the SBFD time-frequency resource configuration and the PDCCH frequency-domain resource configuration can be effectively implemented. From a perspective of an overall system, cell coverage can be increased, transmission latency can be reduced, and capacity of uplink transmission can be increased. Data transmission in the TDD system can be supported, thereby improving data utilization, improving network coverage and network capacity, increasing uplink transmission resource and cell coverage, reducing uplink transmission latency and increasing uplink transmission capacity.

### BRIEF DESCRIPTION OF DRAWINGS

FIG. 1 is a schematic flowchart of a data transmission method in an example of the present disclosure.
FIG. 2 is a schematic flowchart of a data transmission method in an example of the present disclosure.
FIGS. 3A-3C are schematic diagrams showing relative positions of SBFD time-frequency resources and PDCCH frequency-domain resources.
FIG. 3D is a schematic diagram showing signaling interactions between a base station and a UE.
FIGS. 4A and 4B are schematic diagrams showing a single/a plurality of occupied OFDM symbol(s).
FIG. 4C is a schematic diagram showing relative positions of SBFD time-frequency resources and PDCCH frequency-domain resources.
FIG. 5 is a schematic diagram showing relative positions of SBFD time-frequency resources and PDCCH frequency-domain resources.
FIG. 6 is a schematic diagram showing relative positions of SBFD time-frequency resources and PDCCH frequency-domain resources.

### DETAILED DESCRIPTION

The terminologies used in the present disclosure are for the purpose of describing specific embodiments only and are not intended to limit the present disclosure. Singular forms "a", "the" and "said" used in the present disclosure and the appended claims are also intended to include plural forms, unless the context clearly indicates other meaning. It should also be understood that the term "and/or" as used herein refers to and includes any or all possible combinations of one or more associated listed items.

It should be understood that although the terms "first", "second", "third", etc., may be used to describe various information in embodiments of the present disclosure, these information should not be limited to these terms. These terms are only used to distinguish a same type of information from each other. For example, without departing from the scope of the present disclosure, first information may also be referred to as second information, and similarly, second information may also be referred to as first information. Depending on context, word "if" as used herein can be interpreted as "when" or "upon" or "in response to determining".

In a TDD system, a frame structure is divided into a DL slot, a UL slot and an F slot, where the DL slot includes DL symbols, and downlink data is processed in frequency-domain resources corresponding to these DL symbols; the UL slot includes UL symbols, and uplink data is processed in frequency-domain resources corresponding to these UL symbols; the F slot includes at least one F symbol, which can be used for DL, UL or GP. At present, the TDD system can operate in a HD (half duplex) mode, that is, at a moment, the same frequency-domain resource can only be used for either UL or DL. In order to use frequency-domain resources more flexibly and improve resource utilization, the TDD system can also work in a FD (full duplex) mode, that is, at a moment, the same frequency-domain resource can be used for both UL and DL, that is, uplink data and downlink data are processed simultaneously on same frequency-domain resources.

In the TDD system, once the frame structure is determined, a user equipment (UE) can send and receive data according to the frame structure, where the frame structure is divided into DL slots, UL slots and F slots. For a UE adopting the HD mode, a base station (such as gNB, etc.) schedules the UE to send or receive according to the frame structure. For a UE adopting the FD mode, a base station schedules the UE to send, receive, or send and receive at the same time according to the frame structure.

As described above, the base station can configure the frame structure, and inform the UE of the frame structure, so that the UE can be informed of the frame structure, and thus can correctly send and receive data. From another perspective, after the UE is informed of the frame structure, the UE can learn a possible interference between UEs, so that interference cancellation technologies can be adopted to reduce the interference, and improve reliability of communication.

In an example, in the TDD system, for the frame structure taking downlink transmissions as main transmissions, there are usually more DL slots configured, which leads to fewer UL slots, which leads to limited uplink transmission rate and increased uplink data transmission latency, and causes increased uplink transmission latency, which is disadvantageous for uplink services.

In an example of the present disclosure, a data transmission method is provided, flexible downlink frequency-domain resources and uplink frequency-domain resources are configured for the UE through SBFD time-frequency resources, uplink data can be transmitted on the uplink frequency-resources, that is, the uplink frequency-domain resources can be configured by using downlink slots or F slots, and the uplink data can be transmitted through the uplink frequency-domain resources, so as to improve uplink transmission rate and reduce transmission latency of the uplink data. In addition, the downlink frequency-domain resources can be configured by using uplink slots or F slots, and the downlink data can be transmitted through the downlink frequency-domain resources, so as to improve downlink transmission rate and reduce transmission latency of the downlink data.

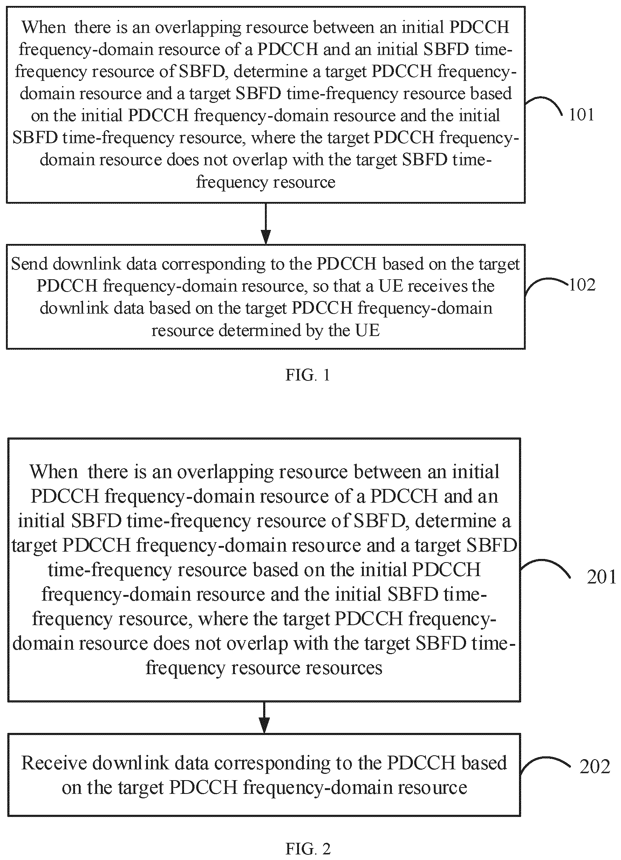

An example of the present disclosure provides a data transmission method, which can be performed by a base station. As shown in FIG. 1, FIG. 1 is a flowchart of the data transmission method, and the method may include:

Step 101, when there is an overlapping resource between an initial PDCCH frequency-domain resource of a PDCCH and an initial SBFD time-frequency resource of SBFD, determining a target PDCCH frequency-domain resource and a target SBFD time-frequency resource based on the initial PDCCH frequency-domain resource and the initial SBFD time-frequency resource. The target PDCCH frequency-domain resource does not overlap with the target SBFD time-frequency resource, that is, they do not include repeated resources.

Step 102, sending downlink data corresponding to the PDCCH based on the target PDCCH frequency-domain resource, so that a UE receives the downlink data based on the target PDCCH frequency-domain resource determined by the UE.

In an example, determining a target PDCCH frequency-domain resource and a target SBFD time-frequency resource based on the initial PDCCH frequency-domain resource and the initial SBFD time-frequency resource may include: determining the initial SBFD time-frequency resource as the target SBFD time-frequency resource; and excluding the overlapping resource from the initial PDCCH frequency-domain resource to obtain a candidate PDCCH frequency-domain resource, and determining the target PDCCH frequency-domain resource based on the candidate PDCCH frequency-domain resource.

In an example, the initial PDCCH frequency-domain resource and the initial SBFD time-frequency resource are in downlink slots or downlink symbols, and the initial SBFD time-frequency resource includes at least one of an uplink sub-band or a guard sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, the Flexible slots or the Flexible symbols are used for a Flexible sub-band, and the Flexible sub-band is used for downlink.

In an example, determining the target PDCCH frequency-domain resource based on the candidate PDCCH frequency-domain resource may include, but is not limited to: when the candidate PDCCH frequency-domain resource includes a first candidate frequency-domain resource and a second candidate frequency-domain resource, determining a first target frequency-domain resource based on the first candidate frequency-domain resource, and determining a second target frequency-domain resource based on the second candidate frequency-domain resource; determining the target PDCCH frequency-domain resource based on the first target frequency-domain resource and the second target frequency-domain resource. The first target frequency-domain resource and the second target frequency-domain resource may be non-consecutive frequency-domain resources; the first target frequency-domain resource may correspond to a control resource set (CORESET), and the second target frequency-domain resource may correspond to another CORESET.

In an example, the first candidate frequency-domain resource includes at least one control channel element (CCE), and for each CCE, a number of resource blocks (RB) in the CCE is related to control resource granularity; determining a first target frequency-domain resource based on the first candidate frequency-domain resource may include: determining a total number of RBs corresponding to the first candidate frequency-domain resource; determining a to-be-excluded number of RBs based on the total number of RBs and the control resource granularity, and excluding the to-be-excluded number of RBs from all RBs of the first candidate frequency-domain resource; generating the first target frequency-domain resource based on remaining RBs of the first candidate frequency-domain resource.

In an example, the to-be-excluded number may be a remainder result of the total number of RBs and the control resource granularity. In addition, the control resource granularity may be a first value, or the control resource granularity may be a second value, the second value is smaller than the first value, and the second value is greater than 0; where when the control resource granularity is the second value, an aggregation level corresponding to the control resource granularity may be greater than a preset aggregation level.

In an example, the first candidate frequency-domain resource may include at least one CCE, and for each CCE, the CCE may include at least one RB; determining a first target frequency-domain resource based on the first candidate frequency-domain resource may include: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

In an example, the first candidate frequency-domain resource may include at least one CCE, and for each CCE, the CCE may include at least one RB; determining a first target frequency-domain resource based on the first candidate frequency-domain resource may include: determining the first candidate frequency-domain resource as the first target frequency-domain resource; where after determining the first candidate frequency-domain resource as the first target frequency-domain resource, when the first candidate frequency-domain resource includes a first CCE, where part of RBs of the first CCE are occupied by the overlapping resource, rate matching can be performed on data corresponding to the first CCE.

In an example, performing rate matching on data corresponding to the first CCE may include: performing high channel coding rate on the data corresponding to the first CCE; or, performing high-level modulation on the data corresponding to the first CCE; or selecting part of data from the data corresponding to the first CCE.

In an example, after determining the target PDCCH frequency-domain resource based on the first target frequency-domain resource and the second target frequency-domain resource, the method may further include: sending a PDCCH resource reconfiguration message to the UE, where the PDCCH resource reconfiguration message may include resource information corresponding to the target PDCCH frequency-domain resource; where the target PDCCH frequency-domain resource may include the first target frequency-domain resource and the second target frequency-domain resource, and the resource information may include resource information corresponding to the first target frequency-domain resource and resource information corresponding to the second target frequency-domain resource.

In an example, determining the target PDCCH frequency-domain resource based on the candidate PDCCH frequency-domain resource may include: when the candidate PDCCH frequency-domain resource includes a first candidate frequency-domain resource and a second candidate frequency-domain resource, generating consecutive frequency-domain resources based on the first candidate frequency-domain resource and the second candidate frequency-domain resource; determining the target PDCCH frequency-domain resource based on the consecutive frequency-domain resources; where the consecutive frequency-domain resources correspond to one CORESET.

In an example, generating consecutive frequency-domain resources based on the first candidate frequency-domain resource and the second candidate frequency-domain resource may include: when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

In an example, after determining the target PDCCH frequency-domain resource based on the consecutive frequency-domain resources, the method may further include: sending a PDCCH resource reconfiguration message to the UE, where the PDCCH resource reconfiguration message may include resource information corresponding to the target PDCCH frequency-domain resource; where the target PDCCH frequency-domain resource may include the consecutive frequency-domain resources, and the resource information may include resource information corresponding to the consecutive frequency-domain resources.

In an example, determining the target PDCCH frequency-domain resource based on the candidate PDCCH frequency-domain resource may include: when the candidate PDCCH frequency-domain resource includes a first candidate frequency-domain resource and a second candidate frequency-domain resource, generating non-consecutive frequency-domain resources based on the first candidate frequency-domain resource and the second candidate frequency-domain resource; determining the target PDCCH frequency-domain resource based on the non-consecutive frequency-domain resources; where the non-consecutive frequency-domain resources correspond to one CORESET.

In an example, the first candidate frequency-domain resource may include at least one CCE, the second candidate frequency-domain resource may include at least one CCE, and for each CCE, a number of RBs in the CCE is related to control resource granularity. Based on this, generating non-consecutive frequency-domain resources based on the first candidate frequency-domain resource and the second candidate frequency-domain resource may include but is not limited to: determining a total number of RBs corresponding to the first candidate frequency-domain resource and the second candidate frequency-domain resource; determining a to-be-excluded number of RBs based on the total number of RBs and the control resource granularity, and excluding the to-be-excluded number of RBs from all RBs of the first candidate frequency-domain resource and the second candidate frequency-domain resource; generating the non-consecutive frequency-domain resources based on remaining RBs of the first candidate frequency-domain resource and the second candidate frequency-domain resource.

In an example, the to-be-excluded number may be a remainder result of the total number of RBs and the control resource granularity; the control resource granularity may be a first value, or the control resource granularity may be a second value, the second value is smaller than the first value, and the second value is greater than 0; where when the control resource granularity is the second value, an aggregation level corresponding to the control resource granularity may be greater than a preset aggregation level.

In an example, the first candidate frequency-domain resource may include at least one CCE, the second candidate frequency-domain resource may include at least one CCE, and for each CCE, the CCE includes at least one RB; generating non-consecutive frequency-domain resources based on the first candidate frequency-domain resource and the second candidate frequency-domain resource may include: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource; when the second candidate frequency-domain resource includes a second CCE, where part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource; generating the non-consecutive frequency-domain resources based on the first target frequency-domain resource and the second target frequency-domain resource.

In an example, the first candidate frequency-domain resource may include at least one CCE, the second candidate frequency-domain resource may include at least one CCE, and for each CCE, the CCE may include at least one RB; generating non-consecutive frequency-domain resources based on the first candidate frequency-domain resource and the second candidate frequency-domain resource may include: determining the first candidate frequency-domain resource and the second candidate frequency-domain resource as the non-consecutive frequency-domain resources; where after determining the first candidate frequency-domain resource and the second candidate frequency-domain resource as the non-consecutive frequency-domain resources, the method may further include: when the first candidate frequency-domain resource includes a first CCE, where part of RBs of the first CCE are occupied by the overlapping resource, performing rate matching on data corresponding to the first CCE; when the second candidate frequency-domain resource includes a second CCE, where part of RBs of the second CCE are occupied by the overlapping resource, performing rate matching on data corresponding to the second CCE.

In an example, performing rate matching on data corresponding to the first CCE may include but is not limited to: performing high channel coding rate on the data corresponding to the first CCE; or, performing high-level modulation on the data corresponding to the first CCE; or selecting part of data from the data corresponding to the first CCE.

In an example, performing rate matching on data corresponding to the second CCE may include but is not limited to: performing high channel coding rate on the data corresponding to the second CCE; or, performing high-level modulation on the data corresponding to the second CCE; or selecting part of data from the data corresponding to the second CCE.

In an example, after determining the target PDCCH frequency-domain resource based on the non-consecutive frequency-domain resources, the method may further include: when the target PDCCH frequency-domain resource needs to be interleaved, and the target PDCCH frequency-domain resource includes the non-consecutive frequency-domain resources, splicing the non-consecutive frequency-domain resources and then interleaving.

In an example, after determining the target PDCCH frequency-domain resource based on the non-consecutive frequency-domain resources, the method may further include: sending a PDCCH resource reconfiguration message to the UE, where the PDCCH resource reconfiguration message may include resource information corresponding to the target PDCCH frequency-domain resource; where the target PDCCH frequency-domain resource may include the non-consecutive frequency-domain resources, and the resource information may include resource information corresponding to the non-consecutive frequency-domain resources.

In an example, determining a target PDCCH frequency-domain resource and a target SBFD time-frequency resource based on the initial PDCCH frequency-domain resource and the initial SBFD time-frequency resource may include: determining the initial SBFD time-frequency resource as the target SBFD time-frequency resource; and excluding the overlapping resource from the initial PDCCH frequency-domain resource to obtain a candidate PDCCH frequency-domain resource, and when the initial SBFD time-frequency resource includes a downlink sub-band, determining the target PDCCH frequency-domain resource based on the candidate PDCCH frequency-domain resource and a frequency-domain resource corresponding to the downlink sub-band.

In an example, determining a target PDCCH frequency-domain resource and a target SBFD time-frequency resource based on the initial PDCCH frequency-domain resource and the initial SBFD time-frequency resource may include: determining the target PDCCH frequency-domain resource based on the overlapping resource of the initial PDCCH frequency-domain resource and the initial SBFD time-frequency resource (for example, determining the overlapping resource as the target PDCCH frequency-domain resource), and excluding the target PDCCH frequency-domain resource from the initial SBFD time-frequency resource to determine the remaining time-frequency resource as the target SBFD time-frequency resource.

In an example, the initial PDCCH frequency-domain resource and the initial SBFD time-frequency resource are in uplink slots or uplink symbols, and the initial SBFD time-frequency resource includes a downlink sub-band; or, the initial PDCCH frequency-domain resource and the initial SBFD time-frequency resource are in Flexible slots or Flexible symbols, the initial SBFD time-frequency resource includes a downlink sub-band, and the Flexible slots or the Flexible symbols are used for an uplink sub-band; or, the initial PDCCH frequency-domain resource and the initial SBFD time-frequency resource are in Flexible slots or Flexible symbols, the initial SBFD time-frequency resource includes a downlink sub-band, the Flexible slots or the Flexible symbols are used for a Flexible sub-band, and the Flexible sub-band is used for uplink.

In an example, after determining the target PDCCH frequency-domain resource based on the overlapping resource of the initial PDCCH frequency-domain resource and the initial SBFD time-frequency resource, the method may further include: sending a PDCCH resource reconfiguration message to the UE, where the PDCCH resource reconfiguration message includes resource information corresponding to the target PDCCH frequency-domain resource; where the target PDCCH frequency-domain resource includes the overlapping resource, and the resource information includes resource information corresponding to the overlapping resource.

In an example, determining a target PDCCH frequency-domain resource and a target SBFD time-frequency resource based on the initial PDCCH frequency-domain resource and the initial SBFD time-frequency resource may include: determining the initial PDCCH frequency-domain resource as the target PDCCH frequency-domain resource, and excluding the overlapping resource from the initial SBFD time-frequency resource to obtain the target SBFD time-frequency resource (that is, the SBFD time-frequency resource from which the overlapping resource has been excluded).

In an example, the initial PDCCH frequency-domain resource and the initial SBFD time-frequency resource are in downlink slots or downlink symbols, and the initial SBFD time-frequency resource includes at least one of an uplink sub-band or a guard sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, the Flexible slots or the Flexible symbols are used for a Flexible sub-band, and the Flexible sub-band is used for downlink.

In an example, when a target frame includes K downlink slots configured with the initial PDCCH frequency-domain resource in all slots of the target frame, and the initial PDCCH frequency-domain resource in M downlink slots overlaps with the initial SBFD time-frequency resource, M may be smaller than K; based on this, sending downlink data corresponding to the PDCCH based on the target PDCCH frequency-domain resource may include: sending the downlink data corresponding to the PDCCH based on the target PDCCH frequency-domain resource in the K downlink slots; or, sending the downlink data corresponding to the PDCCH based on the target PDCCH frequency-domain resource in the M downlink slots, and sending the downlink data corresponding to the PDCCH on the initial PDCCH frequency-domain resource in remaining downlink slots rather than the M downlink slots.

In an example, the UE may correspond to N dedicated PDCCH frequency-domain resources and P dedicated PDCCH frequency-domain resources, the N dedicated PDCCH frequency-domain resources may be initially configured PDCCH frequency-domain resources, and the P dedicated PDCCH frequency-domain resources may be re-configured PDCCH frequency-domain resources; or, the UE may correspond to N dedicated PDCCH frequency-domain resources, the N dedicated PDCCH frequency-domain resources may include initially configured PDCCH frequency-domain resources and re-configured PDCCH frequency-domain resources.

As can be seen from the above technical solutions, in a case that the SBFD time-frequency resource overlaps with the PDCCH frequency-domain resource, the base station can fully use the PDCCH frequency-domain resource to schedule UE transmissions on the SBFD time-frequency resource, the UE can be informed of the PDCCH frequency-domain resource, so that blind detect complexity of PDCCH can be reduced, and the SBFD time-frequency resource configuration and the PDCCH frequency-domain resource configuration can be effectively implemented. From a perspective of an overall system, cell coverage can be increased, transmission latency can be reduced, and capacity of uplink transmission can be increased. Data transmission in the TDD system can be supported, thereby improving data utilization, improving network coverage and network capacity, increasing uplink transmission resource and cell coverage, reducing uplink transmission latency and increasing uplink transmission capacity.

An example of the present disclosure provides a data transmission method, which can be performed by a user equipment (UE). As shown in FIG. 2, FIG. 2 is a flowchart of the data transmission method, and the method may include:
Step 201, when there is an overlapping resource between an initial PDCCH frequency-domain resource of a PDCCH and an initial SBFD time-frequency resource of SBFD, determining a target PDCCH frequency-domain resource and a target SBFD time-frequency resource based on the initial PDCCH frequency-domain resource and the initial SBFD time-frequency resource. The target PDCCH frequency-domain resource does not overlap with the target SBFD time-frequency resource, that is, they do not include repeated resources.

Step 202, receiving downlink data corresponding to the PDCCH based on the target PDCCH frequency-domain resource.

In an example, determining a target PDCCH frequency-domain resource and a target SBFD time-frequency resource based on the initial PDCCH frequency-domain resource and the initial SBFD time-frequency resource may include: determining the initial SBFD time-frequency resource as the target SBFD time-frequency resource; and excluding the overlapping resource from the initial PDCCH frequency-domain resource to obtain a candidate PDCCH frequency-domain resource, and determining the target PDCCH frequency-domain resource based on the candidate PDCCH frequency-domain resource.

In an example, the initial PDCCH frequency-domain resource and the initial SBFD time-frequency resource are in downlink slots or downlink symbols, and the initial SBFD time-frequency resource includes at least one of an uplink sub-band or a guard sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, the Flexible slots or the Flexible symbols are used for a Flexible sub-band, and the Flexible sub-band is used for downlink.

In an example, determining the target PDCCH frequency-domain resource based on the candidate PDCCH frequency-domain resource may include: when the candidate PDCCH frequency-domain resource includes a first candidate frequency-domain resource and a second candidate frequency-domain resource, determining a first target frequency-domain resource and a second target frequency-domain resource; determining the target PDCCH frequency-domain resource based on the first target frequency-domain resource and the second target frequency-domain resource. The first target frequency-domain resource and the second target frequency-domain resource are non-consecutive frequency-domain resources, the first target frequency-domain resource is determined based on the first candidate frequency-domain resource, the second target frequency-domain resource is determined based on the second candidate frequency-domain resource; the first target frequency-domain resource corresponds to a control resource set (CORESET), and the second target frequency-domain resource corresponds to another CORESET.

In an example, the first candidate frequency-domain resource includes at least one control channel element (CCE), and for each CCE, a number of resource blocks (RB) in the CCE is related to control resource granularity; determining a first target frequency-domain resource based on the first candidate frequency-domain resource may include: determining a total number of RBs corresponding to the first candidate frequency-domain resource; determining a to-be-excluded number of RBs based on the total number of RBs and the control resource granularity, and excluding the to-be-excluded number of RBs from all RBs of the first candidate frequency-domain resource; generating the first target frequency-domain resource based on remaining RBs of the first candidate frequency-domain resource.

In an example, the to-be-excluded number may be a remainder result of the total number of RBs and the control resource granularity. In addition, the control resource granularity may be a first value, or the control resource granularity may be a second value, the second value is smaller than the first value, and the second value is greater than 0; where when the control resource granularity is the second value, an aggregation level corresponding to the control resource granularity may be greater than a preset aggregation level.

In an example, the first candidate frequency-domain resource may include at least one CCE, and for each CCE, the CCE may include at least one RB; determining a first target frequency-domain resource based on the first candidate frequency-domain resource may include: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

In an example, the first candidate frequency-domain resource may include at least one CCE, and for each CCE, the CCE may include at least one RB; determining a first target frequency-domain resource based on the first candidate frequency-domain resource may include: determining the first candidate frequency-domain resource as the first target frequency-domain resource; where after determining the first candidate frequency-domain resource as the first target frequency-domain resource, when the first candidate frequency-domain resource includes a first CCE, where part of RBs of the first CCE are occupied by the overlapping resource, rate matching can be performed on data corresponding to the first CCE.

In an example, performing rate matching on data corresponding to the first CCE may include but is not limited to: performing high channel coding rate on the data corresponding to the first CCE; or, performing high-level modulation on the data corresponding to the first CCE; or selecting part of data from the data corresponding to the first CCE.

In an example, determining the first target frequency-domain resource and the second target frequency-domain resource, and determining the target PDCCH frequency-domain resource based on the first target frequency-domain resource and the second target frequency-domain resource may include: receiving a PDCCH resource reconfiguration message, where the PDCCH resource reconfiguration message may include resource information corresponding to the first target frequency-domain resource and resource information corresponding to the second target frequency-domain resource; determining the first target frequency-domain resource based on the resource information corresponding to the first target frequency-domain resource; determining the second target frequency-domain resource based on the resource information corresponding to the second target frequency-domain resource. After obtaining the first target frequency-domain resource and the second target frequency-domain resource, the target PDCCH frequency-domain resource is determined based on the first target frequency-domain resource and the second target frequency-domain resource.

In an example, determining the target PDCCH frequency-domain resource based on the candidate PDCCH frequency-domain resource may include: when the candidate PDCCH frequency-domain resource includes a first candidate frequency-domain resource and a second candidate frequency-domain resource, generating consecutive frequency-domain resources based on the first candidate frequency-domain resource and the second candidate frequency-domain resource; determining the target PDCCH frequency-domain resource based on the consecutive frequency-domain resources; where the consecutive frequency-domain resources correspond to one CORESET.

In an example, generating consecutive frequency-domain resources based on the first candidate frequency-domain resource and the second candidate frequency-domain resource may include: when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

In an example, determining the target PDCCH frequency-domain resource based on the candidate PDCCH frequency-domain resource may include: receiving a PDCCH resource reconfiguration message, where the PDCCH resource reconfiguration message may include resource information corresponding to the consecutive frequency-domain resources, the consecutive frequency-domain resources may be generated based on a first candidate frequency-domain resource and a second candidate frequency-domain resource in the candidate PDCCH frequency-domain resource by a base station; determining the target PDCCH frequency-domain resource based on the consecutive frequency-domain resource corresponding to the resource information.

In an example, determining the target PDCCH frequency-domain resource based on the candidate PDCCH frequency-domain resource may include: when the candidate PDCCH frequency-domain resource includes a first candidate frequency-domain resource and a second candidate frequency-domain resource, generating non-consecutive frequency-domain resources based on the first candidate frequency-domain resource and the second candidate frequency-domain resource; determining the target PDCCH frequency-domain resource based on the non-consecutive frequency-domain resources; where the non-consecutive frequency-domain resources correspond to one CORESET.

In an example, the first candidate frequency-domain resource may include at least one CCE, the second candidate frequency-domain resource may include at least one CCE, and for each CCE, a number of RBs in the CCE is related to control resource granularity; based on this, generating non-consecutive frequency-domain resources based on the first candidate frequency-domain resource and the second candidate frequency-domain resource may include: determining a total number of RBs corresponding to the first candidate frequency-domain resource and the second candidate frequency-domain resource; determining a to-be-excluded number of RBs based on the total number of RBs and the control resource granularity, and excluding the to-be-excluded number of RBs from all RBs of the first candidate frequency-domain resource and the second candidate frequency-domain resource; generating the non-consecutive frequency-domain resources based on remaining RBs of the first candidate frequency-domain resource and the second candidate frequency-domain resource.

In an example, the to-be-excluded number may be a remainder result of the total number of RBs and the control resource granularity; the control resource granularity may be a first value, or the control resource granularity may be a second value, the second value is smaller than the first value, and the second value is greater than 0; where when the control resource granularity is the second value, an aggregation level corresponding to the control resource granularity may be greater than a preset aggregation level.

In an example, the first candidate frequency-domain resource includes at least one CCE, the second candidate frequency-domain resource includes at least one CCE, and for each CCE, the CCE includes at least one RB; generating non-consecutive frequency-domain resources based on the first candidate frequency-domain resource and the second candidate frequency-domain resource may include: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource. When the second candidate frequency-domain resource includes a second CCE, where part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource. The non-consecutive frequency-domain resources may be generated based on the first target frequency-domain resource and the second target frequency-domain resource.

In an example, the first candidate frequency-domain resource may include at least one CCE, the second candidate frequency-domain resource may include at least one CCE, and for each CCE, the CCE may include at least one RB; generating non-consecutive frequency-domain resources based on the first candidate frequency-domain resource and the second candidate frequency-domain resource may include: determining the first candidate frequency-domain resource and the second candidate frequency-domain resource as the non-consecutive frequency-domain resources; where after determining the first candidate frequency-domain resource and the second candidate frequency-domain resource as the non-consecutive frequency-domain resources, the method may further include: when the first candidate frequency-domain resource includes a first CCE, where part of RBs of the first CCE are occupied by the overlapping resource, performing rate matching on data corresponding to the first CCE; when the second candidate frequency-domain resource includes a second CCE, where part of RBs of the second CCE are occupied by the overlapping resource, performing rate matching on data corresponding to the second CCE.

In an example, performing rate matching on data corresponding to the first CCE may include but is not limited to: performing high channel coding rate on the data corresponding to the first CCE; or, performing high-level modulation on the data corresponding to the first CCE; or selecting part of data from the data corresponding to the first CCE.

In an example, performing rate matching on data corresponding to the second CCE may include but is not limited to: performing high channel coding rate on the data corresponding to the second CCE; or, performing high-level modulation on the data corresponding to the second CCE; or selecting part of data from the data corresponding to the second CCE.

In an example, after determining the target PDCCH frequency-domain resource based on the non-consecutive frequency-domain resources, the method may further include: when the target PDCCH frequency-domain resource needs to be interleaved, and the target PDCCH frequency-domain resource includes the non-consecutive frequency-domain resources, splicing the non-consecutive frequency-domain resources and then interleaving.

In an example, determining the target PDCCH frequency-domain resource based on the candidate PDCCH frequency-domain resource may include: receiving a PDCCH resource reconfiguration message, where the PDCCH resource reconfiguration message may include resource information corresponding to the non-consecutive frequency-domain resources, the non-consecutive frequency-domain resources may be generated based on a first candidate frequency-domain resource and a second candidate frequency-domain resource in the candidate PDCCH frequency-domain resource by a base station. Then, the target PDCCH frequency-domain resource can be determined based on the non-consecutive frequency-domain resources corresponding to the resource information.

In an example, determining a target PDCCH frequency-domain resource and a target SBFD time-frequency resource based on the initial PDCCH frequency-domain resource and the initial SBFD time-frequency resource may include: determining the initial SBFD time-frequency resource as the target SBFD time-frequency resource; and excluding the overlapping resource from the initial PDCCH frequency-domain resource to obtain a candidate PDCCH frequency-domain resource, and when the initial SBFD time-frequency resource includes a downlink sub-band, determining the target PDCCH frequency-domain resource based on the candidate PDCCH frequency-domain resource and a frequency-domain resource corresponding to the downlink sub-band.

In an example, determining a target PDCCH frequency-domain resource and a target SBFD time-frequency resource based on the initial PDCCH frequency-domain resource and the initial SBFD time-frequency resource may include: determining the target PDCCH frequency-domain resource based on the overlapping resource of the initial PDCCH frequency-domain resource and the initial SBFD time-frequency resource (for example, determining the overlapping resource as the target PDCCH frequency-domain resource), and excluding the target PDCCH frequency-domain resource from the initial SBFD time-frequency resource to determine the remaining time-frequency resource as the target SBFD time-frequency resource.

In an example, the initial PDCCH frequency-domain resource and the initial SBFD time-frequency resource are in uplink slots or uplink symbols, and the initial SBFD time-frequency resource includes a downlink sub-band; or, the initial PDCCH frequency-domain resource and the initial SBFD time-frequency resource are in Flexible slots or Flexible symbols, the initial SBFD time-frequency resource includes a downlink sub-band, and the Flexible slots or the Flexible symbols are used for an uplink sub-band; or, the initial PDCCH frequency-domain resource and the initial SBFD time-frequency resource are in Flexible slots or Flexible symbols, the initial SBFD time-frequency resource includes a downlink sub-band, the Flexible slots or the Flexible symbols are used for a Flexible sub-band, and the Flexible sub-band is used for uplink.

In an example, determining a target PDCCH frequency-domain resource and a target SBFD time-frequency resource based on the initial PDCCH frequency-domain resource and the initial SBFD time-frequency resource may include: receiving a PDCCH resource reconfiguration message, where the PDCCH resource reconfiguration message may include resource information corresponding to the overlapping resource of the initial PDCCH frequency-domain resource and the initial SBFD time-frequency resource, and determining the target PDCCH frequency-domain resource based on the overlapping resource corresponding to the resource information; excluding the target PDCCH frequency-domain resource from the initial SBFD time-frequency resource, and determining a remaining time-frequency resource after excluding the target PDCCH frequency-domain resource as the target SBFD time-frequency resource.

In an example, determining a target PDCCH frequency-domain resource and a target SBFD time-frequency resource based on the initial PDCCH frequency-domain resource and the initial SBFD time-frequency resource may include: determining the initial PDCCH frequency-domain resource as the target PDCCH frequency-domain resource, and excluding the overlapping resource from the initial SBFD time-frequency resource to obtain the target SBFD time-frequency resource (that is, the SBFD time-frequency resource from which the overlapping resource has been excluded).

In an example, the initial PDCCH frequency-domain resource and the initial SBFD time-frequency resource are in downlink slots or downlink symbols, and the initial SBFD time-frequency resource includes at least one of an uplink sub-band or a guard sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, the Flexible slots or the Flexible symbols are used for a Flexible sub-band, and the Flexible sub-band is used for downlink.

In an example, when a target frame includes K downlink slots configured with the initial PDCCH frequency-domain resource in all slots of the target frame, and the initial PDCCH frequency-domain resource in M downlink slots overlaps with the initial SBFD time-frequency resource, M may be smaller than K; based on this, receiving downlink data corresponding to the PDCCH based on the target PDCCH frequency-domain resource may include: receiving the downlink data corresponding to the PDCCH based on the target PDCCH frequency-domain resource in the K downlink slots; or, receiving the downlink data corresponding to the PDCCH based on the target PDCCH frequency-domain resource in the M downlink slots, and receiving the downlink data corresponding to the PDCCH on the initial PDCCH frequency-domain resource in remaining downlink slots rather than the M downlink slots.

In an example, the UE may correspond to N dedicated PDCCH frequency-domain resources and P dedicated PDCCH frequency-domain resources, the N dedicated PDCCH frequency-domain resources may be initially configured PDCCH frequency-domain resources, and the P dedicated PDCCH frequency-domain resources may be re-configured PDCCH frequency-domain resources; or, the UE may correspond to N dedicated PDCCH frequency-domain resources, the N dedicated PDCCH frequency-domain resources may include initially configured PDCCH frequency-domain resources and re-configured PDCCH frequency-domain resources.

As can be seen from the above technical solutions, in a case that the SBFD time-frequency resource overlaps with the PDCCH frequency-domain resource, the base station can fully use the PDCCH frequency-domain resource to schedule UE transmissions on the SBFD time-frequency resource, the UE can be informed of the PDCCH frequency-domain resource, so that blind detect complexity of PDCCH can be reduced, and the SBFD time-frequency resource configuration and the PDCCH frequency-domain resource configuration can be effectively implemented. From a perspective of an overall system, cell coverage can be increased, transmission latency can be reduced, and capacity of uplink transmission can be increased. Data transmission in the TDD system can be supported, thereby improving data utilization, improving network coverage and network capacity, increasing uplink transmission resource and cell coverage, reducing uplink transmission latency and increasing uplink transmission capacity.

With reference to the following examples, the above technical solution of the present disclosure will be described.

The frame structure of the TDD can be completed through semi-statically configuring and dynamically indicating. A plurality of SFCs (Slot Format Combination) are defined through SFIs (Slot Format Indicator) in high-level signaling. For example, a base station can select slot formats satisfying service requirements, and add these slot formats to the SFC. Some slot formats can be referred to from Table 1, where D represents a DL symbol, U represents a UL symbol, F represents a flexible symbol. For each SFC, the SFC is identified by a fixed ID, and includes one or more slot format types.

**Table 1**

| Index of slot formats | Symbols in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56-254 | Reserved | | | | | | | | | | | | | |
| 255 | A UE determines a slot format according to tdd-UL-DL-ConfigurationCommon (uplink and downlink common configuration), tdd-UL-DL-ConfigurationDedicated (uplink and downlink dedicated configuration), and DCI (Downlink Control Information) format. | | | | | | | | | | | | | |

After completing SFI configuration, the base station sends a plurality of slot format combinations to the UE in RRC (Radio Resource Control) signaling. After configuring a plurality of slot format combinations through RRC signaling, the base station can inform the UE of the index of the currently used SFC in DCI format 2_0 through periodic PDCCH. After receiving information of the DCI format 2_0 correctly, the UE determines a slot format of each slot within a certain period according to the SFC index value. Thus, the base station and the UE can complete configuration of the frame structure through dynamic indication, and can carry out normal uplink and downlink data transmission.

For resource assignment/allocation, the assignment can be divided into time-domain resource assignment and frequency-domain resource assignment (taking the resource assignment of downlink channels as an example). Time-domain resource assignment: a time-domain resource assignment field in DCI indicates a time-domain position of the downlink channel, where the field has a total of 4 bits with values ranging from 0 to 15. Assuming a value is m, then m+1 indicates a row index of the time-domain resource assignment table, and information in this row indicates time-domain resources of PDSCH. There are two ways of indicating: one is to indicate three information: a slot offset between a PDSCH and a PDCCH scheduling the PDSCH, an initial symbol of the PDSCH in the slot, and the number of consecutive symbols in the PDSCH. Another one is to indicate a slot offset between a PDSCH and a PDCCH scheduling the PDSCH, and a SLIV (symbol length indicator value), where the user equipment computes an initial symbol of the PDSCH and a number of consecutive symbols in the PDSCH according to the SLIV.

Frequency-domain resource assignment: a frequency-domain resource assignment field in DCI indicates the frequency-domain resource assignment of downlink channel. The PDSCH frequency-domain resource assignment is divided into a Type 0 and a Type 1, where Type 0 supports discontinuous resource assignment to obtain a frequency diversity gain, and Type 1 supports continuous resource assignment, which can reduce a number of bits required for this field, and DCI format 1_0 only supports Type 1. Type 0: for discontinuous resource assignment type, an RBG (resource block group) is a VRB (virtual resource block) group consisted of P continuous VRBs, and the number is determined by a high-level parameter rbg-Size and a BWP bandwidth. In the resource assignment type of Type 0, Frequency-Domain Resource Assignment serves as a bitmap to indicate which RBGs are allocated to downlink channels, where each bit in the bitmap represents an RBG, and a highest bit corresponds to RBG0, and so on; a bit of 1 indicates that the RBG is allocated to the downlink channel, and a bit of 0 indicates that the RBG is not a downlink channel resource. Type 1: the frequency-domain resource indication field does not serve as a bitmap, but indicates a RIV(Resource Indicator Value), the user equipment computes an initial RB (resource block) and a number of occupied RBs of the downlink channel according to the value.

In the TDD system, the frame structure can be divided into UL slot, DL slot and F slot. The symbols in the F slot can be configured as UL symbols, DL symbols and F (Flexible) symbols, and F symbols can be used for UL, DL or GP. Uplink data can be transmitted in a UL slot, or in a UL symbol or a F symbol in a F slot, but the uplink data cannot be transmitted in a DL slot nor in a DL symbol in a F slot. Similarly, downlink data can be transmitted in a DL slot, or in a DL symbol or a F symbol in a F slot, but the downlink data cannot be transmitted in a UL slot nor in a UL symbol in a F slot.

SBFD time-frequency resources can be configured in time-frequency resources (such as UL slot, DL slot and F slot), and data in different directions from other time-frequency resources can be transmitted on the SBFD time-frequency resources. For example, SBFD time-frequency resources can be configured in DL slots, and uplink data can be transmitted through the SBFD time-frequency resources, so that the uplink data can be transmitted in DL slots. For another example, SBFD time-frequency resources can be configured in DL symbols of F slots, and uplink data can be transmitted through the SBFD time-frequency resources, so that the uplink data is transmitted in the DL symbols of the F slots. SBFD time-frequency resources can be configured in UL slots, and downlink data can be transmitted through the SBFD time-frequency resources, so that the downlink data can be transmitted in UL slots. For another example, SBFD time-frequency resources can be configured in UL symbols of F slots, and downlink data can be transmitted through the SBFD time-frequency resources, so that the downlink data is transmitted in the UL symbols of the F slots.

In an example, SBFD time-frequency resources may be time-frequency resources corresponding to SBFD slots or time-frequency resources corresponding to SBFD symbols, the SBFD symbols can be defined as symbols in which base station and UE can configure SBFD sub-bands. On the SBFD sub-bands of these SBFD symbols (referred to as SBFD time-frequency resources), base station and UE can perform full duplex communication, that is, on SBFD time-frequency resources, uplink transmission, downlink transmission, or simultaneous uplink and downlink transmission can be performed. SBFD time-frequency resources can be clearly indicated as uplink, downlink or Flexible. When SBFD time-frequency resources are indicated as Flexible, uplink or downlink can be flexibly scheduled in SBFD time-frequency resources. Configuration of SBFD slots or SBFD symbols may include: which slots of DL slots, UL slots and F slots are used for SBFD transmission, and implemented period and initial point, etc. For convenience of description, in subsequent embodiments, it is taken as an example that SBFD time-frequency resources are time-frequency resources corresponding to SBFD slots.

In an example, a PDCCH frequency-domain resource may be a CORESET resource, or may be other types of frequency-domain resources, which is not limited here, and CORESET resource is taken as an example for description in the following.

In TDD FD mode, a PDCCH data transmission method and UE blind detection method in a TDD full-duplex system are provided. When a PDCCH frequency-domain resource overlaps with a SBFD time-frequency resource, the PDCCH frequency-domain resource can be re-constructed, and the UE can detect the PDCCH frequency-domain resource and perform PDCCH blind detection. A procedure that the UE receives downlink data corresponding to the PDCCH on a target PDCCH frequency-domain resource may be referred to as a UE blind detection method, that is, a PDCCH data receiving method in the UE side can be referred to as the UE blind detection method.

In a first aspect, a PDCCH frequency-domain resource is configured first, and then a SBFD time-frequency resource is configured. For convenience of distinction, the configured PDCCH frequency-domain resource is referred to as an initial PDCCH frequency-domain resource, and the configured SBFD time-frequency resource is referred to as an initial SBFD time-frequency resource. When the initial PDCCH frequency-domain resource is configured and then the initial SBFD time-frequency resource is configured, a data transmission method and a UE blind detection method are provided, which are described in the following.

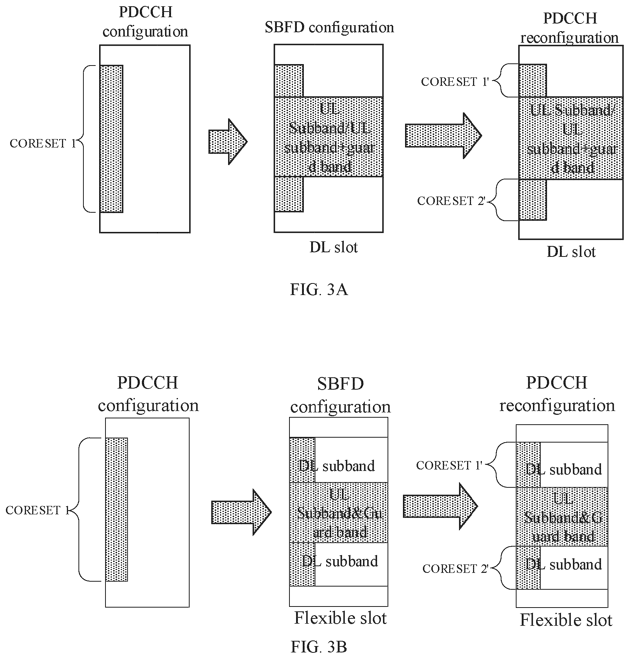

Case 1: as shown in FIG. 3A, a base station can configure an initial PDCCH frequency-domain resource for a UE, and the initial PDCCH frequency-domain resource is used for receiving downlink data corresponding to a PDCCH, for example, the initial PDCCH frequency-domain resource is CORESET1. The base station can configure an initial SBFD time-frequency resource for the UE, the initial SBFD time-frequency resource may include a UL sub-band (uplink sub-band frequency-domain resource, referred to as uplink sub-band hereinafter), a DL sub-band (downlink sub-band frequency-domain resource, referred to as downlink sub-band hereinafter), and a guard band (guard band frequency-domain resource, referred to as guard band hereinafter). Indication information of the UL sub-band, the DL sub-band and the guard band can be carried on a broadcast message, an RRC message (i.e., RRC dedicated message), a MAC-CE message or a DCI message, etc.

As shown in FIG. 3A, when both the initial PDCCH frequency-domain resource and the initial SBFD time-frequency resource are in downlink slots or downlink symbols (a downlink slot is taken as an example in FIG. 3A), and the initial SBFD time-frequency resource includes at least one of an uplink sub-band or a guard band, for example, the initial SBFD time-frequency resource includes an uplink sub-band, or the initial SBFD time-frequency resource includes an uplink sub-band and a guard band, then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource. For example, the initial SBFD time-frequency resource is determined as the target SBFD time-frequency resource, and the overlapping resource is excluded from the initial PDCCH frequency-domain resource to obtain a candidate PDCCH frequency-domain resource, and the target PDCCH frequency-domain resource is determined based on the candidate PDCCH frequency-domain resource.

As shown in FIG. 3A, the overlapping resource is excluded from CORESET1 (i.e., the initial PDCCH frequency-domain resource) to obtain the first candidate frequency-domain resource CORESET1' and the second candidate frequency-domain resource CORESET2', where the first candidate frequency-domain resource CORESET1' and the second candidate frequency-domain resource CORESET2' are determined as the candidate PDCCH frequency-domain resource. A first target frequency-domain resource can be determined based on the first candidate frequency-domain resource CORESET1', where the first target frequency-domain resource may include all resources of the first candidate frequency-domain resource CORESET1', or may include part of resources of the first candidate frequency-domain resource CORESET1', or may include other resources rather than the first candidate frequency-domain resource CORESET1', which is not limited here. A second target frequency-domain resource can be determined based on the second candidate frequency-domain resource CORESET2', where the second target frequency-domain resource may include all resources of the second candidate frequency-domain resource CORESET2', or may include part of resources of the second candidate frequency-domain resource CORESET2', or may include other resources rather than the second candidate frequency-domain resource CORESET2', which is not limited here. The target PDCCH frequency-domain resource can be determined based on the first target frequency-domain resource and the second target frequency-domain resource, for example, the target PDCCH frequency-domain resource may include the first target frequency-domain resource and the second target frequency-domain resource.

As can be seen from the above description, the CORESET frequency-domain resource can be re-configured based on the target SBFD time-frequency resource (such as SBFD symbols or SBFD slots), that is, CORESET1' and CORESET2' are re-configured, and the re-configured CORESET frequency-domain resource (CORESET1' and CORESET2') does not overlap with the target SBFD time-frequency resource (such as UL sub-band or UL sub-band+guard band).

In an example, when the base station configures UL sub-band of SBFD on downlink slots or downlink symbols, or configures UL sub-band and DL sub-band on downlink slots or downlink symbols, and derives guard band; or configures UL sub-band and guard band on downlink slots or downlink symbols, and derives DL sub-band, and when the initial SBFD time-frequency resource overlaps with the initial PDCCH frequency-domain resource (CORESET1), the base station can re-configure the CORESET frequency-domain resource (such as CORESET1' and CORESET2') based on SBFD symbols or SBFD slots, and the re-configured CORESET frequency-domain resource does not overlap with UL sub-band or UL sub-band+guard band time-frequency resource of SBFD.

In an example, the base station and the UE can agree on a determining manner of the target PDCCH frequency-domain resource, that is, the base station adopts the above manner to determine the target PDCCH frequency-domain resource, and the UE also adopts the above manner to determine the target PDCCH frequency-domain resource, and the determining process of the target PDCCH frequency-domain resource will not be described here.

In another example, the base station can adopt the above manner to determine the target PDCCH frequency-domain resource, and can send a PDCCH resource re-configuration message to the UE, where the PDCCH resource re-configuration message may include resource information corresponding to the target PDCCH frequency-domain resource. For example, the target PDCCH frequency-domain resource may include a first target frequency-domain resource and a second target frequency-domain resource, and the resource information corresponding to the target PDCCH frequency-domain resource may include resource information corresponding to the first target frequency-domain resource and resource information corresponding to the second target frequency-domain resource.

The UE can parse the resource information corresponding to the first target frequency-domain resource and the resource information corresponding to the second target frequency-domain resource from the PDCCH resource re-configuration message. The first target frequency-domain resource is determined based on the resource information corresponding to the first target frequency-domain resource, and the second target frequency-domain resource is determined based on the resource information corresponding to the second target frequency-domain resource. After obtaining the first target frequency-domain resource and the second target frequency-domain resource, the target PDCCH frequency-domain resource can be determined based on the first target frequency-domain resource and the second target frequency-domain resource.

As described above, the target PDCCH frequency-domain resource may include the first target frequency-domain resource and the second target frequency-domain resource, and the first target frequency-domain resource and the second target frequency-domain resource may be non-consecutive frequency-domain resources, the first target frequency-domain resource may correspond to one CORESET, for example, correspond to CORESET1', and the second target frequency-domain resource may correspond to another CORESET, for example, may correspond to CORESET2'.

Case 2: as shown in FIG. 3B, FIG. 3B is a schematic diagram showing an initial SBFD time-frequency resource configured on Flexible slots (with DL sub-band), a base station can configure an initial PDCCH frequency-domain resource for a UE, and the initial PDCCH frequency-domain resource is used for receiving downlink data corresponding to a PDCCH, for example, the initial PDCCH frequency-domain resource may be CORESET1. The base station can configure the initial SBFD time-frequency resource for the UE, and the initial SBFD time-frequency resource may include a UL sub-band, a DL sub-band and a guard band.

As shown in FIG. 3B, when both the initial PDCCH frequency-domain resource and the initial SBFD time-frequency resource are in Flexible slots or Flexible symbols (a Flexible slot is taken as an example in FIG. 3B), the Flexible slots or Flexible symbols are used for the downlink sub-band (i.e., DL sub-band), and the initial SBFD time-frequency resource includes at least one of an uplink sub-band or a guard band, for example, the initial SBFD time-frequency resource includes an uplink sub-band, or the initial SBFD time-frequency resource includes an uplink sub-band and a guard band, then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource. For example, the initial SBFD time-frequency resource is determined as the target SBFD time-frequency resource, and the overlapping resource is excluded from the initial PDCCH frequency-domain resource to obtain a candidate PDCCH frequency-domain resource, and the target PDCCH frequency-domain resource is determined based on the candidate PDCCH frequency-domain resource.

As shown in FIG. 3B, the overlapping resource is excluded from CORESET1 (i.e., the initial PDCCH frequency-domain resource) to obtain the first candidate frequency-domain resource CORESET1' and the second candidate frequency-domain resource CORESET2', where the first candidate frequency-domain resource CORESET1' and the second candidate frequency-domain resource CORESET2' are determined as the candidate PDCCH frequency-domain resource. A first target frequency-domain resource is determined based on the first candidate frequency-domain resource CORESET1', where the first target frequency-domain resource may include all resources of the first candidate frequency-domain resource CORESET1', or may include part of resources of the first candidate frequency-domain resource CORESET1'. A second target frequency-domain resource is determined based on the second candidate frequency-domain resource CORESET2', where the second target frequency-domain resource includes all resources of the second candidate frequency-domain resource CORESET2', or may include part of resources of the second candidate frequency-domain resource CORESET2'. The target PDCCH frequency-domain resource can be determined based on the first target frequency-domain resource and the second target frequency-domain resource, for example, the target PDCCH frequency-domain resource may include the first target frequency-domain resource and the second target frequency-domain resource.

As can be seen from the above description, the CORESET frequency-domain resource can be re-configured based on the target SBFD time-frequency resource (such as SBFD symbols or SBFD slots), that is, CORESET1' and CORESET2' are re-configured, and the re-configured CORESET frequency-domain resource (CORESET1' and CORESET2') does not overlap with the target SBFD time-frequency resource (such as UL sub-band or UL sub-band+guard band).

In an example, when the base station configures UL sub-band and DL sub-band of SBFD on Flexible slots, and derives the guard band; or configures UL sub-band and guard band on Flexible slots, and derives the DL sub-band, and when the initial SBFD time-frequency resource overlaps with the initial PDCCH frequency-domain resource (CORESET1), the base station can re-configure the CORESET frequency-domain resource (such as CORESET1' and CORESET2') based on SBFD symbols or SBFD slots, and the re-configured CORESET frequency-domain resource does not overlap with UL sub-band or UL sub-band+guard band time-frequency resource of SBFD, and an overlapping part of the re-configured CORESET frequency-domain resource (such as CORESET1' and CORESET2') and the DL sub-band can be used for receiving data corresponding to the PDCCH.

In an example, the base station and the UE can agree on a determining manner of the target PDCCH frequency-domain resource, that is, the base station adopts the above manner to determine the target PDCCH frequency-domain resource, and the UE also adopts the above manner to determine the target PDCCH frequency-domain resource, and the determining process of the target PDCCH frequency-domain resource will not be described here.

In another example, the base station can adopt the above manner to determine the target PDCCH frequency-domain resource, and can send a PDCCH resource re-configuration message to the UE, where the PDCCH resource re-configuration message may include resource information corresponding to the first target frequency-domain resource and resource information corresponding to the second target frequency-domain resource.

The UE can parse the resource information corresponding to the first target frequency-domain resource and the resource information corresponding to the second target frequency-domain resource from the PDCCH resource re-configuration message. The first target frequency-domain resource is determined based on the resource information corresponding to the first target frequency-domain resource, and the second target frequency-domain resource is determined based on the resource information corresponding to the second target frequency-domain resource. After obtaining the first target frequency-domain resource and the second target frequency-domain resource, the target PDCCH frequency-domain resource can be determined based on the first target frequency-domain resource and the second target frequency-domain resource.

As described above, the target PDCCH frequency-domain resource may include the first target frequency-domain resource and the second target frequency-domain resource, and the first target frequency-domain resource and the second target frequency-domain resource may be non-consecutive frequency-domain resources, the first target frequency-domain resource may correspond to one CORESET, for example, correspond to CORESET1', and the second target frequency-domain resource may correspond to another CORESET, for example, may correspond to CORESET2'.

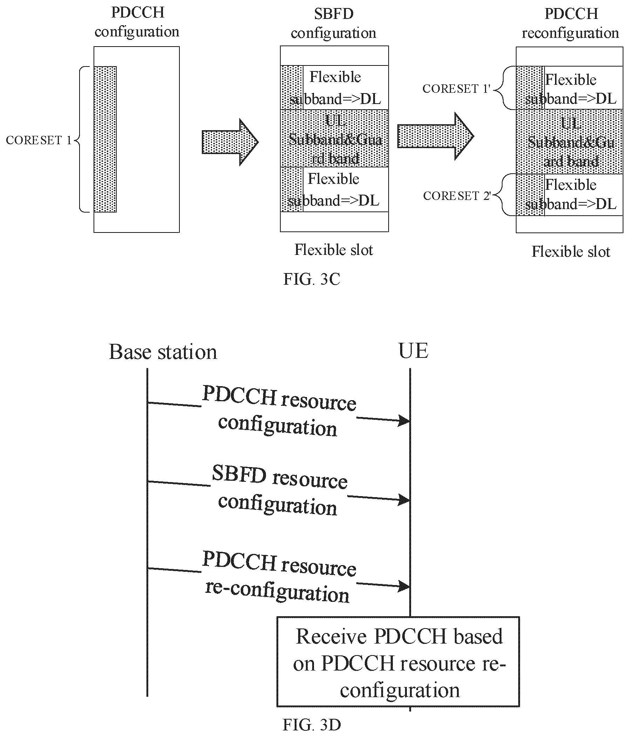

Case 3: as shown in FIG. 3C, FIG. 3C is a schematic diagram showing an initial SBFD time-frequency resource configured on Flexible slots (with Flexible sub-band), a base station can configure an initial PDCCH frequency-domain resource for a UE, and the initial PDCCH frequency-domain resource is used for receiving downlink data corresponding to a PDCCH, for example, the initial PDCCH frequency-domain resource may be CORESET1. The base station can configure the initial SBFD time-frequency resource for the UE, and the initial SBFD time-frequency resource may include a UL sub-band, a DL sub-band and a guard band.

As shown in FIG. 3C, when both the initial PDCCH frequency-domain resource and the initial SBFD time-frequency resource are in Flexible slots or Flexible symbols (a Flexible slot is taken as an example in FIG. 3B), the Flexible slots or Flexible symbols are used for the Flexible sub-band (i.e., Flexible sub-band), and the Flexible sub-band is used for downlink, the initial SBFD time-frequency resource includes at least one of an uplink sub-band or a guard band, for example, the initial SBFD time-frequency resource includes an uplink sub-band, or the initial SBFD time-frequency resource includes an uplink sub-band and a guard band, then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource. For example, the initial SBFD time-frequency resource is determined as the target SBFD time-frequency resource, and the overlapping resource is excluded from the initial PDCCH frequency-domain resource to obtain a candidate PDCCH frequency-domain resource, and the target PDCCH frequency-domain resource is determined based on the candidate PDCCH frequency-domain resource.

As shown in FIG. 3C, the overlapping resource is excluded from CORESET1 (i.e., the initial PDCCH frequency-domain resource) to obtain the first candidate frequency-domain resource CORESET1' and the second candidate frequency-domain resource CORESET2', where the first candidate frequency-domain resource CORESET1' and the second candidate frequency-domain resource CORESET2' are determined as the candidate PDCCH frequency-domain resource. A first target frequency-domain resource is determined based on the first candidate frequency-domain resource CORESET1', where the first target frequency-domain resource may include all resources of the first candidate frequency-domain resource CORESET1', or may include part of resources of the first candidate frequency-domain resource CORESET1'. A second target frequency-domain resource is determined based on the second candidate frequency-domain resource CORESET2', where the second target frequency-domain resource includes all resources of the second candidate frequency-domain resource CORESET2', or may include part of resources of the second candidate frequency-domain resource CORESET2'. The target PDCCH frequency-domain resource can be determined based on the first target frequency-domain resource and the second target frequency-domain resource, for example, the target PDCCH frequency-domain resource may include the first target frequency-domain resource and the second target frequency-domain resource.

As can be seen from the above description, the CORESET frequency-domain resource can be re-configured based on the target SBFD time-frequency resource (such as SBFD symbols or SBFD slots), that is, CORESET1' and CORESET2' are re-configured, and the re-configured CORESET frequency-domain resource (CORESET1' and CORESET2') does not overlap with the target SBFD time-frequency resource (such as UL sub-band or UL sub-band+guard band).

In an example, when the base station configures UL sub-band and Flexible sub-band of SBFD on Flexible slots, and derives the guard band; or configures UL sub-band and guard band on Flexible slots, and derives the Flexible sub-band, and when the initial SBFD time-frequency resource overlaps with the initial PDCCH frequency-domain resource (CORESET1), the base station can re-configure the CORESET frequency-domain resource (such as CORESET1' and CORESET2') based on SBFD symbols or SBFD slots, and the re-configured CORESET frequency-domain resource does not overlap with UL sub-band or UL sub-band+guard band time-frequency resource of SBFD, and when the Flexible sub-band is indicated as a DL resource, an overlapping part of the re-configured CORESET frequency-domain resource and the Flexible sub-band can be used for receiving data corresponding to the PDCCH.

In an example, the base station and the UE can agree on a determining manner of the target PDCCH frequency-domain resource, that is, the base station adopts the above manner to determine the target PDCCH frequency-domain resource, and the UE also adopts the above manner to determine the target PDCCH frequency-domain resource, and the determining process of the target PDCCH frequency-domain resource will not be described here.

In another example, the base station can adopt the above manner to determine the target PDCCH frequency-domain resource, and can send a PDCCH resource re-configuration message to the UE, where the PDCCH resource re-configuration message may include resource information corresponding to the first target frequency-domain resource and resource information corresponding to the second target frequency-domain resource.

The UE can parse the resource information corresponding to the first target frequency-domain resource and the resource information corresponding to the second target frequency-domain resource from the PDCCH resource re-configuration message. The first target frequency-domain resource is determined based on the resource information corresponding to the first target frequency-domain resource, and the second target frequency-domain resource is determined based on the resource information corresponding to the second target frequency-domain resource. After obtaining the first target frequency-domain resource and the second target frequency-domain resource, the target PDCCH frequency-domain resource can be determined based on the first target frequency-domain resource and the second target frequency-domain resource.

As described above, the target PDCCH frequency-domain resource may include the first target frequency-domain resource and the second target frequency-domain resource, and the first target frequency-domain resource and the second target frequency-domain resource may be non-consecutive frequency-domain resources, the first target frequency-domain resource may correspond to one CORESET, for example, correspond to CORESET1', and the second target frequency-domain resource may correspond to another CORESET, for example, may correspond to CORESET2'.

In an example, for cases 1-3, when the PDCCH resource re-configuration message is used to transmit resource information corresponding to the target PDCCH frequency-domain resource, a schematic diagram showing signaling interactions between the base station and the UE can be referred to from FIG. 3D. The base station sends a PDCCH resource configuration message to the UE, where the PDCCH resource configuration message may include resource information corresponding to the initial PDCCH frequency-domain resource. The base station sends a SBFD resource configuration message to the UE, where the SBFD resource configuration message may include resource information corresponding to the target SBFD time-frequency resource. The base station sends a PDCCH resource re-configuration message to the UE, where the PDCCH resource re-configuration message may include resource information corresponding to the target PDCCH frequency-domain resource. The UE receives the PDCCH based on the PDCCH resource re-configuration message, for example, the UE can parse the resource information corresponding to the target PDCCH frequency-domain resource from the PDCCH resource re-configuration message, and determine the target PDCCH frequency-domain resource based on the resource information, and receive data corresponding to the PDCCH through the target PDCCH frequency-domain resource.

When transmitting the resource information corresponding to the target PDCCH frequency-domain resource through the PDCCH resource re-configuration message, IE (information element) included in high-level signaling includes:
ControlResourceSetId-SBFD:: = INTEGER (0..maxNrofControlResourceSetsforSBFD-1)
where maxNrofControlResourceSetsforSBFD is an integer greater than 0, and preferentially takes a value of 3
or, ControlResourceSetId-SBFD:: = INTEGER (maxNrofControlResourceSets-r16..maxNrofControlResourceSetsforSBFD-1)
where maxNrofControlResourceSetsforSBFD is an integer greater than 16, and preferentially takes a value of 19

In the above high-level signaling, ControlResourceSetId-SBFD represents a control resource set identifier based on SBFD, i.e., an identifier of CORESET, which may be 1, 2, 3, etc., and an identifier 1 of CORESET represents the above CORESET 1, an identifier 2 of CORESET represents the above CORESET 1', an identifier 3 of CORESET represents the above CORESET 2'. Alternatively, the identifier of CORESET may be 17, 18, 19, etc., and an identifier 17 of CORESET represents the above CORESET 1, an identifier 18 of CORESET represents the above CORESET 1', an identifier 19 of CORESET represents the above CORESET 2'. The maxNrofControlResourceSetsforSBFD represents a max value of the control resource set identifier.

In an example, for cases 1-3, the UE may correspond to N dedicated PDCCH frequency-domain resources and P dedicated PDCCH frequency-domain resources, the N dedicated PDCCH frequency-domain resources may be initially configured PDCCH frequency-domain resources, and the P dedicated PDCCH frequency-domain resources may be re-configured PDCCH frequency-domain resources. Alternatively, the UE may correspond to N dedicated PDCCH frequency-domain resources, the N dedicated PDCCH frequency-domain resources may include initially configured PDCCH frequency-domain resources and re-configured PDCCH frequency-domain resources. N can be configured according to experience, such as 3, etc., and P can be configured according to experience, such as 3, etc., which are not limited here.

For example, the PDCCH frequency-domain resource may be CORESET, and for allocation/assignment of the CORESET, at most 1 common CORESET and at most 3 dedicated CORESETs can be configured for one BWP. Based on this, for CORESET frequency-domain data transmission of the UE, one way is that the three dedicated CORESETs (such as N dedicated PDCCH frequency-domain resources) are configured for the UE, that is, the three dedicated CORESETs are determined as the initially configured PDCCH frequency-domain resource and the re-configured PDCCH frequency-domain resource, that is, the initial PDCCH frequency-domain resource and the target PDCCH frequency-domain resource share the three dedicated CORESETs. Another way is that, in addition to configuring the three dedicated CORESETs (such as N dedicated PDCCH frequency-domain resources) for the UE, three additional dedicated CORESETs (such as P dedicated PDCCH frequency-domain resources) can be configured for the UE. In such way, the three dedicated CORESETs are considered as the initially configured PDCCH frequency-domain resource, that is, the initial PDCCH frequency-domain resource occupies three dedicated CORESETs, and the three additionally configured dedicated CORESETs are considered as the re-configured PDCCH frequency-domain resource, that is, the target PDCCH frequency-domain resource may occupy the three additionally configured dedicated CORESETs. By additionally configuring three dedicated CORESETs, congestion of PDCCH scheduling of UE can be avoided.

In an example, for cases 1-3, after determining the target PDCCH frequency-domain resource, the base station can send downlink data corresponding to the PDCCH based on the target PDCCH frequency-domain resource; and after determining the target PDCCH frequency-domain resource, the UE can receive the downlink data corresponding to the PDCCH based on the target PDCCH frequency-domain resource, that is, the UE can realize blind detection based on the target PDCCH frequency-domain resource.

In an example, when a target frame includes K downlink slots configured with the initial PDCCH frequency-domain resource in all slots of the target frame, and the initial PDCCH frequency-domain resource in M downlink slots overlaps with the initial SBFD time-frequency resource, M may be smaller than K; then the base station can send the downlink data corresponding to the PDCCH based on the target PDCCH frequency-domain resource of the K downlink slots. The UE can receive the downlink data corresponding to the PDCCH based on the target PDCCH frequency-domain resource of the K downlink slots. Alternatively,
the base station can send the downlink data corresponding to the PDCCH based on the target PDCCH frequency-domain resource in the M downlink slots, and send the downlink data corresponding to the PDCCH on the initial PDCCH frequency-domain resource in remaining downlink slots rather than the M downlink slots. The UE can receive the downlink data corresponding to the PDCCH based on the target PDCCH frequency-domain resource in the M downlink slots, and receive the downlink data corresponding to the PDCCH on the initial PDCCH frequency-domain resource in remaining downlink slots rather than the M downlink slots.

In a second aspect, an initial PDCCH frequency-domain resource is configured first, and then the initial SBFD time-frequency resource is configured. An overlapping resource is excluded from the initial PDCCH frequency-domain resource (that is, a resource in UL sub-band and guard band of SBFD overlapping with the CORESET is excluded), and on the basis of exclusion of the overlapping resource, non-consecutive integration is performed, and data transmission and UE blind detection are realized based on resources performed with non-consecutive integration.

When there is an overlapping resource between an initial PDCCH frequency-domain resource and an initial SBFD time-frequency resource of SBFD, a target PDCCH frequency-domain resource and a target SBFD time-frequency resource are determined based on the initial PDCCH frequency-domain resource and the initial SBFD time-frequency resource, where the target PDCCH frequency-domain resource does not overlap with the target SBFD time-frequency resource. For example, the initial SBFD time-frequency resource is determined as the target SBFD time-frequency resource, and the overlapping resource is excluded from the initial PDCCH frequency-domain resource to obtain a candidate PDCCH frequency-domain resource, and when the candidate PDCCH frequency-domain resource includes a first candidate frequency-domain resource and a second candidate frequency-domain resource, consecutive frequency-domain resources are generated based on the first candidate frequency-domain resource and the second candidate frequency-domain resource (the first candidate frequency-domain resource and the second candidate frequency-domain resource are performed with non-consecutive integration to obtain the consecutive frequency-domain resources), and the target PDCCH frequency-domain resource is determined based on the consecutive frequency-domain resources, and when the target PDCCH frequency-domain resource includes the consecutive frequency-domain resources, the consecutive frequency-domain resources correspond to one CORESET.

As shown in FIGS. 3A-3C, the overlapping resource is excluded from CORESET1 (i.e., the initial PDCCH frequency-domain resource) to obtain the first candidate frequency-domain resource CORESET1' and the second candidate frequency-domain resource CORESET2', where the first candidate frequency-domain resource CORESET1' and the second candidate frequency-domain resource CORESET2' are the consecutive frequency-domain resources obtained by non-consecutive integration, and the consecutive frequency-domain resources are determined as the target PDCCH frequency-domain resource. The consecutive frequency-domain resources include all resources of the first candidate frequency-domain resource CORESET1', or may include part of resources of the first candidate frequency-domain resource CORESET1'; the consecutive frequency-domain resources include all resources of the second candidate frequency-domain resource CORESET2', or may include part of resources of the second candidate frequency-domain resource CORESET2'.

In an example, when the first candidate frequency-domain resource CORESET1' and the second candidate frequency-domain resource CORESET2' occupy a single OFDM (Orthogonal Frequency Division Multiplexing) symbol, the first candidate frequency-domain resource CORESET1' and the second candidate frequency-domain resource CORESET2' on the single OFDM symbol can be integrated to obtain the consecutive frequency-domain resource. Alternatively, when the first candidate frequency-domain resource CORESET1' and the second candidate frequency-domain resource CORESET2' occupy a plurality of OFDM symbols, the first candidate frequency-domain resource CORESET 1' and the second candidate frequency-domain resource CORESET2' on the plurality of OFDM symbols can be integrated to obtain the consecutive frequency-domain resource.

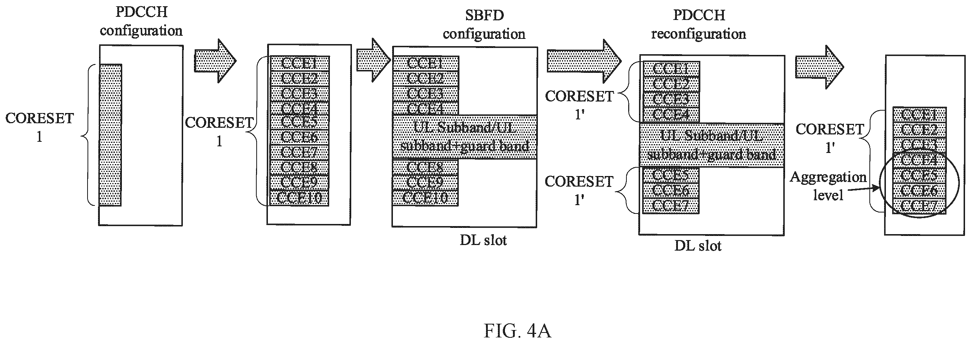

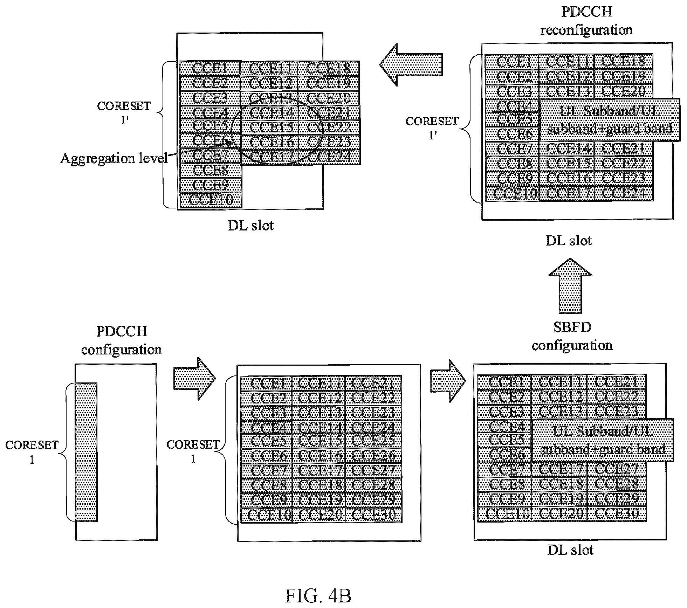

As shown in FIG. 4A, FIG. 4A is a schematic diagram showing a single occupied OFDM symbol. As shown in FIG. 4B, FIG. 4B is a schematic diagram showing a plurality of occupied OFDM symbols. When a base station configures a UL sub-band of SBFD in DL slots, or configures a UL sub-band and a (derived) guard band of SBFD in DL slots, when the initial SBFD time-frequency resource overlaps with the initial PDCCH frequency-domain resource (CORESET1), the base station can re-configure a CORESET frequency-domain resource (such as CORESET1') for SBFD symbols or SBFD slots, where CORESET1' is consecutive frequency-domain resources obtained after integrating the first candidate frequency-domain resource and the second candidate frequency-domain resource, that is, the CORESET1' corresponds to one CORESET 1.

The CORESET frequency-domain resource (such as CORESET1') can be non-consecutively allocated, and a number of RBs included in each CCE of the CORESET frequency-domain resource can be configured, the base station integrates the non-consecutive resources and then aggregates to obtain the target PDCCH frequency-domain resource, the UE integrates the non-consecutive resources and then aggregates to obtain the target PDCCH frequency-domain resource, and then performs blind detection.

As shown in FIG. 4A, when the first candidate frequency-domain resource (CCE1-CCE4) and the second candidate frequency-domain resource (CCE8-CCE10) occupy a single OFDM symbol, the first candidate frequency-domain resource and the second candidate frequency-domain resource on the single OFDM symbol are integrated to obtain consecutive frequency-domain resources (CCE1-CCE7), and the consecutive frequency-domain resources are denoted as CORESET1', and the consecutive frequency-domain resources (CCE1-CCE7) correspond to an aggregation level. Alternatively, as shown in FIG. 4B, when the first candidate frequency-domain resource and the second candidate frequency-domain resource occupy a plurality of OFDM symbols, the first candidate frequency-domain resource and the second candidate frequency-domain resource on the plurality of OFDM symbols can be integrated to obtain the consecutive frequency-domain resources (CCE1-CCE24), and the consecutive frequency-domain resources (CCE1-CCE24) are denoted as CORESET1'.

As shown in FIG. 4A and FIG. 4B, after excluding an overlapping part of UL sub-band or UL sub-band+(derived) guard band from the SBFD time-frequency domain resource, the base station performs data transmission of PDCCH, and the UE performs non-consecutive resource integration, and then performs aggregation and blind detection on the PDCCH frequency-domain resource.

In an example, when the target PDCCH frequency-domain resource needs to be interleaved, and the target PDCCH frequency-domain resource includes the consecutive frequency-domain resources CORESET1', the non-consecutive frequency-domain resources can be spliced and interleaved, that is, interleaving is performed after resource integration.

In an example, the base station and the UE can agree on a determining manner of the target PDCCH frequency-domain resource, that is, the base station adopts the above manner to determine the target PDCCH frequency-domain resource, and the UE also adopts the above manner to determine the target PDCCH frequency-domain resource, and the determining process of the target PDCCH frequency-domain resource will not be described here. Apparently, when the PDCCH frequency-domain resource is not re-configured, the base station and the UE can agree on the above resource integration method for operations, and the integration granularity may reach a RB level.

In another example, the base station can adopt the above manner to determine the target PDCCH frequency-domain resource, and can send a PDCCH resource re-configuration message to the UE, where the PDCCH resource re-configuration message may include resource information corresponding to the consecutive frequency-domain resources CORESET1'. The UE can parse the resource information corresponding to the consecutive frequency-domain resources CORESET1' from the PDCCH resource re-configuration message, and determine the target PDCCH frequency-domain resource based on the resource information, that is, the target PDCCH frequency-domain resource may include the consecutive frequency-domain resources CORESET1'.

As described above, the target PDCCH frequency-domain resource may include the consecutive frequency-domain resources CORESET 1', and the consecutive frequency-domain resources CORESET1' correspond to one CORESET. After determining the target PDCCH frequency-domain resource, the base station sends downlink data corresponding to the PDCCH based on the target PDCCH frequency-domain resource; and after determining the target PDCCH frequency-domain resource, the UE receives the downlink data corresponding to the PDCCH based on the target PDCCH frequency-domain resource, that is, the UE realizes blind detection based on the target PDCCH frequency-domain resource.

In an example, when the resource information corresponding to the target PDCCH frequency-domain resource is transmitted through the PDCCH resource re-configuration message, signaling interactions between the base station and the UE include: the base station sends a PDCCH resource configuration message to the UE, the base station sends a SBFD resource configuration message to the UE, the base station sends a PDCCH resource re-configuration message to the UE, where the PDCCH resource re-configuration message may include the resource information corresponding to the consecutive frequency-domain resources CORESET1'. The UE parses the resource information corresponding to the consecutive frequency-domain resources from the PDCCH resource re-configuration message, and determines the target PDCCH frequency-domain resource based on the resource information, and receives downlink data corresponding to the PDCCH through the target PDCCH frequency-domain resource.

When the resource information corresponding to the consecutive frequency-domain resources is transmitted through the PDCCH resource re-configuration message, following high-level signaling is used to configure non-consecutive resources on a plurality of OFDM symbols, resources occupied by each OFDM may be different, IE included in the high-level signaling (such as the PDCCH resource re-configuration message) is presented below.
ControlResourceSet-SBFD ::= SEQUENCE { controlResourceSetId ControlResourceSetId, maxvalue ( 45,90,135,273 ) , frequencyDomainResources-1 BIT STRING (SIZE (maxvalue)), duration-1 INTEGER (1..maxCoReSetDuration) frequencyDomainResources-2 BIT STRING (SIZE (maxvalue)), duration-2 INTEGER (1..maxCoReSetDuration- duration-1)}

In the above high-level signaling, ControlResourceSet-SBFD represents a control resource set based on SBFD, SEQUENCE represents a sequence, controlResourceSetId represents a control resource set identifier, maxvalue represents a max value, frequencyDomainResources presents frequency-domain resources.

In an example, the UE may correspond to N dedicated PDCCH frequency-domain resources and P dedicated PDCCH frequency-domain resources, the N dedicated PDCCH frequency-domain resources may be initially configured PDCCH frequency-domain resources, and the P dedicated PDCCH frequency-domain resources may be re-configured PDCCH frequency-domain resources. Alternatively, the UE may correspond to N dedicated PDCCH frequency-domain resources, the N dedicated PDCCH frequency-domain resources may include initially configured PDCCH frequency-domain resources and re-configured PDCCH frequency-domain resources. N and P are both configured according to experience.

In a third aspect, an initial PDCCH frequency-domain resource is configured first, and then the initial SBFD time-frequency resource is configured. An overlapping resource is excluded from the initial PDCCH frequency-domain resource (that is, a resource in UL sub-band and guard band of SBFD overlapping with the CORESET is excluded), and on the basis of exclusion of the overlapping resource, resource integration is not performed (that is, non-consecutive integration is not performed), and data transmission and UE blind detection are realized based on resources not integrated, which will be described in the following.

When there is an overlapping resource between an initial PDCCH frequency-domain resource and an initial SBFD time-frequency resource of SBFD, a target PDCCH frequency-domain resource and a target SBFD time-frequency resource are determined based on the initial PDCCH frequency-domain resource and the initial SBFD time-frequency resource, where the target PDCCH frequency-domain resource does not overlap with the target SBFD time-frequency resource. For example, the initial SBFD time-frequency resource is determined as the target SBFD time-frequency resource, and the overlapping resource is excluded from the initial PDCCH frequency-domain resource to obtain a candidate PDCCH frequency-domain resource, and the candidate PDCCH frequency-domain resource includes a first candidate frequency-domain resource and a second candidate frequency-domain resource, non-consecutive frequency-domain resources are generated based on the first candidate frequency-domain resource and the second candidate frequency-domain resource, and the target PDCCH frequency-domain resource is determined based on the non-consecutive frequency-domain resources, and when the target PDCCH frequency-domain resource includes the non-consecutive frequency-domain resources, the non-consecutive frequency-domain resources correspond to one CORESET.

As shown in FIGS. 3A-3C, the overlapping resource is excluded from CORESET1 (i.e., the initial PDCCH frequency-domain resource) to obtain the first candidate frequency-domain resource CORESET1' and the second candidate frequency-domain resource CORESET2', the non-consecutive resources are obtained based on the first candidate frequency-domain resource CORESET 1' and the second candidate frequency-domain resource CORESET2' (that is, CORESET1' and CORESET2' do not need to be integrated), and the non-consecutive frequency-domain resources are determined as the target PDCCH frequency-domain resource. The non-consecutive frequency-domain resources may include all resources of the first candidate frequency-domain resource CORESET1', or may include part of resources of the first candidate frequency-domain resource CORESET1'; the non-consecutive frequency-domain resources may include all resources of the second candidate frequency-domain resource CORESET2', or may include part of resources of the second candidate frequency-domain resource CORESET2'.

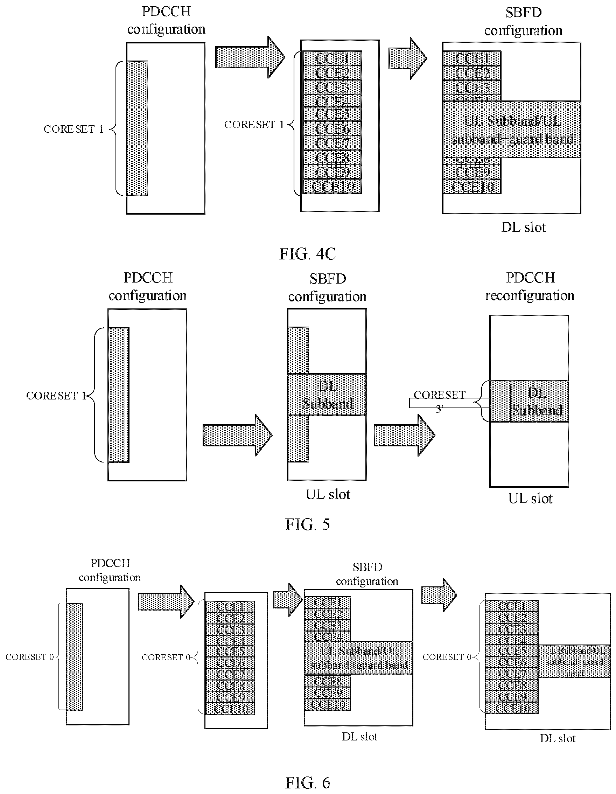

As shown in FIG. 4C, FIG. 4C is a schematic diagram showing PDCCH frequency-domain resource not integrated, the first candidate frequency-domain resource includes all RBs of CCE1-CCE3 and part of RBs of CCE4, the second candidate frequency-domain resource includes all RBs of CCE9-CCE10 and part of RBs of CCE8, the first candidate frequency-domain resource and the second candidate frequency-domain resource will not be integrated, instead, the non-consecutive frequency-domain resources are directly generated based on the first candidate frequency-domain resource and the second candidate frequency-domain resource, the non-consecutive frequency-domain resources are determined as the target PDCCH frequency-domain resource.

In an example, for a non-interleaved case and an interleaved case, in order to generate the non-consecutive frequency-domain resources based on the first candidate frequency-domain resource and the second candidate frequency-domain resource, following manners can be adopted. Certainly, following manners are examples, which will not be limited.

Manner 1, the first candidate frequency-domain resource includes at least one CCE, the second candidate frequency-domain resource includes at least one CCE, and for each CCE, a number of RBs in the CCE is related to control resource granularity, where the control resource granularity may be a first value, and the first value can be configured according to experience, such as 6, etc. A total number of RBs corresponding to the first candidate frequency-domain resource and the second candidate frequency-domain resource is determined. A to-be-excluded number of RBs is determined based on the total number of RBs and the control resource granularity, where the to-be-excluded number is a remainder result of the total number of RBs and the control resource granularity. The to-be-excluded number of RBs are excluded from all RBs of the first candidate frequency-domain resource and the second candidate frequency-domain resource, and the non-consecutive frequency-domain resources are generated based on remaining RBs of the first candidate frequency-domain resource and the second candidate frequency-domain resource.

For example, a total number of RBs corresponding to the first candidate frequency-domain resource and the second candidate frequency-domain resource is determined, a remainder result of the total number of RBs and a first value (such as 6) is computed, the remainder result is determined as a to-be-excluded number, and the to-be-excluded number of RBs are excluded from all RBs, that is, a number of the total number of RBs mod L<6 RBs are excluded, where L represents REB bundle size, which can be understood as the control resource granularity. The to-be-excluded number of RBs are excluded from remaining RBs of the segmented CORESET, for example, the to-be-excluded number of RBs are excluded from remaining RBs close to the initial SBFD time-frequency resource (UL sub-band or UL sub-band+guard band). As shown in FIG. 4C, the to-be-excluded number of RBs can be excluded from remaining RBs of CCE4 and/or CCE8. After the to-be-excluded number of RBs are excluded, the non-consecutive frequency-domain resources are generated based on remaining RBs of the first candidate frequency-domain resource and the second candidate frequency-domain resource.

Manner 2, the first candidate frequency-domain resource includes at least one CCE, the second candidate frequency-domain resource includes at least one CCE, and for each CCE, a number of RBs in the CCE is related to control resource granularity, where the control resource granularity may be a second value, and the second value can be configured according to experience, the second value may be smaller than the first value, the second value may be greater than 0, for example, the second value may be 1, 2, etc. A total number of RBs corresponding to the first candidate frequency-domain resource and the second candidate frequency-domain resource is determined. A to-be-excluded number of RBs is determined based on the total number of RBs and the control resource granularity, where the to-be-excluded number is a remainder result of the total number of RBs and the control resource granularity. The to-be-excluded number of RBs are excluded from all RBs of the first candidate frequency-domain resource and the second candidate frequency-domain resource, and the non-consecutive frequency-domain resources are generated based on remaining RBs of the first candidate frequency-domain resource and the second candidate frequency-domain resource.

For example, a total number of RBs corresponding to the first candidate frequency-domain resource and the second candidate frequency-domain resource is determined, a remainder result of the total number of RBs and a second value (such as 2) is computed, the remainder result is determined as a to-be-excluded number, and the to-be-excluded number of RBs are excluded from all RBs. For example, the to-be-excluded number of RBs are excluded from remaining RBs close to the initial SBFD time-frequency resource, for example, the to-be-excluded number of RBs can be excluded from remaining RBs of CCE4 and/or CCE8. The non-consecutive frequency-domain resources are generated based on remaining RBs of the first candidate frequency-domain resource and the second candidate frequency-domain resource.

In manner 2, compared to manner 1, the control resource granularity is the second value, that is, the control resource granularity is adjusted from the first value to the second value, and by adjusting a number of RBs consisting the CCE (that is, the control resource granularity represents a number of RBs consisting the CCE), the control resource granularity is configured as a value ranging from 1 to 6, the REG-size can be re-configured to adapt to the SBFD symbol. In manner 2, an aggregation level corresponding to the control resource granularity can also be adjusted, that is, when the control resource granularity is the second value, the aggregation level corresponding to the control resource granularity may be greater than a preset aggregation level. For example, the aggregation level can be moderately adjusted to an integer multiple other than 2, or the aggregation level is added with values such as 32, 64, etc.

In an example, when the control resource granularity is the second value, the control resource granularity and the aggregation level corresponding to the control resource granularity can be re-configured through high-level signaling. For example, an example of the high-level signaling may be: reg-BundleSizeforSBFD ENUMERATED {n1, n2, n3, n4, n5, n6}.

In an example, CEE set level table is shown as table 2, the CEE set level table includes mapping relations between the aggregation level and the number of CEEs.

**Table 2**

| Aggregation level | Number of CCEs |
|---|---|
| 1 | 1 |
| 2 | 2 |
| 3 | 3 |
| 4 | 4 |
| 5 | 5 |
| 6 | 6 |
| 8 | 8 |
| 16 | 16 |
| 32 | 32 |
| 64 | 64 |
| 96 | 96 |

Manner 3, the first candidate frequency-domain resource may include at least one CCE, the second candidate frequency-domain resource may include at least one CCE, and for each CCE, the CCE includes at least one RB. When the first candidate frequency-domain resource includes a first CCE, where part of RBs of the first CCE are occupied by the overlapping resource, the first CCE is excluded from all CCEs of the first candidate frequency-domain resource to obtain the first target frequency-domain resource; otherwise, the first candidate frequency-domain resource is determined as the first target frequency-domain resource. When the second candidate frequency-domain resource includes a second CCE, where part of RBs of the second CCE are occupied by the overlapping resource, the second CCE is excluded from all CCEs of the second candidate frequency-domain resource to obtain the second target frequency-domain resource; otherwise, the second candidate frequency-domain resource is determined as the second target frequency-domain resource. Based on this, the non-consecutive frequency-domain resources are generated based on the first target frequency-domain resource and the second target frequency-domain resource.

For example, the first candidate frequency-domain resource includes all RBs of CCE1-CCE3 and part of RBs of CCE4, that is, includes CCE4 of which a part of RBs are occupied by the overlapping resource. Thus, the CCE4 is excluded from all CCEs of the first candidate frequency-domain resource, that is, CCE4 can be directly dropped, so as to obtain the first target frequency-domain resource (CCE1-CCE3). The second candidate frequency-domain resource includes all RBs of CCE9-CCE10 and part of RBs of CCE8, that is, includes CCE8 of which a part of RBs are occupied by the overlapping resource. Thus, the CCE8 is excluded from all CCEs of the second candidate frequency-domain resource, so as to obtain the second target frequency-domain resource (CCE9-CCE10). After obtaining the first target frequency-domain resource and the second target frequency-domain resource, the non-consecutive frequency-domain resources can be generated, where the non-consecutive frequency-domain resource include the first target frequency-domain resource and the second target frequency-domain resource.

Manner 4, the first candidate frequency-domain resource may include at least one CCE, the second candidate frequency-domain resource may include at least one CCE, and for each CCE, the CCE may include at least one RB. The first candidate frequency-domain resource and the second candidate frequency-domain resource can be determined as the non-consecutive frequency-domain resources, for example, all RBs of CCE1-CCE3, part of RBs of CCE4, all RBs of CCE9-CCE10 and part of RBs in CCE8 are all determined as the non-consecutive frequency-domain resource. In manner 4, after the first candidate frequency-domain resource and the second candidate frequency-domain resource are determined as the non-consecutive frequency-domain resources, when the first candidate frequency-domain resource includes a first CCE (such as CCE4), where part of RBs of the first CCE are occupied by the overlapping resource, rate matching can be performed on data corresponding to the first CCE. When the second candidate frequency-domain resource includes a second CCE (such as CCE8), where part of RBs of the second CCE are occupied by the overlapping resource, rate matching can be performed on data corresponding to the second CCE.

In an example, performing rate matching on data corresponding to the first CCE may include but is not limited to: performing high channel coding rate on the data corresponding to the first CCE; or, performing high-level modulation on the data corresponding to the first CCE (that is, data transmission can be realized by increasing modulation coding, and rate matching is needed); or selecting part of data from the data corresponding to the first CCE (that is, part of information bits are transmitted, rate matching is needed, or part of information bits are transmitted for PDCCH repeated transmission).

In an example, performing rate matching on data corresponding to the second CCE may include but is not limited to: performing high channel coding rate on the data corresponding to the second CCE; or, performing high-level modulation on the data corresponding to the second CCE; or selecting part of data from the data corresponding to the second CCE.

As can be seen from the above description, for the non-interleaved case and the interleaved case, manners 1-4 can be adopted to generate the non-consecutive frequency-domain resources. In an example, after determining the target PDCCH frequency-domain resource based on the non-consecutive frequency-domain resources, the method may further include: when the target PDCCH frequency-domain resource needs to be interleaved, and the target PDCCH frequency-domain resource includes the non-consecutive frequency-domain resources, that is, for the interleaved case, splicing the non-consecutive frequency-domain resources and then interleaving.

In an example, the base station and the UE can agree on a determining manner of the target PDCCH frequency-domain resource, that is, the base station adopts the above manner to determine the target PDCCH frequency-domain resource, and the UE also adopts the above manner to determine the target PDCCH frequency-domain resource, and the determining process of the target PDCCH frequency-domain resource will not be described here.

In another example, the base station can adopt the above manner to determine the target PDCCH frequency-domain resource, and can send a PDCCH resource re-configuration message to the UE, where the PDCCH resource re-configuration message may include resource information corresponding to the non-consecutive frequency-domain resources. The UE can parse the resource information corresponding to the non-consecutive frequency-domain resources from the PDCCH resource re-configuration message, and determine the target PDCCH frequency-domain resource based on the non-consecutive frequency-domain resources corresponding to the resource information, that is, the target PDCCH frequency-domain resource may include the non-consecutive frequency-domain resources.

As described above, the target PDCCH frequency-domain resource may include the non-consecutive frequency-domain resources, and the non-consecutive frequency-domain resources correspond to one CORESET. After determining the target PDCCH frequency-domain resource, the base station sends downlink data corresponding to the PDCCH based on the target PDCCH frequency-domain resource; and after determining the target PDCCH frequency-domain resource, the UE receives the downlink data corresponding to the PDCCH based on the target PDCCH frequency-domain resource, that is, the UE realizes blind detection based on the target PDCCH frequency-domain resource.

In an example, when the resource information corresponding to the target PDCCH frequency-domain resource is transmitted through the PDCCH resource re-configuration message, signaling interactions between the base station and the UE include: the base station sends a PDCCH resource configuration message to the UE, the base station sends a SBFD resource configuration message to the UE, the base station sends a PDCCH resource re-configuration message to the UE, where the PDCCH resource re-configuration message may include the resource information corresponding to the non-consecutive frequency-domain resources. The UE parses the resource information corresponding to the non-consecutive frequency-domain resources from the PDCCH resource re-configuration message, and determines the target PDCCH frequency-domain resource based on the non-consecutive frequency-domain resources corresponding to the resource information, and receives downlink data corresponding to the PDCCH through the target PDCCH frequency-domain resource.

When transmitting the resource information corresponding to the target PDCCH frequency-domain resource through the PDCCH resource re-configuration message, IE (information element) included in high-level signaling includes:
ControlResource SetId: : = INTEGER (0..maxNrofControlResourceSets-1) ControlResourceSetId-SBFD ::= INTEGER (0..maxNrofControlResourceSetsforSBFD-1)
where maxNrofControlResourceSetsforSBFD is an integer greater than 0, and preferentially takes a value of 3

Alternatively, ControlResourceSetId::=INTEGER (0..maxNrofControlResourceSets-1)
ControlResourceSetId-SBFD ::= INTEGER (maxNrofControlResourceSets..maxNrofControlResourceSetsforSBFD-1)
where maxNrofControlResourceSetsforSBFD is an integer greater than 16, and preferentially takes a value of 19

In an example, the UE may correspond to N dedicated PDCCH frequency-domain resources and P dedicated PDCCH frequency-domain resources, the N dedicated PDCCH frequency-domain resources may be initially configured PDCCH frequency-domain resources, and the P dedicated PDCCH frequency-domain resources may be re-configured PDCCH frequency-domain resources. Alternatively, the UE may correspond to N dedicated PDCCH frequency-domain resources, the N dedicated PDCCH frequency-domain resources may include initially configured PDCCH frequency-domain resources and re-configured PDCCH frequency-domain resources. N and P are both configured according to experience.

For example, for a case of non-SBFD symbol/slot and a case of SBFD symbol/slot, two types of CORESET of PDCCH are configured respectively, for the configured two types of CORESET resources, one is for regular slots, and another one is for SBFD slots. Configuration manners of CORESET resource can be referred to from the above embodiments, CORESET configuration is performed for the DL slot and the UL slot respectively.

For CORESET frequency-domain data transmission of the UE, one way is that the three dedicated CORESETs (such as N dedicated PDCCH frequency-domain resources) are configured for the UE, that is, the three dedicated CORESETs are determined as the initially configured PDCCH frequency-domain resource and the re-configured PDCCH frequency-domain resource, that is, the initial PDCCH frequency-domain resource and the target PDCCH frequency-domain resource share the three dedicated CORESETs. Another way is that, in addition to configuring the three dedicated CORESETs (such as N dedicated PDCCH frequency-domain resources) for the UE, three additional dedicated CORESETs (such as P dedicated PDCCH frequency-domain resources) are configured for the UE. The three dedicated CORESETs are considered as the initially configured PDCCH frequency-domain resource, that is, the initial PDCCH frequency-domain resource occupies three dedicated CORESETs, and the three additionally configured dedicated CORESETs are considered as the re-configured PDCCH frequency-domain resource, that is, the target PDCCH frequency-domain resource may occupy the three additionally configured dedicated CORESETs. By additionally configuring three dedicated CORESETs, congestion of PDCCH scheduling of UE can be avoided.

In a fourth aspect, an initial PDCCH frequency-domain resource is configured first, and then the initial SBFD time-frequency resource is configured. An overlapping resource is excluded from the initial PDCCH frequency-domain resource (that is, a resource in UL sub-band and guard band of SBFD overlapping with the CORESET is excluded), and on the basis of exclusion of the overlapping resource, resource integration is not performed (that is, non-consecutive integration is not performed), and data transmission and UE blind detection are realized based on resources not integrated, which will be described in the following.

When there is an overlapping resource between an initial PDCCH frequency-domain resource and an initial SBFD time-frequency resource of SBFD, a target PDCCH frequency-domain resource and a target SBFD time-frequency resource are determined based on the initial PDCCH frequency-domain resource and the initial SBFD time-frequency resource, where the target PDCCH frequency-domain resource does not overlap with the target SBFD time-frequency resource.

For example, the initial SBFD time-frequency resource is determined as the target SBFD time-frequency resource, and the overlapping resource is excluded from the initial PDCCH frequency-domain resource to obtain a candidate PDCCH frequency-domain resource, and the candidate PDCCH frequency-domain resource may include a first candidate frequency-domain resource and a second candidate frequency-domain resource. A first target frequency-domain resource is determined based on the first candidate frequency-domain resource, a second target frequency-domain resource is determined based on the second candidate frequency-domain resource. The target PDCCH frequency-domain resource are determined based on the first target frequency-domain resource and the second target frequency-domain resource, the target PDCCH frequency-domain resource may include the first target frequency-domain resource and the second target frequency-domain resource, the first target frequency-domain resource may correspond to one CORESET, and the second target frequency-domain resource may correspond to another CORESET.

As shown in FIGS. 3A-3C, the overlapping resource is excluded from CORESET1 (i.e., the initial PDCCH frequency-domain resource) to obtain the first candidate frequency-domain resource CORESET1' and the second candidate frequency-domain resource CORESET2', the first target frequency-domain resource is determined based on CORESET 1', the second target frequency-domain resource is determined based on CORESET2', the first target frequency-domain resource and the second target frequency-domain resource are determined as the target PDCCH frequency-domain resource.

As shown in FIG. 4C, FIG. 4C is a schematic diagram showing PDCCH frequency-domain resource not integrated, the first candidate frequency-domain resource includes all RBs of CCE1-CCE3 and part of RBs of CCE4, the second candidate frequency-domain resource includes all RBs of CCE9-CCE10 and part of RBs of CCE8, the first target frequency-domain resource is determined based on the first candidate frequency-domain resource, the second target frequency-domain resource is determined based on the second candidate frequency-domain resource.

In an example, for a non-interleaved case and an interleaved case, in order to determine the first target frequency-domain resource based on the first candidate frequency-domain resource, and determine the second target frequency-domain resource based on the second candidate frequency-domain resource, following manners can be adopted, which will not be limited.

Manner 1, the first candidate frequency-domain resource includes at least one CCE, the second candidate frequency-domain resource includes at least one CCE, and for each CCE, a number of RBs in the CCE is related to control resource granularity, where the control resource granularity may be a first value, and the first value can be configured according to experience, such as 6, etc. A total number of RBs corresponding to the first candidate frequency-domain resource is determined, an to-be-excluded number of RBs is determined based on the total number of RBs and the control resource granularity, where the to-be-excluded number is a remainder result of the total number of RBs and the control resource granularity. The to-be-excluded number of RBs are excluded from all RBs of the first candidate frequency-domain resource, and the first target frequency-domain resource is generated based on remaining RBs of the first candidate frequency-domain resource. And, a total number of RBs corresponding to the second candidate frequency-domain resource is determined, an to-be-excluded number of RBs is determined based on the total number of RBs and the control resource granularity, where the to-be-excluded number is a remainder result of the total number of RBs and the control resource granularity. The to-be-excluded number of RBs are excluded from all RBs of the second candidate frequency-domain resource, and the second target frequency-domain resource is generated based on remaining RBs of the second candidate frequency-domain resource. Since the first target frequency-domain resource and the second target frequency-domain resource are determined in a same way, in the following, the first target frequency-domain resource is taken as an example for description.

For example, a total number of RBs corresponding to the first candidate frequency-domain resource is determined, a remainder result of the total number of RBs and a first value (such as 6) is computed, the remainder result is determined as a to-be-excluded number, and the to-be-excluded number of RBs are excluded from all RBs of the first candidate frequency-domain resource. For example, the to-be-excluded number of RBs are excluded from remaining RBs close to the initial SBFD time-frequency resource. As shown in FIG. 4C, the to-be-excluded number of RBs can be excluded from remaining RBs of CCE4. Then, the first target frequency-domain resource is determined based on remaining RBs of the first candidate frequency-domain resource.

Manner 2, the first candidate frequency-domain resource includes at least one CCE, the second candidate frequency-domain resource includes at least one CCE, and for each CCE, a number of RBs in the CCE is related to control resource granularity, where the control resource granularity may be a second value, and the second value can be configured according to experience, the second value may be smaller than the first value, the second value may be greater than 0, for example, the second value may be 1, 2, etc. A total number of RBs corresponding to the first candidate frequency-domain resource is determined. An to-be-excluded number of RBs is determined based on the total number of RBs and the control resource granularity, where the to-be-excluded number is a remainder result of the total number of RBs and the control resource granularity. The to-be-excluded number of RBs are excluded from all RBs of the first candidate frequency-domain resource, and the first target frequency-domain resource is generated based on remaining RBs of the first candidate frequency-domain resource. And, a total number of RBs corresponding to the second candidate frequency-domain resource is determined. An to-be-excluded number of RBs is determined based on the total number of RBs and the control resource granularity, where the to-be-excluded number is a remainder result of the total number of RBs and the control resource granularity. The to-be-excluded number of RBs are excluded from all RBs of the second candidate frequency-domain resource, and the second target frequency-domain resource is generated based on remaining RBs of the second candidate frequency-domain resource. Since the first target frequency-domain resource and the second target frequency-domain resource are determined in a same way, in the following, the first target frequency-domain resource is taken as an example for description.

For example, a total number of RBs corresponding to the first candidate frequency-domain resource is determined, a remainder result of the total number of RBs and a second value (such as 2) is computed, the remainder result is determined as a to-be-excluded number, and the to-be-excluded number of RBs are excluded from all RBs of the first candidate frequency-domain resource. For example, the to-be-excluded number of RBs are excluded from remaining RBs close to the initial SBFD time-frequency resource, for example, the to-be-excluded number of RBs are excluded from remaining RBs of CCE4. The first target frequency-domain resource is generated based on remaining RBs of the first candidate frequency-domain resource. In manner 2, compared to manner 1, the control resource granularity may be the second value, that is, the control resource granularity is adjusted from the first value to the second value. In manner 2, an aggregation level corresponding to the control resource granularity can be adjusted, and the aggregation level corresponding to the control resource granularity may be greater than a preset aggregation level. For example, the aggregation level can be moderately adjusted to an integer multiple other than 2, or the aggregation level is added with values such as 32, 64, etc.

Manner 3, the first candidate frequency-domain resource may include at least one CCE, the second candidate frequency-domain resource may include at least one CCE, and for each CCE, the CCE includes at least one RB. When the first candidate frequency-domain resource includes a first CCE, where part of RBs of the first CCE are occupied by the overlapping resource, the first CCE is excluded from all CCEs of the first candidate frequency-domain resource to obtain the first target frequency-domain resource; otherwise, the first candidate frequency-domain resource is determined as the first target frequency-domain resource. When the second candidate frequency-domain resource includes a second CCE, where part of RBs of the second CCE are occupied by the overlapping resource, the second CCE is excluded from all CCEs of the second candidate frequency-domain resource to obtain the second target frequency-domain resource; otherwise, the second candidate frequency-domain resource is determined as the second target frequency-domain resource.

Manner 4, the first candidate frequency-domain resource may include at least one CCE, the second candidate frequency-domain resource may include at least one CCE, and for each CCE, the CCE may include at least one RB. The first candidate frequency-domain resource can be determined as the first target frequency-domain resource. The second candidate frequency-domain resource can be determined as the second target frequency-domain resource. In manner 4, after the first candidate frequency-domain resource is determined as the first target frequency-domain resource, when the first candidate frequency-domain resource includes a first CCE, where part of RBs of the first CCE are occupied by the overlapping resource, rate matching can be performed on data corresponding to the first CCE. After the second candidate frequency-domain resource is determined as the second target frequency-domain resource, when the second candidate frequency-domain resource includes a second CCE, where part of RBs of the second CCE are occupied by the overlapping resource, rate matching can be performed on data corresponding to the second CCE.

In an example, the base station and the UE can agree on a determining manner of the target PDCCH frequency-domain resource, that is, the base station adopts the above manner to determine the target PDCCH frequency-domain resource, and the UE also adopts the above manner to determine the target PDCCH frequency-domain resource, and the determining process of the target PDCCH frequency-domain resource will not be described here.

In another example, the base station can adopt the above manner to determine the target PDCCH frequency-domain resource, and can send a PDCCH resource re-configuration message to the UE, where the PDCCH resource re-configuration message may include resource information corresponding to the first target frequency-domain resource and resource information corresponding to the second target frequency-domain resource. The UE can parse resource information corresponding to the first target frequency-domain resource and resource information corresponding to the second target frequency-domain resource from the PDCCH resource re-configuration message, determine the first target frequency-domain resource based on the resource information corresponding to the first target frequency-domain resource, and determine the second target frequency-domain resource based on the resource information corresponding to the second target frequency-domain resource, that is, the target PDCCH frequency-domain resource may include the first target frequency-domain resource and the second target frequency-domain resource.

As described above, the target PDCCH frequency-domain resource may include the first target frequency-domain resource and the second target frequency-domain resource, the first target frequency-domain resource corresponds to one CORESET, and the second target frequency-domain resource corresponds to another CORESET. After determining the target PDCCH frequency-domain resource, the base station sends downlink data corresponding to the PDCCH based on the target PDCCH frequency-domain resource; and after determining the target PDCCH frequency-domain resource, the UE receives the downlink data corresponding to the PDCCH based on the target PDCCH frequency-domain resource.

In a fifth aspect, when the initial PDCCH frequency-domain resource is configured and then the initial SBFD time-frequency resource is configured, in such case, a data transmission method and a UE blind detection method are provided, which are described in the following.

Case 1: the base station configures the initial PDCCH frequency-domain resource for the UE, and the base station configures the initial SBFD time-frequency resource for the UE, where the initial SBFD time-frequency resource may include at least one of a UL sub-band, a DL sub-band or a guard band. When both the initial PDCCH frequency-domain resource and the initial SBFD time-frequency resource are in downlink slots or downlink symbols, and the initial SBFD time-frequency resource includes a downlink sub-band, then: when there is an overlapping resource between the initial PDCCH frequency-domain resource and the initial SBFD time-frequency resource, a target PDCCH frequency-domain resource and a target SBFD time-frequency resource are determined based on the initial PDCCH frequency-domain resource and the initial SBFD time-frequency resource, where the target PDCCH frequency-domain resource does not overlap with the target SBFD time-frequency resource.

In an example, the initial SBFD time-frequency resource is determined as the target SBFD time-frequency resource, and the overlapping resource can be excluded from the initial PDCCH frequency-domain resource to obtain a candidate PDCCH frequency-domain resource, and the target PDCCH frequency-domain resource is determined based on frequency-domain resources corresponding to the downlink sub-band in the candidate PDCCH frequency-domain resource and the initial SBFD time-frequency resource. For example, the target PDCCH frequency-domain resource may include the candidate PDCCH frequency-domain resource and frequency-domain resources corresponding to the downlink sub-band in the initial SBFD time-frequency resource.

Case 2: the base station configures the initial PDCCH frequency-domain resource for the UE, and the base station configures the initial SBFD time-frequency resource for the UE, where the initial SBFD time-frequency resource may include at least one of a UL sub-band, a DL sub-band or a guard band. When both the initial PDCCH frequency-domain resource and the initial SBFD time-frequency resource are in Flexible slots or Flexible symbols, the Flexible slots or Flexible symbols are used for the downlink sub-band (i.e., DL sub-band), and the initial SBFD time-frequency resource includes a downlink sub-band, then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource.

In an example, the initial SBFD time-frequency resource is determined as the target SBFD time-frequency resource, and the overlapping resource can be excluded from the initial PDCCH frequency-domain resource to obtain a candidate PDCCH frequency-domain resource, and the target PDCCH frequency-domain resource is determined based on frequency-domain resources corresponding to the downlink sub-band in the candidate PDCCH frequency-domain resource and the initial SBFD time-frequency resource. For example, the target PDCCH frequency-domain resource may include the candidate PDCCH frequency-domain resource and frequency-domain resources corresponding to the downlink sub-band in the initial SBFD time-frequency resource.

Case 3: the base station configures the initial PDCCH frequency-domain resource and the initial SBFD time-frequency resource for the UE, where the initial SBFD time-frequency resource may include at least one of a UL sub-band, a DL sub-band or a guard band. When both the initial PDCCH frequency-domain resource and the initial SBFD time-frequency resource are in Flexible slots or Flexible symbols, the Flexible slots or Flexible symbols are used for the Flexible sub-band (i.e., Flexible sub-band), and the Flexible sub-band is used for downlink, then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource.

In an example, the initial SBFD time-frequency resource is determined as the target SBFD time-frequency resource, and the overlapping resource can be excluded from the initial PDCCH frequency-domain resource to obtain a candidate PDCCH frequency-domain resource, and the target PDCCH frequency-domain resource is determined based on frequency-domain resources corresponding to the downlink sub-band in the candidate PDCCH frequency-domain resource and the initial SBFD time-frequency resource. For example, the target PDCCH frequency-domain resource may include the candidate PDCCH frequency-domain resource and frequency-domain resources corresponding to the downlink sub-band in the initial SBFD time-frequency resource.

In an example, the method transmission method and the UE blind detection method in the fifth aspect are similar to the data transmission method and the UE blind detection method in the first aspect, but the target PDCCH frequency-domain resource further includes the frequency-domain resource corresponding to the downlink sub-band in the initial SBFD time-frequency resource, and a implementation process can be referred to from the data transmission method and the UE blind detection method in the first aspect, which will not be repeated here. In addition, content of the second aspect, the third aspect and the fourth aspect can all be applied to the data transmission method and the UE blind detection method in the fifth aspect, which will not be repeated here.

In a sixth aspect, when the initial PDCCH frequency-domain resource is configured and then the initial SBFD time-frequency resource is configured, in such case, a data transmission method and a UE blind detection method are provided, which are described in the following.

Case 1: as shown in FIG. 5, the base station configures the initial PDCCH frequency-domain resource for the UE, for example, the initial PDCCH frequency-domain resource is CORESET1, and the base station configures the initial SBFD time-frequency resource for the UE, where the initial SBFD time-frequency resource may include at least one of a UL sub-band, a DL sub-band or a guard band. When both the initial PDCCH frequency-domain resource and the initial SBFD time-frequency resource are in uplink slots or uplink symbols (an uplink slot is taken as an example in FIG. 5), and the initial SBFD time-frequency resource includes a downlink sub-band, then: when there is an overlapping resource between the initial PDCCH frequency-domain resource and the initial SBFD time-frequency resource, a target PDCCH frequency-domain resource and a target SBFD time-frequency resource are determined based on the initial PDCCH frequency-domain resource and the initial SBFD time-frequency resource, where the target PDCCH frequency-domain resource does not overlap with the target SBFD time-frequency resource. The target PDCCH frequency-domain resource can be determined based on the overlapping resource of the initial PDCCH frequency-domain resource and the initial SBFD time-frequency resource (for example, the overlapping resource is determined as the target PDCCH frequency-domain resource), and the target PDCCH frequency-domain resource is excluded from the initial SBFD time-frequency resource and a remaining time-frequency resource is determined as the target SBFD time-frequency resource.

As shown in FIG. 5, the overlapping resource between the initial PDCCH frequency-domain resource and the initial SBFD time-frequency resource can be determined as the target PDCCH frequency-domain resource, for example, the target PDCCH frequency-domain resource may include CORESET3' (i.e., the overlapping resource), and the CORESET3' corresponds to one CORESET.

In an example, when the base station configures a DL sub-band of SBFD on uplink slots or uplink symbols, and when the initial SBFD time-frequency resource overlaps with the initial PDCCH frequency-domain resource (CORESET1), then the base station can reconfigure the CORESET frequency-domain resource (such as CORESET3') for the SBFD symbols or the SBFD slots, and the re-configured CORESET frequency-domain resource (such as CORESET3') overlaps with the SBFD time-frequency resource, or the re-configured CORESET frequency-domain resource (such as CORESET3') is outside the DL sub-band. The UE can receive downlink data corresponding to the PDCCH on uplink slots or uplink symbols. The PDCCH resources used by the base station to schedule the UE can be expanded, so as to reduce congestion of PDCCH scheduling.

In an example, the base station and the UE can agree on a determining manner of the target PDCCH frequency-domain resource, that is, the base station adopts the above manner to determine the target PDCCH frequency-domain resource, and the UE also adopts the above manner to determine the target PDCCH frequency-domain resource, and the determining process of the target PDCCH frequency-domain resource will not be described here.

In another example, the base station can adopt the above manner to determine the target PDCCH frequency-domain resource, and can send a PDCCH resource re-configuration message to the UE, where the PDCCH resource re-configuration message may include resource information corresponding to the target PDCCH frequency-domain resource. For example, the resource information corresponding to the the target PDCCH frequency-domain resource may include resource information of the overlapping resource (such as CORESET3'). The UE can parse the resource information corresponding to the overlapping resource from the PDCCH resource re-configuration message, and determine the target PDCCH frequency-domain resource based on the overlapping resource (such as CORESET3') of the resource information.

Case 2: the base station configures the initial PDCCH frequency-domain resource for the UE, and the base station configures the initial SBFD time-frequency resource for the UE, where the initial SBFD time-frequency resource may include at least one of a UL sub-band, a DL sub-band or a guard band. When both the initial PDCCH frequency-domain resource and the initial SBFD time-frequency resource are in Flexible slots or Flexible symbols, the Flexible slots or Flexible symbols are used for the uplink sub-band, and the initial SBFD time-frequency resource includes a downlink sub-band, then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource. The target PDCCH frequency-domain resource can be determined based on the overlapping resource of the initial PDCCH frequency-domain resource and the initial SBFD time-frequency resource (for example, the overlapping resource is determined as the target PDCCH frequency-domain resource), and the target PDCCH frequency-domain resource is excluded from the initial SBFD time-frequency resource and a remaining time-frequency resource is determined as the target SBFD time-frequency resource.

In an example, the base station and the UE can agree on a determining manner of the target PDCCH frequency-domain resource, or the base station can adopt the above manner to determine the target PDCCH frequency-domain resource and send a PDCCH resource re-configuration message to the UE, and the UE determines the target PDCCH frequency-domain resource based on the PDCCH resource re-configuration message.

Case 3: the base station configures the initial PDCCH frequency-domain resource and the initial SBFD time-frequency resource for the UE, where the initial SBFD time-frequency resource may include at least one of a UL sub-band, a DL sub-band or a guard band. When both the initial PDCCH frequency-domain resource and the initial SBFD time-frequency resource are in Flexible slots or Flexible symbols, the Flexible slots or Flexible symbols are used for the Flexible sub-band, the Flexible sub-band is used for uplink, and the initial SBFD time-frequency resource includes a downlink sub-band, then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource. The target PDCCH frequency-domain resource can be determined based on the overlapping resource of the initial PDCCH frequency-domain resource and the initial SBFD time-frequency resource (for example, the overlapping resource is determined as the target PDCCH frequency-domain resource), and the target PDCCH frequency-domain resource is excluded from the initial SBFD time-frequency resource and a remaining time-frequency resource is determined as the target SBFD time-frequency resource.

In an example, the base station and the UE can agree on a determining manner of the target PDCCH frequency-domain resource, or the base station can adopt the above manner to determine the target PDCCH frequency-domain resource and send a PDCCH resource re-configuration message to the UE, and the UE determines the target PDCCH frequency-domain resource based on the PDCCH resource re-configuration message.

In an example, for cases 1-3, when the resource information corresponding to the target PDCCH frequency-domain resource is transmitted through the PDCCH resource re-configuration message, signaling interactions between the base station and the UE include: the base station sends a PDCCH resource configuration message to the UE, sends a SBFD resource configuration message to the UE, and sends a PDCCH resource re-configuration message to the UE, where the PDCCH resource re-configuration message may include the resource information corresponding to the target PDCCH frequency-domain resource. The UE receives the PDCCH based on the PDCCH resource re-configuration message.

In an example, for cases 1-3, the UE may correspond to N dedicated PDCCH frequency-domain resources and P dedicated PDCCH frequency-domain resources, the N dedicated PDCCH frequency-domain resources may be initially configured PDCCH frequency-domain resources, and the P dedicated PDCCH frequency-domain resources may be re-configured PDCCH frequency-domain resources. Alternatively, the UE may correspond to N dedicated PDCCH frequency-domain resources, the N dedicated PDCCH frequency-domain resources may include initially configured PDCCH frequency-domain resources and re-configured PDCCH frequency-domain resources. N can be configured according to experience, such as 3, etc., and P can be configured according to experience, such as 3, etc., which are not limited here.

In an example, for cases 1-3, after determining the target PDCCH frequency-domain resource, the base station can send downlink data corresponding to the PDCCH based on the target PDCCH frequency-domain resource; and after determining the target PDCCH frequency-domain resource, the UE can receive the downlink data corresponding to the PDCCH based on the target PDCCH frequency-domain resource, that is, the UE can realize blind detection based on the target PDCCH frequency-domain resource.

In a seventh aspect, the initial PDCCH frequency-domain resource is configured and then the initial SBFD time-frequency resource is configured, in such case, a data transmission method and a UE blind detection method are provided, which are described in the following.

Case 1: as shown in FIG. 6, the base station can configure the initial PDCCH frequency-domain resource for the UE, for example, the initial PDCCH frequency-domain resource is CORESETO. The base station can configure the initial SBFD time-frequency resource for the UE, and the initial SBFD time-frequency resource may include at least one of a UL sub-band, a DL sub-band or a guard band. When both the initial PDCCH frequency-domain resource and the initial SBFD time-frequency resource are in downlink slots or downlink symbols (a downlink slot is taken as an example in FIG. 6), and the initial SBFD time-frequency resource includes at least one of an uplink sub-band or a guard band, for example, the initial SBFD time-frequency resource includes an uplink sub-band, or the initial SBFD time-frequency resource includes an uplink sub-band and a guard band, and certainly, the initial SBFD time-frequency resource may also include a downlink sub-band, then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource. For example, the initial PDCCH frequency-domain resource can be determined as the target PDCCH frequency-domain resource, and the overlapping resource can be excluded from the initial SBFD time-frequency resource to obtain the target SBFD time-frequency resource.

As shown in FIG. 6, the initial PDCCH frequency-domain resource is CORESETO, the CORESETO can be determined as the target PDCCH frequency-domain resource, that is, the target PDCCH frequency-domain resource corresponds to one CORESET. In addition, the overlapping resource (i.e., the overlapping resource of the initial PDCCH frequency-domain resource and the initial SBFD time-frequency resource) can be excluded from the initial SBFD time-frequency resource to obtain the target SBFD time-frequency resource.

In an example, when configuring the SBFD time-frequency resource, the SBFD time-frequency resource is configured to avoid overlapping with the CORESET time-frequency resource of PDCCH, that is, the SBFD time-frequency resource lies outside the initial PDCCH frequency-domain resource (for example, the initial PDCCH frequency-domain resource is CORESETO, Common CORESET). When the SBFD time-frequency resource cannot completely locate outside the initial PDCCH frequency-domain resource, that is, when the SBFD time-frequency resource overlaps with the initial PDCCH frequency-domain resource, the implementation manners of the first aspect, the second aspect, the third aspect, the fourth aspect and the fifth aspect can be adopted, which will not be repeated here. At the same time, for the CORESETO and Common CORESET, the UE can ignore the SBFD configuration, and receive PDCCH corresponding to SIB1 in CORESETO and common CORESET; the UE also will not send on the overlapping part of the SBFD time-frequency resource and the time-frequency resource of CORESETO and common CORESET, the base station also will not correspondingly receive uplink data, but to perform PDCCH sending. Certainly, this requires the base station and the UE reach an agreement in advance, that is, agree on the above processing manner in advance.

Case 2: the base station configures the initial PDCCH frequency-domain resource and the initial SBFD time-frequency resource for the UE, where the initial SBFD time-frequency resource may include at least one of a UL sub-band, a DL sub-band or a guard band. When the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band. When there is an overlapping resource between an initial PDCCH frequency-domain resource and an initial SBFD time-frequency resource of SBFD a target PDCCH frequency-domain resource and a target SBFD time-frequency resource are determined based on the initial PDCCH frequency-domain resource and the initial SBFD time-frequency resource, where the target PDCCH frequency-domain resource does not overlap with the target SBFD time-frequency resource. For example, the initial PDCCH frequency-domain resource is determined as the target PDCCH frequency-domain resource, and the overlapping resource is excluded from the initial SBFD time-frequency resource to obtain the target SBFD time-frequency resource.

Case 3: the base station configures the initial PDCCH frequency-domain resource and the initial SBFD time-frequency resource for the UE, where the initial SBFD time-frequency resource may include at least one of a UL sub-band, a DL sub-band or a guard band. When both the initial PDCCH frequency-domain resource and the initial SBFD time-frequency resource are in Flexible slots or Flexible symbols, the initial SBFD time-frequency resource includes at least one of an uplink sub-band or a guard band, and the Flexible slots or Flexible symbols are used for a Flexible sub-band, the Flexible sub-band is used for downlink (such as for downlink data) then: when there is an overlapping resource between the initial PDCCH frequency-domain resource and the initial SBFD time-frequency resource, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource. For example, the initial PDCCH frequency-domain resource can be determined as the target PDCCH frequency-domain resource, and the overlapping resource can be excluded from the initial SBFD time-frequency resource to obtain the target SBFD time-frequency resource.

In an example, for cases 1-3, after determining the target PDCCH frequency-domain resource, the base station can send downlink data corresponding to the PDCCH based on the target PDCCH frequency-domain resource; and after determining the target PDCCH frequency-domain resource, the UE can receive the downlink data corresponding to the PDCCH based on the target PDCCH frequency-domain resource, that is, the UE can realize blind detection based on the target PDCCH frequency-domain resource.

In a seventh aspect, the initial SBFD time-frequency resource can be configured first, and then the initial PDCCH frequency-domain resource is configured, or the initial SBFD time-frequency resource and the initial PDCCH frequency-domain resource can be configured at the same time, and in such case, a data transmission method and a UE blind detection method are provided, which are described in the following.

When the initial SBFD time-frequency resource is configured first, and then the initial PDCCH frequency-domain resource is configured, or when the initial SBFD time-frequency resource and the initial PDCCH frequency-domain resource are configured at the same time, the implementation manner of the first aspect, the second aspect, the third aspect, the fourth aspect, the fifth aspect and the sixth aspect can be adopted, which will not be repeated here.

In an example, after the UL sub-band configuration of the SBFD symbol is excluded, CORESET is configured, for example, perform non-consecutive allocation through the CORESET, and a non-consecutive allocation manner may be referred to in the manner where the PDCCH is configured first and then the SBFD is configured. There are two manners for solving the problem of a boundary between DL sub-band/UL sub-band or DL sub-band/Guard sub-band: a first manner is that, for remaining part of the segmented CORESET, RBs of which the number is CCE total resources (i.e., REG total resources) mod L<6 are excluded, for example, the overlapping part close to UL sub-band or UB sub-band+(derived) guard band, such as CCE4 and CCE8 of FIG. 4C. Alternatively, CCE4 and CCE8 in FIG. 4C can be directly dropped. Alternatively, remaining resources can be used for transmission, at this time, in partial transmission, modulation coding can be increased (rate matching is needed) or part of information bits can be transmitted (rate matching is needed, or repeated transmission is performed for PDCCH). A second manner is that, a number of RBs consisting the CCE can be adjusted, the matched CORESET does not include REG-bundle overlapping with the UL sub-band, L (a number of RBs included in the CCE) is adjusted to a configurable number (1-6) of RBs; REG-size can be re-configured to adapt to SBFD symbols; AL (aggregation level) may be moderately adjusted to integer multiple other than 2, or may be added with values such as 32, 64, and the above parameters (L and AL) can be re-configured through high-level signaling.

In an example, non-SBFD symbol/slot and SBFD symbol/slot are configured with CORESET of PDCCH respectively, and CORESET configuration is performed for downlink slots and uplink slots respectively. For example, non-SBFD symbol/slot and SBFD symbol/slot are configured with CORESET of PDCCH respectively, at most one common CORESET and at most 3 dedicated CORESETs are configured for one BWP. For PDCCH CORESET frequency-domain data transmission of UE, a first manner is to configure the 3 dedicated CORESETs for the UE. A second manner is to configure, in addition to the dedicated CORESETs, 3 additional dedicated CORESETs for the UE, which avoids congestion of PDCCH scheduling.

In an example, in implementations of the first aspect, the second aspect, the third aspect, the fourth aspect, the fifth aspect, the sixth aspect and the seventh aspect, the base station and the UE can agree on a determining manner of the target PDCCH frequency-domain resource, and resource information corresponding to the target PDCCH frequency-domain resource does not need to be transmitted through the PDCCH resource re-configuration message, in such case, the target PDCCH frequency-domain resource and the initial PDCCH frequency-domain resource are the same CORESET, that is, CORESET configurations (such as CORESET identifiers) are the same, that is, no new CORESET will be additionally configured, by comparing the target PDCCH frequency-domain resource and the initial PDCCH frequency-domain resource, RBs in the CORESET are not completely the same, but will be considered as the same CORESET by the UE.

In another example, after determining the target PDCCH frequency-domain resource, the base station can send the resource information corresponding to the target PDCCH frequency-domain resource to the UE through the PDCCH resource re-configuration message, that is, the resource information corresponding to the target PDCCH frequency-domain resource needs to the transmitted through the PDCCH resource re-configuration message. In such case, the target PDCCH frequency-domain resource and the initial PDCCH frequency-domain resource may be the same CORESET, that is, CORESET configurations (such as CORESET identifiers) are the same, that is, no new CORESET will be additionally configured, which will be considered as the same CORESET by the UE. Alternatively, the target PDCCH frequency-domain resource and the initial PDCCH frequency-domain resource may be different CORESETs, that is, CORESET configurations (such as CORESET identifiers) are different, that is, a new CORESET needs to be additionally configured, and the UE considers that CORESET used by the target PDCCH frequency-domain resource is different from CORESET used by the initial PDCCH frequency-domain resource.

As can be seen from the above technical solutions, in a case that the SBFD time-frequency resource overlaps with the PDCCH frequency-domain resource, the base station can fully use the PDCCH frequency-domain resource to schedule UE transmissions on the SBFD time-frequency resource, the UE can be informed of the PDCCH frequency-domain resource, so that blind detect complexity of PDCCH can be reduced, and the SBFD time-frequency resource configuration and the PDCCH frequency-domain resource configuration can be effectively implemented. From a perspective of an overall system, cell coverage can be increased, transmission latency can be reduced, and capacity of uplink transmission can be increased. Data transmission in the TDD system can be supported, thereby improving data utilization, improving network coverage and network capacity, increasing uplink transmission resource and cell coverage, reducing uplink transmission latency and increasing uplink transmission capacity. In the TDD full-duplex system, after configuring the PDCCH frequency-domain resource first and then configuring the SBFD time-frequency resource through the high-level signaling, the base station solves the problem of increased PDCCH blind detection complexity and non-availability of the PDCCH resource when conflict occurs between the PDCCH frequency-domain resource and the SBFD time-frequency resource by re-configuring CORESET time-frequency resource of PDCCH, non-consecutively integrating CORESET, adjusting REG-bundle data transmission granularity and aggregation level of CORESET and flexibly configuring SBFD for interleaved and non-interleaved cases. In the TDD full-duplex system, after configuring the SBFD time-frequency resource first and then configuring the PDCCH frequency-domain resource through the high-level signaling, or configuring the SBFD time-frequency resource and the PDCCH frequency-domain resource at the same time, the base station configures CORESET time-frequency resources of PDCCH through non-SBFD symbol/slot and SBFD symbol/slot respectively, and solves the problem of increased PDCCH blind detection complexity and non-availability of the PDCCH resource when conflict occurs between the PDCCH frequency-domain resource and the SBFD time-frequency resource by adjusting REG-bundle data transmission granularity and aggregation level of CORESET and flexibly processing boundary of PDCCH and SBFD time-frequency resources for interleaved and non-interleaved cases.

Based on a same inventive concept, the present disclosure also provides a data transmission apparatus corresponding to the above data transmission method, as well as a base station and a UE. Since the principles of solving problems of the base station and the UE are similar to that of the data transmission method, the implementation of the base station and the UE an refer to the implementation of the data transmission method, which will not be repeated here.

Based on the same inventive concept to the above method, an example of the present disclosure provides a data transmission apparatus, applied to a base station, where the apparatus includes: a determining module, configured to, when there is an overlapping resource between an initial physical downlink control channel (PDCCH) frequency-domain resource of a PDCCH and an initial sub-band full-duplex (SBFD) time-frequency resource of SBFD, determine a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource; a transmitting module, configured to send downlink data corresponding to the PDCCH based on the target PDCCH frequency-domain resource, so that a user equipment (UE) receives the downlink data based on the target PDCCH frequency-domain resource determined by the UE.

In an example, when determining a target PDCCH frequency-domain resource and a target SBFD time-frequency resource based on the initial PDCCH frequency-domain resource and the initial SBFD time-frequency resource, the determining module is specifically configured to perform operations including: determining the initial SBFD time-frequency resource as the target SBFD time-frequency resource; and excluding the overlapping resource from the initial PDCCH frequency-domain resource to obtain a candidate PDCCH frequency-domain resource, and determining the target PDCCH frequency-domain resource based on the candidate PDCCH frequency-domain resource.

In an example, the initial PDCCH frequency-domain resource and the initial SBFD time-frequency resource are in downlink slots or downlink symbols, and the initial SBFD time-frequency resource includes at least one of an uplink sub-band or a guard sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, the Flexible slots or the Flexible symbols are used for a Flexible sub-band, and the Flexible sub-band is used for downlink.

In an example, when determining the target PDCCH frequency-domain resource based on the candidate PDCCH frequency-domain resource, the determining module is specifically configured to perform operations including: when the candidate PDCCH frequency-domain resource includes a first candidate frequency-domain resource and a second candidate frequency-domain resource, determining a first target frequency-domain resource based on the first candidate frequency-domain resource, and determining a second target frequency-domain resource based on the second candidate frequency-domain resource; determining the target PDCCH frequency-domain resource based on the first target frequency-domain resource and the second target frequency-domain resource; where the first target frequency-domain resource and the second target frequency-domain resource are non-consecutive frequency-domain resources; the first target frequency-domain resource corresponds to a control resource set (CORESET), and the second target frequency-domain resource corresponds to another CORESET.

In an example, the first candidate frequency-domain resource includes at least one control channel element (CCE), and for each CCE, a number of resource blocks (RB) in the CCE is related to control resource granularity; when determining a first target frequency-domain resource based on the first candidate frequency-domain resource, the determining module is specifically configured to perform operations including: determining a total number of RBs corresponding to the first candidate frequency-domain resource; determining a to-be-excluded number of RBs based on the total number of RBs and the control resource granularity, and excluding the to-be-excluded number of RBs from all RBs of the first candidate frequency-domain resource; generating the first target frequency-domain resource based on remaining RBs of the first candidate frequency-domain resource.

In an example, the to-be-excluded number is a remainder result of the total number of RBs and the control resource granularity; the control resource granularity is a first value, or the control resource granularity is a second value, the second value is smaller than the first value, and the second value is greater than 0; where when the control resource granularity is the second value, an aggregation level corresponding to the control resource granularity is greater than a preset aggregation level.

In an example, the first candidate frequency-domain resource includes at least one CCE, and for each CCE, the CCE includes at least one RB; when determining a first target frequency-domain resource based on the first candidate frequency-domain resource, the determining module is specifically configured to perform operations including: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

In an example, the first candidate frequency-domain resource includes at least one CCE, and for each CCE, the CCE includes at least one RB; when determining a first target frequency-domain resource based on the first candidate frequency-domain resource, the determining module is specifically configured to perform operations including: determining the first candidate frequency-domain resource as the first target frequency-domain resource; where after determining the first candidate frequency-domain resource as the first target frequency-domain resource, the determining module is further configured to perform operations including: when the first candidate frequency-domain resource includes a first CCE, where part of RBs of the first CCE are occupied by the overlapping resource, performing rate matching on data corresponding to the first CCE.

In an example, the transmitting module is further configured to perform operations including: sending a PDCCH resource reconfiguration message to the UE, where the PDCCH resource reconfiguration message includes resource information corresponding to the target PDCCH frequency-domain resource; where the target PDCCH frequency-domain resource includes the first target frequency-domain resource and the second target frequency-domain resource, and the resource information includes resource information corresponding to the first target frequency-domain resource and resource information corresponding to the second target frequency-domain resource.

In an example, when determining the target PDCCH frequency-domain resource based on the candidate PDCCH frequency-domain resource, the determining module is specifically configured to perform operations including: when the candidate PDCCH frequency-domain resource includes a first candidate frequency-domain resource and a second candidate frequency-domain resource, generating consecutive frequency-domain resources based on the first candidate frequency-domain resource and the second candidate frequency-domain resource; determining the target PDCCH frequency-domain resource based on the consecutive frequency-domain resources; where the consecutive frequency-domain resources correspond to one CORESET.

In an example, when generating consecutive frequency-domain resources based on the first candidate frequency-domain resource and the second candidate frequency-domain resource, the determining module is specifically configured to perform operations including: when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

In an example, the transmitting module is further configured to perform operations including: sending a PDCCH resource reconfiguration message to the UE, where the PDCCH resource reconfiguration message includes resource information corresponding to the target PDCCH frequency-domain resource; where the target PDCCH frequency-domain resource includes the consecutive frequency-domain resources, and the resource information includes resource information corresponding to the consecutive frequency-domain resources.

In an example, when determining the target PDCCH frequency-domain resource based on the candidate PDCCH frequency-domain resource, the determining module is specifically configured to perform operations including: when the candidate PDCCH frequency-domain resource includes a first candidate frequency-domain resource and a second candidate frequency-domain resource, generating non-consecutive frequency-domain resources based on the first candidate frequency-domain resource and the second candidate frequency-domain resource; determining the target PDCCH frequency-domain resource based on the non-consecutive frequency-domain resources; where the non-consecutive frequency-domain resources correspond to one CORESET.

In an example, the first candidate frequency-domain resource includes at least one CCE, the second candidate frequency-domain resource includes at least one CCE, and for each CCE, a number of RBs in the CCE is related to control resource granularity; when generating non-consecutive frequency-domain resources based on the first candidate frequency-domain resource and the second candidate frequency-domain resource, the determining module is specifically configured to perform operations including: determining a total number of RBs corresponding to the first candidate frequency-domain resource and the second candidate frequency-domain resource; determining a to-be-excluded number of RBs based on the total number of RBs and the control resource granularity, and excluding the to-be-excluded number of RBs from all RBs of the first candidate frequency-domain resource and the second candidate frequency-domain resource; generating the non-consecutive frequency-domain resources based on remaining RBs of the first candidate frequency-domain resource and the second candidate frequency-domain resource.

In an example, the to-be-excluded number is a remainder result of the total number of RBs and the control resource granularity; the control resource granularity is a first value, or the control resource granularity is a second value, the second value is smaller than the first value, and the second value is greater than 0; where when the control resource granularity is the second value, an aggregation level corresponding to the control resource granularity is greater than a preset aggregation level.

In an example, the first candidate frequency-domain resource includes at least one CCE, the second candidate frequency-domain resource includes at least one CCE, and for each CCE, the CCE includes at least one RB; when generating non-consecutive frequency-domain resources based on the first candidate frequency-domain resource and the second candidate frequency-domain resource, the determining module is specifically configured to perform operations including: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource; when the second candidate frequency-domain resource includes a second CCE, where part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource; generating the non-consecutive frequency-domain resources based on the first target frequency-domain resource and the second target frequency-domain resource.

In an example, the first candidate frequency-domain resource includes at least one CCE, the second candidate frequency-domain resource includes at least one CCE, and for each CCE, the CCE may include at least one RB; when generating non-consecutive frequency-domain resources based on the first candidate frequency-domain resource and the second candidate frequency-domain resource, the determining module is specifically configured to perform operations including: determining the first candidate frequency-domain resource and the second candidate frequency-domain resource as the non-consecutive frequency-domain resources; where after determining the first candidate frequency-domain resource and the second candidate frequency-domain resource as the non-consecutive frequency-domain resources, the determining module is further configured to perform operations including: when the first candidate frequency-domain resource includes a first CCE, where part of RBs of the first CCE are occupied by the overlapping resource, performing rate matching on data corresponding to the first CCE; when the second candidate frequency-domain resource includes a second CCE, where part of RBs of the second CCE are occupied by the overlapping resource, performing rate matching on data corresponding to the second CCE.

In an example, after determining the target PDCCH frequency-domain resource based on the non-consecutive frequency-domain resources, the determining module is further configured to perform operations including: when the target PDCCH frequency-domain resource needs to be interleaved, and the target PDCCH frequency-domain resource includes the non-consecutive frequency-domain resources, splicing the non-consecutive frequency-domain resources and then interleaving.

In an example, the transmitting module is further configured to perform operations including: sending a PDCCH resource reconfiguration message to the UE, where the PDCCH resource reconfiguration message includes resource information corresponding to the target PDCCH frequency-domain resource; where the target PDCCH frequency-domain resource includes the non-consecutive frequency-domain resources, and the resource information includes resource information corresponding to the non-consecutive frequency-domain resources.

In an example, when determining a target PDCCH frequency-domain resource and a target SBFD time-frequency resource based on the initial PDCCH frequency-domain resource and the initial SBFD time-frequency resource, the determining module is specifically configured to perform operations including: determining the initial SBFD time-frequency resource as the target SBFD time-frequency resource; and excluding the overlapping resource from the initial PDCCH frequency-domain resource to obtain a candidate PDCCH frequency-domain resource, and when the initial SBFD time-frequency resource includes a downlink sub-band, determining the target PDCCH frequency-domain resource based on the candidate PDCCH frequency-domain resource and a frequency-domain resource corresponding to the downlink sub-band.

In an example, when determining a target PDCCH frequency-domain resource and a target SBFD time-frequency resource based on the initial PDCCH frequency-domain resource and the initial SBFD time-frequency resource, the determining module is specifically configured to perform operations including: determining the target PDCCH frequency-domain resource based on the overlapping resource of the initial PDCCH frequency-domain resource and the initial SBFD time-frequency resource, and excluding the target PDCCH frequency-domain resource from the initial SBFD time-frequency resource to determine a remaining time-frequency resource as the target SBFD time-frequency resource.

In an example, the initial PDCCH frequency-domain resource and the initial SBFD time-frequency resource are in uplink slots or uplink symbols, and the initial SBFD time-frequency resource includes a downlink sub-band; or, the initial PDCCH frequency-domain resource and the initial SBFD time-frequency resource are in Flexible slots or Flexible symbols, the initial SBFD time-frequency resource includes a downlink sub-band, and the Flexible slots or the Flexible symbols are used for an uplink sub-band; or, the initial PDCCH frequency-domain resource and the initial SBFD time-frequency resource are in Flexible slots or Flexible symbols, the initial SBFD time-frequency resource includes a downlink sub-band, the Flexible slots or the Flexible symbols are used for a Flexible sub-band, and the Flexible sub-band is used for uplink.

In an example, the transmitting module is further configured to perform operations including: sending a PDCCH resource reconfiguration message to the UE, where the PDCCH resource reconfiguration message includes resource information corresponding to the target PDCCH frequency-domain resource; where the target PDCCH frequency-domain resource includes the overlapping resource, and the resource information includes resource information corresponding to the overlapping resource.

In an example, when determining a target PDCCH frequency-domain resource and a target SBFD time-frequency resource based on the initial PDCCH frequency-domain resource and the initial SBFD time-frequency resource, the determining module is specifically configured to perform operations including: determining the initial PDCCH frequency-domain resource as the target PDCCH frequency-domain resource, and excluding the overlapping resource from the initial SBFD time-frequency resource to obtain the target SBFD time-frequency resource.

In an example, the initial PDCCH frequency-domain resource and the initial SBFD time-frequency resource are in downlink slots or downlink symbols, and the initial SBFD time-frequency resource includes at least one of an uplink sub-band or a guard sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, the Flexible slots or the Flexible symbols are used for a Flexible sub-band, and the Flexible sub-band is used for downlink.

In an example, when a target frame includes K downlink slots configured with the initial PDCCH frequency-domain resource in all slots of the target frame, and the initial PDCCH frequency-domain resource in M downlink slots overlaps with the initial SBFD time-frequency resource, M is smaller than K; when sending downlink data corresponding to the PDCCH based on the target PDCCH frequency-domain resource, the transmitting module is specifically configured to perform operations including: sending the downlink data corresponding to the PDCCH based on the target PDCCH frequency-domain resource in the K downlink slots; or, sending the downlink data corresponding to the PDCCH based on the target PDCCH frequency-domain resource in the M downlink slots, and sending the downlink data corresponding to the PDCCH on the initial PDCCH frequency-domain resource in remaining downlink slots rather than the M downlink slots.

In an example, the UE corresponds to N dedicated PDCCH frequency-domain resources and P dedicated PDCCH frequency-domain resources, the N dedicated PDCCH frequency-domain resources are initially configured PDCCH frequency-domain resources, and the P dedicated PDCCH frequency-domain resources are re-configured PDCCH frequency-domain resources; or, the UE corresponds to N dedicated PDCCH frequency-domain resources, the N dedicated PDCCH frequency-domain resources include initially configured PDCCH frequency-domain resources and re-configured PDCCH frequency-domain resources.

Based on the same inventive concept to the above method, an example of the present disclosure provides a data transmission apparatus, applied to a UE, where the apparatus includes: a determining module, configured to, when there is an overlapping resource between an initial physical downlink control channel (PDCCH) frequency-domain resource of a PDCCH and an initial sub-band full-duplex (SBFD) time-frequency resource of SBFD, determine a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource; a transmitting module, configured to receive downlink data corresponding to the PDCCH based on the target PDCCH frequency-domain resource.

In an example, when determining a target PDCCH frequency-domain resource and a target SBFD time-frequency resource based on the initial PDCCH frequency-domain resource and the initial SBFD time-frequency resource, the determining module is specifically configured to perform operations including: determining the initial SBFD time-frequency resource as the target SBFD time-frequency resource; and excluding the overlapping resource from the initial PDCCH frequency-domain resource to obtain a candidate PDCCH frequency-domain resource, and determining the target PDCCH frequency-domain resource based on the candidate PDCCH frequency-domain resource.

In an example, the initial PDCCH frequency-domain resource and the initial SBFD time-frequency resource are in downlink slots or downlink symbols, and the initial SBFD time-frequency resource includes at least one of an uplink sub-band or a guard sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, the Flexible slots or the Flexible symbols are used for a Flexible sub-band, and the Flexible sub-band is used for downlink.

In an example, when determining the target PDCCH frequency-domain resource based on the candidate PDCCH frequency-domain resource, the determining module is specifically configured to perform operations including: when the candidate PDCCH frequency-domain resource includes a first candidate frequency-domain resource and a second candidate frequency-domain resource, determining a first target frequency-domain resource and a second target frequency-domain resource; determining the target PDCCH frequency-domain resource based on the first target frequency-domain resource and the second target frequency-domain resource; where the first target frequency-domain resource and the second target frequency-domain resource are non-consecutive frequency-domain resources, the first target frequency-domain resource is determined based on the first candidate frequency-domain resource, the second target frequency-domain resource is determined based on the second candidate frequency-domain resource; the first target frequency-domain resource corresponds to a control resource set (CORESET), and the second target frequency-domain resource corresponds to another CORESET.

In an example, the first candidate frequency-domain resource includes at least one control channel element (CCE), and for each CCE, a number of resource blocks (RB) in the CCE is related to control resource granularity; when determining a first target frequency-domain resource based on the first candidate frequency-domain resource, the determining module is specifically configured to perform operations including: determining a total number of RBs corresponding to the first candidate frequency-domain resource; determining a to-be-excluded number of RBs based on the total number of RBs and the control resource granularity, and excluding the to-be-excluded number of RBs from all RBs of the first candidate frequency-domain resource; generating the first target frequency-domain resource based on remaining RBs of the first candidate frequency-domain resource.

In an example, the to-be-excluded number is a remainder result of the total number of RBs and the control resource granularity; the control resource granularity is a first value, or the control resource granularity is a second value, the second value is smaller than the first value, and the second value is greater than 0; where when the control resource granularity is the second value, an aggregation level corresponding to the control resource granularity is greater than a preset aggregation level.

In an example, the first candidate frequency-domain resource includes at least one CCE, and for each CCE, the CCE includes at least one RB; when determining a first target frequency-domain resource based on the first candidate frequency-domain resource, the determining module is specifically configured to perform operations including: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

In an example, the first candidate frequency-domain resource includes at least one CCE, and for each CCE, the CCE includes at least one RB; when determining a first target frequency-domain resource based on the first candidate frequency-domain resource, the determining module is specifically configured to perform operations including: determining the first candidate frequency-domain resource as the first target frequency-domain resource; where after determining the first candidate frequency-domain resource as the first target frequency-domain resource, the determining module is further configured to perform operations including: when the first candidate frequency-domain resource includes a first CCE, where part of RBs of the first CCE are occupied by the overlapping resource, performing rate matching on data corresponding to the first CCE.

In an example, when determining the first target frequency-domain resource and the second target frequency-domain resource, and determining the target PDCCH frequency-domain resource based on the first target frequency-domain resource and the second target frequency-domain resource, the determining module is specifically configured to perform operations including: receiving a PDCCH resource reconfiguration message, where the PDCCH resource reconfiguration message may include resource information corresponding to the first target frequency-domain resource and resource information corresponding to the second target frequency-domain resource; determining the first target frequency-domain resource based on the resource information corresponding to the first target frequency-domain resource; determining the second target frequency-domain resource based on the resource information corresponding to the second target frequency-domain resource; determining the target PDCCH frequency-domain resource based on the first target frequency-domain resource andthe second target frequency-domain resource.

In an example, when determining the target PDCCH frequency-domain resource based on the candidate PDCCH frequency-domain resource, the determining module is specifically configured to perform operations including: when the candidate PDCCH frequency-domain resource includes a first candidate frequency-domain resource and a second candidate frequency-domain resource, generating consecutive frequency-domain resources based on the first candidate frequency-domain resource and the second candidate frequency-domain resource; determining the target PDCCH frequency-domain resource based on the consecutive frequency-domain resources; where the consecutive frequency-domain resources correspond to one CORESET.

In an example, when generating consecutive frequency-domain resources based on the first candidate frequency-domain resource and the second candidate frequency-domain resource, the determining module is specifically configured to perform operations including: when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

In an example, when determining the target PDCCH frequency-domain resource based on the candidate PDCCH frequency-domain resource, the determining module is specifically configured to perform operations including: receiving a PDCCH resource reconfiguration message, where the PDCCH resource reconfiguration message includes resource information corresponding to the consecutive frequency-domain resources, the consecutive frequency-domain resources are generated based on a first candidate frequency-domain resource and a second candidate frequency-domain resource in the candidate PDCCH frequency-domain resource by a base station; determining the target PDCCH frequency-domain resource based on the consecutive frequency-domain resources corresponding to the resource information.

In an example, when determining the target PDCCH frequency-domain resource based on the candidate PDCCH frequency-domain resource, the determining module is specifically configured to perform operations including: when the candidate PDCCH frequency-domain resource includes a first candidate frequency-domain resource and a second candidate frequency-domain resource, generating non-consecutive frequency-domain resources based on the first candidate frequency-domain resource and the second candidate frequency-domain resource; determining the target PDCCH frequency-domain resource based on the non-consecutive frequency-domain resources; where the non-consecutive frequency-domain resources correspond to one CORESET.

In an example, the first candidate frequency-domain resource includes at least one CCE, the second candidate frequency-domain resource includes at least one CCE, and for each CCE, a number of RBs in the CCE is related to control resource granularity; when generating non-consecutive frequency-domain resources based on the first candidate frequency-domain resource and the second candidate frequency-domain resource, the determining module is specifically configured to perform operations including: determining a total number of RBs corresponding to the first candidate frequency-domain resource and the second candidate frequency-domain resource; determining a to-be-excluded number of RBs based on the total number of RBs and the control resource granularity, and excluding the to-be-excluded number of RBs from all RBs of the first candidate frequency-domain resource and the second candidate frequency-domain resource; generating the non-consecutive frequency-domain resources based on remaining RBs of the first candidate frequency-domain resource and the second candidate frequency-domain resource.

In an example, the to-be-excluded number is a remainder result of the total number of RBs and the control resource granularity; the control resource granularity is a first value, or the control resource granularity is a second value, the second value is smaller than the first value, and the second value is greater than 0; where when the control resource granularity is the second value, an aggregation level corresponding to the control resource granularity is greater than a preset aggregation level.

In an example, the first candidate frequency-domain resource includes at least one CCE, the second candidate frequency-domain resource includes at least one CCE, and for each CCE, the CCE includes at least one RB; when generating non-consecutive frequency-domain resources based on the first candidate frequency-domain resource and the second candidate frequency-domain resource, the determining module is specifically configured to perform operations including: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource; when the second candidate frequency-domain resource includes a second CCE, where part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource; generating the non-consecutive frequency-domain resources based on the first target frequency-domain resource and the second target frequency-domain resource.

In an example, the first candidate frequency-domain resource includes at least one CCE, the second candidate frequency-domain resource includes at least one CCE, and for each CCE, the CCE may include at least one RB; when generating non-consecutive frequency-domain resources based on the first candidate frequency-domain resource and the second candidate frequency-domain resource, the determining module is specifically configured to perform operations including: determining the first candidate frequency-domain resource and the second candidate frequency-domain resource as the non-consecutive frequency-domain resources; where after determining the first candidate frequency-domain resource and the second candidate frequency-domain resource as the non-consecutive frequency-domain resources, the determining module is further configured to perform operations including: when the first candidate frequency-domain resource includes a first CCE, where part of RBs of the first CCE are occupied by the overlapping resource, performing rate matching on data corresponding to the first CCE; when the second candidate frequency-domain resource includes a second CCE, where part of RBs of the second CCE are occupied by the overlapping resource, performing rate matching on data corresponding to the second CCE.

In an example, after determining the target PDCCH frequency-domain resource based on the non-consecutive frequency-domain resources, the determining module is further configured to perform operations including: when the target PDCCH frequency-domain resource needs to be interleaved, and the target PDCCH frequency-domain resource includes the non-consecutive frequency-domain resources, splicing the non-consecutive frequency-domain resources and then interleaving.

In an example, when determining the target PDCCH frequency-domain resource based on the candidate PDCCH frequency-domain resource, the determining module is specifically configured to perform operations including: receiving a PDCCH resource reconfiguration message, where the PDCCH resource reconfiguration message includes resource information corresponding to the non-consecutive frequency-domain resources, the non-consecutive frequency-domain resources are generated based on a first candidate frequency-domain resource and a second candidate frequency-domain resource in the candidate PDCCH frequency-domain resource by a base station; determining the target PDCCH frequency-domain resource based on the non-consecutive frequency-domain resources corresponding to the resource information.

In an example, when determining a target PDCCH frequency-domain resource and a target SBFD time-frequency resource based on the initial PDCCH frequency-domain resource and the initial SBFD time-frequency resource, the determining module is specifically configured to perform operations including: determining the initial SBFD time-frequency resource as the target SBFD time-frequency resource; and excluding the overlapping resource from the initial PDCCH frequency-domain resource to obtain a candidate PDCCH frequency-domain resource, and when the initial SBFD time-frequency resource includes a downlink sub-band, determining the target PDCCH frequency-domain resource based on the candidate PDCCH frequency-domain resource and a frequency-domain resource corresponding to the downlink sub-band.

In an example, when determining a target PDCCH frequency-domain resource and a target SBFD time-frequency resource based on the initial PDCCH frequency-domain resource and the initial SBFD time-frequency resource, the determining module is specifically configured to perform operations including: determining the target PDCCH frequency-domain resource based on the overlapping resource of the initial PDCCH frequency-domain resource and the initial SBFD time-frequency resource, and excluding the target PDCCH frequency-domain resource from the initial SBFD time-frequency resource to determine a remaining time-frequency resource as the target SBFD time-frequency resource.

In an example, the initial PDCCH frequency-domain resource and the initial SBFD time-frequency resource are in uplink slots or uplink symbols, and the initial SBFD time-frequency resource includes a downlink sub-band; or, the initial PDCCH frequency-domain resource and the initial SBFD time-frequency resource are in Flexible slots or Flexible symbols, the initial SBFD time-frequency resource includes a downlink sub-band, and the Flexible slots or the Flexible symbols are used for an uplink sub-band; or, the initial PDCCH frequency-domain resource and the initial SBFD time-frequency resource are in Flexible slots or Flexible symbols, the initial SBFD time-frequency resource includes a downlink sub-band, the Flexible slots or the Flexible symbols are used for a Flexible sub-band, and the Flexible sub-band is used for uplink.

In an example, when determining a target PDCCH frequency-domain resource and a target SBFD time-frequency resource based on the initial PDCCH frequency-domain resource and the initial SBFD time-frequency resource, the determining module is specifically configured to perform operations including: receiving a PDCCH resource reconfiguration message, where the PDCCH resource reconfiguration message may include resource information corresponding to the overlapping resource of the initial PDCCH frequency-domain resource and the initial SBFD time-frequency resource, and determining the target PDCCH frequency-domain resource based on the overlapping resource corresponding to the resource information; excluding the target PDCCH frequency-domain resource from the initial SBFD time-frequency resource, and determining a remaining time-frequency resource after excluding the target PDCCH frequency-domain resource as the target SBFD time-frequency resource.

In an example, when determining a target PDCCH frequency-domain resource and a target SBFD time-frequency resource based on the initial PDCCH frequency-domain resource and the initial SBFD time-frequency resource, the determining module is specifically configured to perform operations including: determining the initial PDCCH frequency-domain resource as the target PDCCH frequency-domain resource, and excluding the overlapping resource from the initial SBFD time-frequency resource to obtain the target SBFD time-frequency resource.

In an example, the initial PDCCH frequency-domain resource and the initial SBFD time-frequency resource are in downlink slots or downlink symbols, and the initial SBFD time-frequency resource includes at least one of an uplink sub-band or a guard sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, and the Flexible slots or the Flexible symbols are used for a downlink sub-band; or, the initial PDCCH frequency-domain resource and the initial SBFD time-frequency resource are in Flexible slots or Flexible symbols, the initial SBFD time-frequency resource includes at least one of an uplink sub-band or a guard sub-band, the Flexible slots or the Flexible symbols are used for a Flexible sub-band, and the Flexible sub-band is used for downlink.

In an example, when a target frame includes K downlink slots configured with the initial PDCCH frequency-domain resource in all slots of the target frame, and the initial PDCCH frequency-domain resource in M downlink slots overlaps with the initial SBFD time-frequency resource, M is smaller than K; when receiving downlink data corresponding to the PDCCH based on the target PDCCH frequency-domain resource, the transmitting module is specifically configured to perform operations including: receiving the downlink data corresponding to the PDCCH based on the target PDCCH frequency-domain resource in the K downlink slots; or, receiving the downlink data corresponding to the PDCCH based on the target PDCCH frequency-domain resource in the M downlink slots, and receiving the downlink data corresponding to the PDCCH on the initial PDCCH frequency-domain resource in remaining downlink slots rather than the M downlink slots.

In an example, the UE corresponds to N dedicated PDCCH frequency-domain resources and P dedicated PDCCH frequency-domain resources, the N dedicated PDCCH frequency-domain resources are initially configured PDCCH frequency-domain resources, and the P dedicated PDCCH frequency-domain resources are re-configured PDCCH frequency-domain resources; or, the UE corresponds to N dedicated PDCCH frequency-domain resources, the N dedicated PDCCH frequency-domain resources include initially configured PDCCH frequency-domain resources and re-configured PDCCH frequency-domain resources.

Based on a same inventive concept as the above method, an example of the present disclosure provides an electronic device (such as the base station). The electronic device includes a processor and a machine-readable storage medium, and the machine-readable storage medium stores machine-executable instructions that can be executed by the processor; the processor is used for executing machine-executable instructions to realize the data transmission method disclosed in the above examples of the present disclosure.

In an example, when the electronic device is a base station, when executing the machine-executable instruction, the processor is further configured to perform operations including: when there is an overlapping resource between an initial physical downlink control channel (PDCCH) frequency-domain resource of a PDCCH and an initial sub-band full-duplex (SBFD) time-frequency resource of SBFD, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource; sending downlink data corresponding to the PDCCH based on the target PDCCH frequency-domain resource, so that a user equipment (UE) receives the downlink data based on the target PDCCH frequency-domain resource determined by the UE. When the electronic device is a UE, when executing the machine-executable instruction, the processor is further configured to perform operations including: when there is an overlapping resource between an initial physical downlink control channel (PDCCH) frequency-domain resource of a PDCCH and an initial sub-band full-duplex (SBFD) time-frequency resource of SBFD, determining a target PDCCH frequency-domain resource and a target SBFD time-frequency resource based on the initial PDCCH frequency-domain resource and the initial SBFD time-frequency resource, where the target PDCCH frequency-domain resource does not overlap with the target SBFD time-frequency resource; and receiving downlink data corresponding to the PDCCH based on the target PDCCH frequency-domain resource.

In an example, when the electronic device is the base station or the UE, the processor is configured to perform operations including: determining the initial SBFD time-frequency resource as the target SBFD time-frequency resource, and excluding the overlapping resource from the initial PDCCH frequency-domain resource to obtain a candidate PDCCH frequency-domain resource, and determining the target PDCCH frequency-domain resource based on the candidate PDCCH frequency-domain resource.

In an example, when the electronic device is the base station or the UE, the processor is configured to perform operations including: when the candidate PDCCH frequency-domain resource includes a first candidate frequency-domain resource and a second candidate frequency-domain resource, determining a first target frequency-domain resource based on the first candidate frequency-domain resource, and determining a second target frequency-domain resource based on the second candidate frequency-domain resource; determining the target PDCCH frequency-domain resource based on the first target frequency-domain resource and the second target frequency-domain resource; where the first target frequency-domain resource and the second target frequency-domain resource are non-consecutive frequency-domain resources; the first target frequency-domain resource corresponds to a control resource set (CORESET), and the second target frequency-domain resource corresponds to another CORESET.

In an example, when the electronic device is the base station or the UE, the first candidate frequency-domain resource includes at least one control channel element (CCE), and for each CCE, a number of resource blocks (RB) in the CCE is related to control resource granularity; the processor is configured to perform operations including: determining a total number of RBs corresponding to the first candidate frequency-domain resource; determining a to-be-excluded number of RBs based on the total number of RBs and the control resource granularity, and excluding the to-be-excluded number of RBs from all RBs of the first candidate frequency-domain resource; generating the first target frequency-domain resource based on remaining RBs of the first candidate frequency-domain resource.

In an example, when the electronic device is the base station or the UE, the first candidate frequency-domain resource includes at least one control channel element (CCE), and for each CCE, the CCE includes at least one RB; the processor is configured to perform operations including: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

In an example, when the electronic device is the base station or the UE, the first candidate frequency-domain resource includes at least one control channel element (CCE), and for each CCE, the CCE includes at least one RB; the processor is configured to perform operations including: determining the first candidate frequency-domain resource as the first target frequency-domain resource, and when the first candidate frequency-domain resource includes a first CCE, where part of RBs of the first CCE are occupied by the overlapping resource, performing rate matching on data corresponding to the first CCE.

In an example, when the electronic device is the base station, the processor is configured to perform operations including: sending a PDCCH resource reconfiguration message to the UE, where the PDCCH resource reconfiguration message includes resource information corresponding to the target PDCCH frequency-domain resource; where the target PDCCH frequency-domain resource includes the first target frequency-domain resource and the second target frequency-domain resource, and the resource information includes resource information corresponding to the first target frequency-domain resource and resource information corresponding to the second target frequency-domain resource. When the electronic device is the UE, the processor is configured to perform operations including: receiving a PDCCH resource reconfiguration message, where the PDCCH resource reconfiguration message may include resource information corresponding to the first target frequency-domain resource and resource information corresponding to the second target frequency-domain resource; determining the first target frequency-domain resource based on the resource information corresponding to the first target frequency-domain resource; determining the second target frequency-domain resource based on the resource information corresponding to the second target frequency-domain resource; determining the target PDCCH frequency-domain resource based on the first target frequency-domain resource and the second target frequency-domain resource.

In an example, when the electronic device is the base station or the UE, the processor is configured to perform operations including: when the candidate PDCCH frequency-domain resource includes a first candidate frequency-domain resource and a second candidate frequency-domain resource, generating consecutive frequency-domain resources based on the first candidate frequency-domain resource and the second candidate frequency-domain resource; determining the target PDCCH frequency-domain resource based on the consecutive frequency-domain resources; where the consecutive frequency-domain resources correspond to one CORESET.

In an example, when the electronic device is the base station or the UE, the processor is configured to perform operations including: when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

In an example, when the electronic device is the base station, the processor is configured to perform operations including: sending a PDCCH resource reconfiguration message to the UE, where the PDCCH resource reconfiguration message includes resource information corresponding to the target PDCCH frequency-domain resource; where the target PDCCH frequency-domain resource includes the consecutive frequency-domain resources, and the resource information includes resource information corresponding to the consecutive frequency-domain resources. In an example, when the electronic device is the UE, the processor is configured to perform operations including: receiving a PDCCH resource reconfiguration message, where the PDCCH resource reconfiguration message includes resource information corresponding to the consecutive frequency-domain resources, the consecutive frequency-domain resources are generated based on a first candidate frequency-domain resource and a second candidate frequency-domain resource in the candidate PDCCH frequency-domain resource by a base station; determining the target PDCCH frequency-domain resource based on the consecutive frequency-domain resources corresponding to the resource information.

In an example, when the electronic device is the base station or the UE, the processor is configured to perform operations including: when the candidate PDCCH frequency-domain resource includes a first candidate frequency-domain resource and a second candidate frequency-domain resource, generating non-consecutive frequency-domain resources based on the first candidate frequency-domain resource and the second candidate frequency-domain resource; determining the target PDCCH frequency-domain resource based on the non-consecutive frequency-domain resources; where the non-consecutive frequency-domain resources correspond to one CORESET.

In an example, when the electronic device is the base station or the UE, the first candidate frequency-domain resource includes at least one CCE, the second candidate frequency-domain resource includes at least one CCE, and for each CCE, a number of RBs in the CCE is related to control resource granularity; the processor is configured to perform operations including: determining a total number of RBs corresponding to the first candidate frequency-domain resource and the second candidate frequency-domain resource; determining a to-be-excluded number of RBs based on the total number of RBs and the control resource granularity, and excluding the to-be-excluded number of RBs from all RBs of the first candidate frequency-domain resource and the second candidate frequency-domain resource; generating the non-consecutive frequency-domain resources based on remaining RBs of the first candidate frequency-domain resource and the second candidate frequency-domain resource.

In an example, when the electronic device is the base station or the UE, the first candidate frequency-domain resource includes at least one CCE, the second candidate frequency-domain resource includes at least one CCE, and for each CCE, the CCE includes at least one RB; the processor is configured to perform operations including: when the first candidate frequency-domain resource includes a first CCE, where part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource; when the second candidate frequency-domain resource includes a second CCE, where part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource; generating the non-consecutive frequency-domain resources based on the first target frequency-domain resource and the second target frequency-domain resource.

In an example, when the electronic device is the base station or the UE, the first candidate frequency-domain resource includes at least one CCE, the second candidate frequency-domain resource includes at least one CCE, and for each CCE, the CCE may include at least one RB; the processor is configured to perform operations including: determining the first candidate frequency-domain resource and the second candidate frequency-domain resource as the non-consecutive frequency-domain resources; when the first candidate frequency-domain resource includes a first CCE, where part of RBs of the first CCE are occupied by the overlapping resource, performing rate matching on data corresponding to the first CCE; when the second candidate frequency-domain resource includes a second CCE, where part of RBs of the second CCE are occupied by the overlapping resource, performing rate matching on data corresponding to the second CCE.

In an example, when the electronic device is the base station or the UE, the processor is configured to perform operations including: when the target PDCCH frequency-domain resource needs to be interleaved, and the target PDCCH frequency-domain resource includes the non-consecutive frequency-domain resources, splicing the non-consecutive frequency-domain resources and then interleaving.

In an example, when the electronic device is the base station, the processor is configured to perform operations including: sending a PDCCH resource reconfiguration message to the UE, where the PDCCH resource reconfiguration message includes resource information corresponding to the target PDCCH frequency-domain resource; where the target PDCCH frequency-domain resource includes the non-consecutive frequency-domain resources, and the resource information includes resource information corresponding to the non-consecutive frequency-domain resources. In an example, when the electronic device is the UE, the processor is configured to perform operations including: receiving a PDCCH resource reconfiguration message, where the PDCCH resource reconfiguration message includes resource information corresponding to the non-consecutive frequency-domain resources, the non-consecutive frequency-domain resources are generated based on a first candidate frequency-domain resource and a second candidate frequency-domain resource in the candidate PDCCH frequency-domain resource by a base station; determining the target PDCCH frequency-domain resource based on the non-consecutive frequency-domain resources corresponding to the resource information.

In an example, when the electronic device is the base station or the UE, the processor is configured to perform operations including: determining the initial SBFD time-frequency resource as the target SBFD time-frequency resource; excluding the overlapping resource from the initial PDCCH frequency-domain resource to obtain a candidate PDCCH frequency-domain resource, and when the initial SBFD time-frequency resource includes a downlink sub-band, determining the target PDCCH frequency-domain resource based on the candidate PDCCH frequency-domain resource and a frequency-domain resource corresponding to the downlink sub-band.

In an example, when the electronic device is the UE, the processor is configured to perform operations including: determining the target PDCCH frequency-domain resource based on the overlapping resource of the initial PDCCH frequency-domain resource and the initial SBFD time-frequency resource, and excluding the target PDCCH frequency-domain resource from the initial SBFD time-frequency resource to determine a remaining time-frequency resource as the target SBFD time-frequency resource.

In an example, when the electronic device is the base station, the processor is configured to perform operations including: sending a PDCCH resource reconfiguration message to the UE, where the PDCCH resource reconfiguration message includes resource information corresponding to the target PDCCH frequency-domain resource; where the target PDCCH frequency-domain resource includes the overlapping resource, and the resource information includes resource information corresponding to the overlapping resource. When the electronic device is the UE, the processor is configured to perform operations including: receiving a PDCCH resource reconfiguration message, where the PDCCH resource reconfiguration message includes resource information corresponding to the overlapping resource of the initial PDCCH frequency-domain resource and the initial SBFD time-frequency resource, and determining the target PDCCH frequency-domain resource based on the overlapping resource corresponding to the resource information; excluding the target PDCCH frequency-domain resource from the initial SBFD time-frequency resource, and determining a remaining time-frequency resource after excluding the target PDCCH frequency-domain resource as the target SBFD time-frequency resource.

In an example, when the electronic device is the base station or the UE, the processor is configured to perform operations including: determining the initial PDCCH frequency-domain resource as the target PDCCH frequency-domain resource, and excluding the overlapping resource from the initial SBFD time-frequency resource to obtain the target SBFD time-frequency resource.

In an example, when the electronic device is the base station, when a target frame includes K downlink slots configured with the initial PDCCH frequency-domain resource in all slots of the target frame, and the initial PDCCH frequency-domain resource in M downlink slots overlaps with the initial SBFD time-frequency resource, M is smaller than K; the processor is configured to perform operations including: sending the downlink data corresponding to the PDCCH based on the target PDCCH frequency-domain resource in the K downlink slots; or, sending the downlink data corresponding to the PDCCH based on the target PDCCH frequency-domain resource in the M downlink slots, and sending the downlink data corresponding to the PDCCH on the initial PDCCH frequency-domain resource in remaining downlink slots rather than the M downlink slots. In an example, when the electronic device is the UE, the processor is configured to perform operations including: receiving the downlink data corresponding to the PDCCH based on the target PDCCH frequency-domain resource in the K downlink slots; or, receiving the downlink data corresponding to the PDCCH based on the target PDCCH frequency-domain resource in the M downlink slots, and receiving the downlink data corresponding to the PDCCH on the initial PDCCH frequency-domain resource in remaining downlink slots rather than the M downlink slots.

In an example, when the electronic device is the UE, the UE corresponds to N dedicated PDCCH frequency-domain resources and P dedicated PDCCH frequency-domain resources, the N dedicated PDCCH frequency-domain resources are initially configured PDCCH frequency-domain resources, and the P dedicated PDCCH frequency-domain resources are re-configured PDCCH frequency-domain resources; or, the UE corresponds to N dedicated PDCCH frequency-domain resources, the N dedicated PDCCH frequency-domain resources include initially configured PDCCH frequency-domain resources and re-configured PDCCH frequency-domain resources.

Based on a same inventive concept as the above method, an example of the present disclosure also provides a machine-readable storage medium, on which a number of computer instructions are stored, which, when executed by a processor, can realize the data transmission method disclosed in the above example of the present disclosure.

The machine-readable storage medium can be any electronic, magnetic, optical or other physical storage apparatus, and can contain or store information, such as executable instructions, data, and so on. For example, the machine-readable storage medium may be: RAM (Random Access Memory), volatile memory, non-volatile memory, flash memory, storage drive (such as hard disk drive), solid state disk, any type of storage disk (such as optical disk, dvd, etc.), or similar storage medium, or a combination thereof.

The systems, apparatuses, modules or units set forth in the above embodiments can be realized by computer entities, or by products with certain functions. A typical implementation device is a computer, and the specific form of the computer can be a personal computer, a laptop computer, a cellular phone, a camera phone, a smart phone, a personal digital assistant, a media player, a navigation device, an email transceiver, a game console, a tablet computer, a wearable device or a combination of any of these devices.

For the convenience of description, when describing the above devices, the functions are divided into various units and described separately. Of course, functions of each unit can be realized in one or more pieces of software and/or hardware when the disclosure is implemented.

It should be understood by those skilled in the art that embodiments of the present disclosure can be provided as a method, a system, or a computer program product. Therefore, the present disclosure can take a form of an entirely hardware embodiment, an entirely software embodiment, or an embodiment combining software and hardware aspects. Furthermore, embodiments of the present disclosure may take a form of computer program products implemented on one or more computer-usable storage media (including but not limited to disk storage, CD-ROM, optical storage, etc.) containing computer-usable program codes.

The present disclosure is described with reference to flowcharts and/or block diagrams of methods, devices (systems), and computer program products according to embodiments of the present disclosure. It should be understood that each flow and/or block in the flowchart and/or block diagram, and combinations of the flow and/or block in the flowchart and/or block diagram can be implemented by computer program instructions. These computer program instructions may be provided to a processor of a general-purpose computer, special-purpose computer, embedded processor or other programmable data processing apparatus to produce a machine, such that the instructions which are executed by the processor of the computer or other programmable data processing apparatus produce means for implementing the functions specified in the flowchart flow or flows and/or block or blocks in the block diagram.

Moreover, these computer program instructions can also be stored in a computer-readable memory that can direct a computer or other programmable data processing apparatus to work in a specific manner, so that the instructions stored in the computer-readable memory produce an article of manufacture including instruction means that implement the functions specified in one flow or multiple flows of the flowchart and/or one block or multiple blocks of the block diagram.

These computer program instructions may also be loaded onto a computer or other programmable data processing apparatus, such that a series of operational steps are performed on the computer or other programmable apparatus to produce a computer-implemented process, such that the instructions executed on the computer or other programmable apparatus provide steps for implementing the functions specified in the flowchart flow or flows and/or block or blocks of the block diagram.

The above are only examples of the present disclosure, and are not used to limit the present disclosure. Various modifications and variations will occur to those skilled in the art. Any modification, equivalent substitution, improvement, etc., made within the spirit and principle of the present disclosure should be included in the scope of the claims of the present disclosure.

## Claims

1. A data transmission method, performed by a base station, comprising:
when there is an overlapping resource between an initial physical downlink control channel (PDCCH) frequency-domain resource of a PDCCH and an initial sub-band full-duplex (SBFD) time-frequency resource of SBFD, determining a target PDCCH frequency-domain resource and a target SBFD time-frequency resource based on the initial PDCCH frequency-domain resource and the initial SBFD time-frequency resource, wherein the target PDCCH frequency-domain resource does not overlap with the target SBFD time-frequency resource; and
sending downlink data corresponding to the PDCCH based on the target PDCCH frequency-domain resource, so that a user equipment (UE) receives the downlink data based on the target PDCCH frequency-domain resource determined by the UE.

2. The method according to claim 1, wherein
determining a target PDCCH frequency-domain resource and a target SBFD time-frequency resource based on the initial PDCCH frequency-domain resource and the initial SBFD time-frequency resource comprises:
determining the initial SBFD time-frequency resource as the target SBFD time-frequency resource; and
excluding the overlapping resource from the initial PDCCH frequency-domain resource to obtain a candidate PDCCH frequency-domain resource, and determining the target PDCCH frequency-domain resource based on the candidate PDCCH frequency-domain resource.

3. The method according to claim 2, wherein
the initial PDCCH frequency-domain resource and the initial SBFD time-frequency resource are in downlink slots or downlink symbols, and the initial SBFD time-frequency resource comprises at least one of an uplink sub-band or a guard sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, and the Flexible slots or the Flexible symbols are used for a downlink sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, the Flexible slots or the Flexible symbols are used for a Flexible sub-band, and the Flexible sub-band is used for downlink.

4. The method according to claim 2 or 3, wherein
determining the target PDCCH frequency-domain resource based on the candidate PDCCH frequency-domain resource comprises:
when the candidate PDCCH frequency-domain resource comprises a first candidate frequency-domain resource and a second candidate frequency-domain resource, determining a first target frequency-domain resource based on the first candidate frequency-domain resource, and determining a second target frequency-domain resource based on the second candidate frequency-domain resource; and
determining the target PDCCH frequency-domain resource based on the first target frequency-domain resource and the second target frequency-domain resource; wherein the first target frequency-domain resource and the second target frequency-domain resource are non-consecutive frequency-domain resources; the first target frequency-domain resource corresponds to a control resource set (CORESET), and the second target frequency-domain resource corresponds to another CORESET.

5. The method according to claim 4, wherein the first candidate frequency-domain resource comprises at least one control channel element (CCE), and for each CCE, a number of resource blocks (RB) in the CCE is related to control resource granularity;
determining a first target frequency-domain resource based on the first candidate frequency-domain resource comprises:
determining a total number of RBs corresponding to the first candidate frequency-domain resource;
determining a to-be-excluded number of RBs based on the total number of RBs and the control resource granularity, and excluding the to-be-excluded number of RBs from all RBs of the first candidate frequency-domain resource; and
generating the first target frequency-domain resource based on remaining RBs of the first candidate frequency-domain resource.

6. The method according to claim 5, wherein
the to-be-excluded number is a remainder result of the total number of RBs and the control resource granularity;
the control resource granularity is a first value, or the control resource granularity is a second value, the second value is smaller than the first value, and the second value is greater than 0; wherein when the control resource granularity is the second value, an aggregation level corresponding to the control resource granularity is greater than a preset aggregation level.

7. The method according to claim 4, wherein the first candidate frequency-domain resource comprises at least one CCE, and for each CCE, the CCE comprises at least one RB;
determining a first target frequency-domain resource based on the first candidate frequency-domain resource comprises:
when the first candidate frequency-domain resource comprises a first CCE, wherein part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

8. The method according to claim 4, wherein the first candidate frequency-domain resource comprises at least one CCE, and for each CCE, the CCE comprises at least one RB;
determining a first target frequency-domain resource based on the first candidate frequency-domain resource comprises:
determining the first candidate frequency-domain resource as the first target frequency-domain resource;
wherein after determining the first candidate frequency-domain resource as the first target frequency-domain resource, the method further comprises: when the first candidate frequency-domain resource comprises a first CCE, wherein part of RBs of the first CCE are occupied by the overlapping resource, performing rate matching on data corresponding to the first CCE.

9. The method according to claim 4, wherein after determining the target PDCCH frequency-domain resource based on the first target frequency-domain resource and the second target frequency-domain resource, the method further comprises:
sending a PDCCH resource reconfiguration message to the UE, wherein the PDCCH resource reconfiguration message comprises resource information corresponding to the target PDCCH frequency-domain resource; wherein the target PDCCH frequency-domain resource comprises the first target frequency-domain resource and the second target frequency-domain resource, and the resource information comprises resource information corresponding to the first target frequency-domain resource and resource information corresponding to the second target frequency-domain resource.

10. The method according to claim 2 or 3, wherein
determining the target PDCCH frequency-domain resource based on the candidate PDCCH frequency-domain resource comprises:
when the candidate PDCCH frequency-domain resource comprises a first candidate frequency-domain resource and a second candidate frequency-domain resource, generating consecutive frequency-domain resources based on the first candidate frequency-domain resource and the second candidate frequency-domain resource; and
determining the target PDCCH frequency-domain resource based on the consecutive frequency-domain resources; wherein the consecutive frequency-domain resources correspond to one CORESET.

11. The method according to claim 10, wherein
generating consecutive frequency-domain resources based on the first candidate frequency-domain resource and the second candidate frequency-domain resource comprises:
when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; and
when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

12. The method according to claim 10, wherein after determining the target PDCCH frequency-domain resource based on the consecutive frequency-domain resources, the method further comprises:
sending a PDCCH resource reconfiguration message to the UE, wherein the PDCCH resource reconfiguration message comprises resource information corresponding to the target PDCCH frequency-domain resource; wherein the target PDCCH frequency-domain resource comprises the consecutive frequency-domain resources, and the resource information comprises resource information corresponding to the consecutive frequency-domain resources.

13. The method according to claim 2 or 3, wherein
determining the target PDCCH frequency-domain resource based on the candidate PDCCH frequency-domain resource comprises:
when the candidate PDCCH frequency-domain resource comprises a first candidate frequency-domain resource and a second candidate frequency-domain resource, generating non-consecutive frequency-domain resources based on the first candidate frequency-domain resource and the second candidate frequency-domain resource; and
determining the target PDCCH frequency-domain resource based on the non-consecutive frequency-domain resources; wherein the non-consecutive frequency-domain resources correspond to one CORESET.

14. The method according to claim 13, wherein
the first candidate frequency-domain resource comprises at least one CCE, the second candidate frequency-domain resource comprises at least one CCE, and for each CCE, a number of RBs in the CCE is related to control resource granularity;
generating non-consecutive frequency-domain resources based on the first candidate frequency-domain resource and the second candidate frequency-domain resource comprises:
determining a total number of RBs corresponding to the first candidate frequency-domain resource and the second candidate frequency-domain resource;
determining a to-be-excluded number of RBs based on the total number of RBs and the control resource granularity, and excluding the to-be-excluded number of RBs from all RBs of the first candidate frequency-domain resource and the second candidate frequency-domain resource; and
generating the non-consecutive frequency-domain resources based on remaining RBs of the first candidate frequency-domain resource and the second candidate frequency-domain resource.

15. The method according to claim 14, wherein
the to-be-excluded number is a remainder result of the total number of RBs and the control resource granularity;
the control resource granularity is a first value, or the control resource granularity is a second value, the second value is smaller than the first value, and the second value is greater than 0; wherein when the control resource granularity is the second value, an aggregation level corresponding to the control resource granularity is greater than a preset aggregation level.

16. The method according to claim 13, wherein
the first candidate frequency-domain resource comprises at least one CCE, the second candidate frequency-domain resource comprises at least one CCE, and for each CCE, the CCE comprises at least one RB;
generating non-consecutive frequency-domain resources based on the first candidate frequency-domain resource and the second candidate frequency-domain resource comprises:
when the first candidate frequency-domain resource comprises a first CCE, wherein part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource;
when the second candidate frequency-domain resource comprises a second CCE, wherein part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource; and
generating the non-consecutive frequency-domain resources based on the first target frequency-domain resource and the second target frequency-domain resource.

17. The method according to claim 13, wherein
the first candidate frequency-domain resource comprises at least one CCE, the second candidate frequency-domain resource comprises at least one CCE, and for each CCE, the CCE comprises at least one RB;
generating non-consecutive frequency-domain resources based on the first candidate frequency-domain resource and the second candidate frequency-domain resource comprises:
determining the first candidate frequency-domain resource and the second candidate frequency-domain resource as the non-consecutive frequency-domain resources;
wherein after determining the first candidate frequency-domain resource and the second candidate frequency-domain resource as the non-consecutive frequency-domain resources, the method further comprises: when the first candidate frequency-domain resource comprises a first CCE, wherein part of RBs of the first CCE are occupied by the overlapping resource, performing rate matching on data corresponding to the first CCE; when the second candidate frequency-domain resource comprises a second CCE, wherein part of RBs of the second CCE are occupied by the overlapping resource, performing rate matching on data corresponding to the second CCE.

18. The method according to claim 13, wherein after determining the target PDCCH frequency-domain resource based on the non-consecutive frequency-domain resources, the method further comprises:
when the target PDCCH frequency-domain resource needs to be interleaved, and the target PDCCH frequency-domain resource comprises the non-consecutive frequency-domain resources, splicing the non-consecutive frequency-domain resources and then interleaving.

19. The method according to claim 13, wherein after determining the target PDCCH frequency-domain resource based on the non-consecutive frequency-domain resources, the method further comprises:
sending a PDCCH resource reconfiguration message to the UE, wherein the PDCCH resource reconfiguration message comprises resource information corresponding to the target PDCCH frequency-domain resource; wherein the target PDCCH frequency-domain resource comprises the non-consecutive frequency-domain resources, and the resource information comprises resource information corresponding to the non-consecutive frequency-domain resources.

20. The method according to claim 1, wherein
determining a target PDCCH frequency-domain resource and a target SBFD time-frequency resource based on the initial PDCCH frequency-domain resource and the initial SBFD time-frequency resource comprises:
determining the initial SBFD time-frequency resource as the target SBFD time-frequency resource; and
excluding the overlapping resource from the initial PDCCH frequency-domain resource to obtain a candidate PDCCH frequency-domain resource, and when the initial SBFD time-frequency resource comprises a downlink sub-band, determining the target PDCCH frequency-domain resource based on the candidate PDCCH frequency-domain resource and a frequency-domain resource corresponding to the downlink sub-band.

21. The method according to claim 1, wherein
determining a target PDCCH frequency-domain resource and a target SBFD time-frequency resource based on the initial PDCCH frequency-domain resource and the initial SBFD time-frequency resource comprises:
determining the target PDCCH frequency-domain resource based on the overlapping resource of the initial PDCCH frequency-domain resource and the initial SBFD time-frequency resource, and excluding the target PDCCH frequency-domain resource from the initial SBFD time-frequency resource to determine a remaining time-frequency resource as the target SBFD time-frequency resource.

22. The method according to claim 21, wherein
the initial PDCCH frequency-domain resource and the initial SBFD time-frequency resource are in uplink slots or uplink symbols, and the initial SBFD time-frequency resource comprises a downlink sub-band; or,
the initial PDCCH frequency-domain resource and the initial SBFD time-frequency resource are in Flexible slots or Flexible symbols, the initial SBFD time-frequency resource comprises a downlink sub-band, and the Flexible slots or the Flexible symbols are used for an uplink sub-band; or,
the initial PDCCH frequency-domain resource and the initial SBFD time-frequency resource are in Flexible slots or Flexible symbols, the initial SBFD time-frequency resource comprises a downlink sub-band, the Flexible slots or the Flexible symbols are used for a Flexible sub-band, and the Flexible sub-band is used for uplink.

23. The method according to claim 21 or 22, wherein
after determining the target PDCCH frequency-domain resource based on the overlapping resource of the initial PDCCH frequency-domain resource and the initial SBFD time-frequency resource, the method further comprises:
sending a PDCCH resource reconfiguration message to the UE, wherein the PDCCH resource reconfiguration message comprises resource information corresponding to the target PDCCH frequency-domain resource; wherein the target PDCCH frequency-domain resource comprises the overlapping resource, and the resource information comprises resource information corresponding to the overlapping resource.

24. The method according to claim 1, wherein
determining a target PDCCH frequency-domain resource and a target SBFD time-frequency resource based on the initial PDCCH frequency-domain resource and the initial SBFD time-frequency resource comprises:
determining the initial PDCCH frequency-domain resource as the target PDCCH frequency-domain resource, and excluding the overlapping resource from the initial SBFD time-frequency resource to obtain the target SBFD time-frequency resource.

25. The method according to claim 24, wherein
the initial PDCCH frequency-domain resource and the initial SBFD time-frequency resource are in downlink slots or downlink symbols, and the initial SBFD time-frequency resource comprises at least one of an uplink sub-band or a guard sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, and the Flexible slots or the Flexible symbols are used for a downlink sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, the Flexible slots or the Flexible symbols are used for a Flexible sub-band, and the Flexible sub-band is used for downlink.

26. The method according to claim 1, wherein when a target frame comprises K downlink slots configured with the initial PDCCH frequency-domain resource in all slots of the target frame, and the initial PDCCH frequency-domain resource in M downlink slots overlaps with the initial SBFD time-frequency resource, M is smaller than K;
sending downlink data corresponding to the PDCCH based on the target PDCCH frequency-domain resource comprises:
sending the downlink data corresponding to the PDCCH based on the target PDCCH frequency-domain resource in the K downlink slots; or,
sending the downlink data corresponding to the PDCCH based on the target PDCCH frequency-domain resource in the M downlink slots, and sending the downlink data corresponding to the PDCCH on the initial PDCCH frequency-domain resource in remaining downlink slots rather than the M downlink slots.

27. The method according to claim 1, wherein
the UE corresponds to N dedicated PDCCH frequency-domain resources and P dedicated PDCCH frequency-domain resources, the N dedicated PDCCH frequency-domain resources are initially configured PDCCH frequency-domain resources, and the P dedicated PDCCH frequency-domain resources are re-configured PDCCH frequency-domain resources; or,
the UE corresponds to N dedicated PDCCH frequency-domain resources, the N dedicated PDCCH frequency-domain resources comprise initially configured PDCCH frequency-domain resources and re-configured PDCCH frequency-domain resources.

28. A data transmission method, performed by a user equipment (UE), comprising:
when there is an overlapping resource between an initial physical downlink control channel (PDCCH) frequency-domain resource of a PDCCH and an initial sub-band full-duplex (SBFD) time-frequency resource of SBFD, determining a target PDCCH frequency-domain resource and a target SBFD time-frequency resource based on the initial PDCCH frequency-domain resource and the initial SBFD time-frequency resource, wherein the target PDCCH frequency-domain resource does not overlap with the target SBFD time-frequency resource; and
receiving downlink data corresponding to the PDCCH based on the target PDCCH frequency-domain resource.

29. The method according to claim 28, wherein
determining a target PDCCH frequency-domain resource and a target SBFD time-frequency resource based on the initial PDCCH frequency-domain resource and the initial SBFD time-frequency resource comprises:
determining the initial SBFD time-frequency resource as the target SBFD time-frequency resource; and
excluding the overlapping resource from the initial PDCCH frequency-domain resource to obtain a candidate PDCCH frequency-domain resource, and determining the target PDCCH frequency-domain resource based on the candidate PDCCH frequency-domain resource.

30. The method according to claim 29, wherein
the initial PDCCH frequency-domain resource and the initial SBFD time-frequency resource are in downlink slots or downlink symbols, and the initial SBFD time-frequency resource comprises at least one of an uplink sub-band or a guard sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, and the Flexible slots or the Flexible symbols are used for a downlink sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, the Flexible slots or the Flexible symbols are used for a Flexible sub-band, and the Flexible sub-band is used for downlink.

31. The method according to claim 29 or 30, wherein
determining the target PDCCH frequency-domain resource based on the candidate PDCCH frequency-domain resource comprises:
when the candidate PDCCH frequency-domain resource comprises a first candidate frequency-domain resource and a second candidate frequency-domain resource, determining a first target frequency-domain resource and a second target frequency-domain resource; and
determining the target PDCCH frequency-domain resource based on the first target frequency-domain resource and the second target frequency-domain resource; wherein the first target frequency-domain resource and the second target frequency-domain resource are non-consecutive frequency-domain resources, the first target frequency-domain resource is determined based on the first candidate frequency-domain resource, the second target frequency-domain resource is determined based on the second candidate frequency-domain resource; the first target frequency-domain resource corresponds to a control resource set (CORESET), and the second target frequency-domain resource corresponds to another CORESET.

32. The method according to claim 31, wherein the first candidate frequency-domain resource comprises at least one control channel element (CCE), and for each CCE, a number of resource blocks (RB) in the CCE is related to control resource granularity;
determining a first target frequency-domain resource based on the first candidate frequency-domain resource comprises:
determining a total number of RBs corresponding to the first candidate frequency-domain resource;
determining a to-be-excluded number of RBs based on the total number of RBs and the control resource granularity, and excluding the to-be-excluded number of RBs from all RBs of the first candidate frequency-domain resource; and
generating the first target frequency-domain resource based on remaining RBs of the first candidate frequency-domain resource.

33. The method according to claim 32, wherein
the to-be-excluded number is a remainder result of the total number of RBs and the control resource granularity;
the control resource granularity is a first value, or the control resource granularity is a second value, the second value is smaller than the first value, and the second value is greater than 0; wherein when the control resource granularity is the second value, an aggregation level corresponding to the control resource granularity is greater than a preset aggregation level.

34. The method according to claim 31, wherein the first candidate frequency-domain resource comprises at least one CCE, and for each CCE, the CCE comprises at least one RB;
determining a first target frequency-domain resource based on the first candidate frequency-domain resource comprises:
when the first candidate frequency-domain resource comprises a first CCE, wherein part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

35. The method according to claim 31, wherein the first candidate frequency-domain resource comprises at least one CCE, and for each CCE, the CCE comprises at least one RB;
determining a first target frequency-domain resource based on the first candidate frequency-domain resource comprises:
determining the first candidate frequency-domain resource as the first target frequency-domain resource;
wherein after determining the first candidate frequency-domain resource as the first target frequency-domain resource, the method further comprises: when the first candidate frequency-domain resource comprises a first CCE, wherein part of RBs of the first CCE are occupied by the overlapping resource, performing rate matching on data corresponding to the first CCE.

36. The method according to claim 31, wherein
determining the first target frequency-domain resource and the second target frequency-domain resource, and determining the target PDCCH frequency-domain resource based on the first target frequency-domain resource and the second target frequency-domain resource comprises:
receiving a PDCCH resource reconfiguration message, wherein the PDCCH resource reconfiguration message comprises resource information corresponding to the first target frequency-domain resource and resource information corresponding to the second target frequency-domain resource;
determining the first target frequency-domain resource based on the resource information corresponding to the first target frequency-domain resource; determining the second target frequency-domain resource based on the resource information corresponding to the second target frequency-domain resource; determining the target PDCCH frequency-domain resource based on the first target frequency-domain resource and the second target frequency-domain resource.

37. The method according to claim 29 or 30, wherein
determining the target PDCCH frequency-domain resource based on the candidate PDCCH frequency-domain resource comprises:
when the candidate PDCCH frequency-domain resource comprises a first candidate frequency-domain resource and a second candidate frequency-domain resource, generating consecutive frequency-domain resources based on the first candidate frequency-domain resource and the second candidate frequency-domain resource; and
determining the target PDCCH frequency-domain resource based on the consecutive frequency-domain resources; wherein the consecutive frequency-domain resources correspond to one CORESET.

38. The method according to claim 37, wherein
generating consecutive frequency-domain resources based on the first candidate frequency-domain resource and the second candidate frequency-domain resource comprises:
when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; and
when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

39. The method according to claim 29 or 30, wherein
determining the target PDCCH frequency-domain resource based on the candidate PDCCH frequency-domain resource comprises:
receiving a PDCCH resource reconfiguration message, wherein the PDCCH resource reconfiguration message comprises resource information corresponding to the consecutive frequency-domain resources, the consecutive frequency-domain resources are generated based on a first candidate frequency-domain resource and a second candidate frequency-domain resource in the candidate PDCCH frequency-domain resource by a base station; and
determining the target PDCCH frequency-domain resource based on the consecutive frequency-domain resource corresponding to the resource information.

40. The method according to claim 29 or 30, wherein
determining the target PDCCH frequency-domain resource based on the candidate PDCCH frequency-domain resource comprises:
when the candidate PDCCH frequency-domain resource comprises a first candidate frequency-domain resource and a second candidate frequency-domain resource, generating non-consecutive frequency-domain resources based on the first candidate frequency-domain resource and the second candidate frequency-domain resource; and
determining the target PDCCH frequency-domain resource based on the non-consecutive frequency-domain resources; wherein the non-consecutive frequency-domain resources correspond to one CORESET.

41. The method according to claim 40, wherein
the first candidate frequency-domain resource comprises at least one CCE, the second candidate frequency-domain resource comprises at least one CCE, and for each CCE, a number of RBs in the CCE is related to control resource granularity;
generating non-consecutive frequency-domain resources based on the first candidate frequency-domain resource and the second candidate frequency-domain resource comprises:
determining a total number of RBs corresponding to the first candidate frequency-domain resource and the second candidate frequency-domain resource;
determining a to-be-excluded number of RBs based on the total number of RBs and the control resource granularity, and excluding the to-be-excluded number of RBs from all RBs of the first candidate frequency-domain resource and the second candidate frequency-domain resource; and
generating the non-consecutive frequency-domain resources based on remaining RBs of the first candidate frequency-domain resource and the second candidate frequency-domain resource.

42. The method according to claim 41, wherein
the to-be-excluded number is a remainder result of the total number of RBs and the control resource granularity;
the control resource granularity is a first value, or the control resource granularity is a second value, the second value is smaller than the first value, and the second value is greater than 0; wherein when the control resource granularity is the second value, an aggregation level corresponding to the control resource granularity is greater than a preset aggregation level.

43. The method according to claim 40, wherein
the first candidate frequency-domain resource comprises at least one CCE, the second candidate frequency-domain resource comprises at least one CCE, and for each CCE, the CCE comprises at least one RB;
generating non-consecutive frequency-domain resources based on the first candidate frequency-domain resource and the second candidate frequency-domain resource comprises:
when the first candidate frequency-domain resource comprises a first CCE, wherein part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource;
when the second candidate frequency-domain resource comprises a second CCE, wherein part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource; and
generating the non-consecutive frequency-domain resources based on the first target frequency-domain resource and the second target frequency-domain resource.

44. The method according to claim 40, wherein
the first candidate frequency-domain resource comprises at least one CCE, the second candidate frequency-domain resource comprises at least one CCE, and for each CCE, the CCE comprises at least one RB;
generating non-consecutive frequency-domain resources based on the first candidate frequency-domain resource and the second candidate frequency-domain resource comprises:
determining the first candidate frequency-domain resource and the second candidate frequency-domain resource as the non-consecutive frequency-domain resources;
wherein after determining the first candidate frequency-domain resource and the second candidate frequency-domain resource as the non-consecutive frequency-domain resources, the method further comprises: when the first candidate frequency-domain resource comprises a first CCE, wherein part of RBs of the first CCE are occupied by the overlapping resource, performing rate matching on data corresponding to the first CCE; when the second candidate frequency-domain resource comprises a second CCE, wherein part of RBs of the second CCE are occupied by the overlapping resource, performing rate matching on data corresponding to the second CCE.

45. The method according to claim 40, wherein after determining the target PDCCH frequency-domain resource based on the non-consecutive frequency-domain resources, the method further comprises:
when the target PDCCH frequency-domain resource needs to be interleaved, and the target PDCCH frequency-domain resource comprises the non-consecutive frequency-domain resources, splicing the non-consecutive frequency-domain resources and then interleaving.

46. The method according to claim 29 or 30, wherein
determining the target PDCCH frequency-domain resource based on the candidate PDCCH frequency-domain resource comprises:
receiving a PDCCH resource reconfiguration message, wherein the PDCCH resource reconfiguration message comprises resource information corresponding to the non-consecutive frequency-domain resources, the non-consecutive frequency-domain resources are generated based on a first candidate frequency-domain resource and a second candidate frequency-domain resource in the candidate PDCCH frequency-domain resource by a base station; and
determining the target PDCCH frequency-domain resource based on the non-consecutive frequency-domain resources corresponding to the resource information.

47. The method according to claim 28, wherein
determining a target PDCCH frequency-domain resource and a target SBFD time-frequency resource based on the initial PDCCH frequency-domain resource and the initial SBFD time-frequency resource comprises:
determining the initial SBFD time-frequency resource as the target SBFD time-frequency resource; and
excluding the overlapping resource from the initial PDCCH frequency-domain resource to obtain a candidate PDCCH frequency-domain resource, and when the initial SBFD time-frequency resource comprises a downlink sub-band, determining the target PDCCH frequency-domain resource based on the candidate PDCCH frequency-domain resource and a frequency-domain resource corresponding to the downlink sub-band.

48. The method according to claim 28, wherein
determining a target PDCCH frequency-domain resource and a target SBFD time-frequency resource based on the initial PDCCH frequency-domain resource and the initial SBFD time-frequency resource comprises:
determining the target PDCCH frequency-domain resource based on the overlapping resource of the initial PDCCH frequency-domain resource and the initial SBFD time-frequency resource, and excluding the target PDCCH frequency-domain resource from the initial SBFD time-frequency resource to determine a remaining time-frequency resource as the target SBFD time-frequency resource.

49. The method according to claim 48, wherein
the initial PDCCH frequency-domain resource and the initial SBFD time-frequency resource are in uplink slots or uplink symbols, and the initial SBFD time-frequency resource comprises a downlink sub-band; or,
the initial PDCCH frequency-domain resource and the initial SBFD time-frequency resource are in Flexible slots or Flexible symbols, the initial SBFD time-frequency resource comprises a downlink sub-band, and the Flexible slots or the Flexible symbols are used for an uplink sub-band; or,
the initial PDCCH frequency-domain resource and the initial SBFD time-frequency resource are in Flexible slots or Flexible symbols, the initial SBFD time-frequency resource comprises a downlink sub-band, the Flexible slots or the Flexible symbols are used for a Flexible sub-band, and the Flexible sub-band is used for uplink.

50. The method according to claim 28, wherein
determining a target PDCCH frequency-domain resource and a target SBFD time-frequency resource based on the initial PDCCH frequency-domain resource and the initial SBFD time-frequency resource comprises:
receiving a PDCCH resource reconfiguration message, wherein the PDCCH resource reconfiguration message comprises resource information corresponding to the overlapping resource of the initial PDCCH frequency-domain resource and the initial SBFD time-frequency resource, and determining the target PDCCH frequency-domain resource based on the overlapping resource corresponding to the resource information; and
excluding the target PDCCH frequency-domain resource from the initial SBFD time-frequency resource, and determining a remaining time-frequency resource after excluding the target PDCCH frequency-domain resource as the target SBFD time-frequency resource.

51. The method according to claim 28, wherein
determining a target PDCCH frequency-domain resource and a target SBFD time-frequency resource based on the initial PDCCH frequency-domain resource and the initial SBFD time-frequency resource comprises:
determining the initial PDCCH frequency-domain resource as the target PDCCH frequency-domain resource, and excluding the overlapping resource from the initial SBFD time-frequency resource to obtain the target SBFD time-frequency resource.

52. The method according to claim 51, wherein
the initial PDCCH frequency-domain resource and the initial SBFD time-frequency resource are in downlink slots or downlink symbols, and the initial SBFD time-frequency resource comprises at least one of an uplink sub-band or a guard sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, and the Flexible slots or the Flexible symbols are used for a downlink sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, the Flexible slots or the Flexible symbols are used for a Flexible sub-band, and the Flexible sub-band is used for downlink.

53. The method according to claim 28, wherein when a target frame comprises K downlink slots configured with the initial PDCCH frequency-domain resource in all slots of the target frame, and the initial PDCCH frequency-domain resource in M downlink slots overlaps with the initial SBFD time-frequency resource, M is smaller than K;
receiving downlink data corresponding to the PDCCH based on the target PDCCH frequency-domain resource comprises:
receiving the downlink data corresponding to the PDCCH based on the target PDCCH frequency-domain resource in the K downlink slots; or,
receiving the downlink data corresponding to the PDCCH based on the target PDCCH frequency-domain resource in the M downlink slots, and receiving the downlink data corresponding to the PDCCH on the initial PDCCH frequency-domain resource in remaining downlink slots rather than the M downlink slots.

54. The method according to claim 28, wherein
the UE corresponds to N dedicated PDCCH frequency-domain resources and P dedicated PDCCH frequency-domain resources, the N dedicated PDCCH frequency-domain resources are initially configured PDCCH frequency-domain resources, and the P dedicated PDCCH frequency-domain resources are re-configured PDCCH frequency-domain resources; or,
the UE corresponds to N dedicated PDCCH frequency-domain resources, the N dedicated PDCCH frequency-domain resources comprise initially configured PDCCH frequency-domain resources and re-configured PDCCH frequency-domain resources.

55. A data transmission apparatus, applied to a base station, comprising:
a determining module, configured to, when there is an overlapping resource between an initial physical downlink control channel (PDCCH) frequency-domain resource of a PDCCH and an initial sub-band full-duplex (SBFD) time-frequency resource of SBFD, determine a target PDCCH frequency-domain resource and a target SBFD time-frequency resource based on the initial PDCCH frequency-domain resource and the initial SBFD time-frequency resource, wherein the target PDCCH frequency-domain resource does not overlap with the target SBFD time-frequency resource; and
a transmitting module, configured to send downlink data corresponding to the PDCCH based on the target PDCCH frequency-domain resource, so that a user equipment (UE) receives the downlink data based on the target PDCCH frequency-domain resource determined by the UE.

56. The apparatus according to claim 55, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
determining the initial SBFD time-frequency resource as the target SBFD time-frequency resource; and
excluding the overlapping resource from the initial PDCCH frequency-domain resource to obtain a candidate PDCCH frequency-domain resource, and determining the target PDCCH frequency-domain resource based on the candidate PDCCH frequency-domain resource.

57. The apparatus according to claim 56, wherein
the initial PDCCH frequency-domain resource and the initial SBFD time-frequency resource are in downlink slots or downlink symbols, and the initial SBFD time-frequency resource comprises at least one of an uplink sub-band or a guard sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, and the Flexible slots or the Flexible symbols are used for a downlink sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, the Flexible slots or the Flexible symbols are used for a Flexible sub-band, and the Flexible sub-band is used for downlink.

58. The apparatus according to claim 56 or 57, wherein when determining the target PDCCH frequency-domain resource based on the candidate PDCCH frequency-domain resource, the determining module is specifically configured to perform operations comprising:
when the candidate PDCCH frequency-domain resource comprises a first candidate frequency-domain resource and a second candidate frequency-domain resource, determining a first target frequency-domain resource based on the first candidate frequency-domain resource, and determining a second target frequency-domain resource based on the second candidate frequency-domain resource; and
determining the target PDCCH frequency-domain resource based on the first target frequency-domain resource and the second target frequency-domain resource; wherein the first target frequency-domain resource and the second target frequency-domain resource are non-consecutive frequency-domain resources; the first target frequency-domain resource corresponds to a control resource set (CORESET), and the second target frequency-domain resource corresponds to another CORESET.

59. The apparatus according to claim 58, wherein the first candidate frequency-domain resource comprises at least one control channel element (CCE), and for each CCE, a number of resource blocks (RB) in the CCE is related to control resource granularity; when determining a first target frequency-domain resource based on the first candidate frequency-domain resource, the determining module is specifically configured to perform operations comprising:
determining a total number of RBs corresponding to the first candidate frequency-domain resource;
determining a to-be-excluded number of RBs based on the total number of RBs and the control resource granularity, and excluding the to-be-excluded number of RBs from all RBs of the first candidate frequency-domain resource; and
generating the first target frequency-domain resource based on remaining RBs of the first candidate frequency-domain resource.

60. The apparatus according to claim 59, wherein
the to-be-excluded number is a remainder result of the total number of RBs and the control resource granularity;
the control resource granularity is a first value, or the control resource granularity is a second value, the second value is smaller than the first value, and the second value is greater than 0; wherein when the control resource granularity is the second value, an aggregation level corresponding to the control resource granularity is greater than a preset aggregation level.

61. The apparatus according to claim 58, wherein the first candidate frequency-domain resource comprises at least one CCE, and for each CCE, the CCE comprises at least one RB; when determining a first target frequency-domain resource based on the first candidate frequency-domain resource, the determining module is specifically configured to perform operations comprising:
when the first candidate frequency-domain resource comprises a first CCE, wherein part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

62. The apparatus according to claim 58, wherein the first candidate frequency-domain resource comprises at least one CCE, and for each CCE, the CCE comprises at least one RB; when determining a first target frequency-domain resource based on the first candidate frequency-domain resource, the determining module is specifically configured to perform operations comprising:
determining the first candidate frequency-domain resource as the first target frequency-domain resource;
wherein after determining the first candidate frequency-domain resource as the first target frequency-domain resource, the determining module is further configured to perform operations comprising: when the first candidate frequency-domain resource comprises a first CCE, wherein part of RBs of the first CCE are occupied by the overlapping resource, performing rate matching on data corresponding to the first CCE.

63. The apparatus according to claim 58, wherein the transmitting module is further configured to perform operations comprising: sending a PDCCH resource reconfiguration message to the UE, wherein the PDCCH resource reconfiguration message comprises resource information corresponding to the target PDCCH frequency-domain resource; wherein the target PDCCH frequency-domain resource comprises the first target frequency-domain resource and the second target frequency-domain resource, and the resource information comprises resource information corresponding to the first target frequency-domain resource and resource information corresponding to the second target frequency-domain resource.

64. The apparatus according to claim 56 or 57, wherein when determining the target PDCCH frequency-domain resource based on the candidate PDCCH frequency-domain resource, the determining module is specifically configured to perform operations comprising:
when the candidate PDCCH frequency-domain resource comprises a first candidate frequency-domain resource and a second candidate frequency-domain resource, generating consecutive frequency-domain resources based on the first candidate frequency-domain resource and the second candidate frequency-domain resource; and
determining the target PDCCH frequency-domain resource based on the consecutive frequency-domain resources; wherein the consecutive frequency-domain resources correspond to one CORESET.

65. The apparatus according to claim 64, wherein when generating consecutive frequency-domain resources based on the first candidate frequency-domain resource and the second candidate frequency-domain resource, the determining module is specifically configured to perform operations comprising:
when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; and
when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

66. The apparatus according to claim 64, wherein the transmitting module is further configured to perform operations comprising: sending a PDCCH resource reconfiguration message to the UE, wherein the PDCCH resource reconfiguration message comprises resource information corresponding to the target PDCCH frequency-domain resource; wherein the target PDCCH frequency-domain resource comprises the consecutive frequency-domain resources, and the resource information comprises resource information corresponding to the consecutive frequency-domain resources.

67. The apparatus according to claim 56 or 57, wherein when determining the target PDCCH frequency-domain resource based on the candidate PDCCH frequency-domain resource, the determining module is specifically configured to perform operations comprising:
when the candidate PDCCH frequency-domain resource comprises a first candidate frequency-domain resource and a second candidate frequency-domain resource, generating non-consecutive frequency-domain resources based on the first candidate frequency-domain resource and the second candidate frequency-domain resource; and
determining the target PDCCH frequency-domain resource based on the non-consecutive frequency-domain resources; wherein the non-consecutive frequency-domain resources correspond to one CORESET.

68. The apparatus according to claim 67, wherein the first candidate frequency-domain resource comprises at least one CCE, the second candidate frequency-domain resource comprises at least one CCE, and for each CCE, a number of RBs in the CCE is related to control resource granularity; when generating non-consecutive frequency-domain resources based on the first candidate frequency-domain resource and the second candidate frequency-domain resource, the determining module is specifically configured to perform operations comprising:
determining a total number of RBs corresponding to the first candidate frequency-domain resource and the second candidate frequency-domain resource;
determining a to-be-excluded number of RBs based on the total number of RBs and the control resource granularity, and excluding the to-be-excluded number of RBs from all RBs of the first candidate frequency-domain resource and the second candidate frequency-domain resource; and
generating the non-consecutive frequency-domain resources based on remaining RBs of the first candidate frequency-domain resource and the second candidate frequency-domain resource.

69. The apparatus according to claim 68, wherein
the to-be-excluded number is a remainder result of the total number of RBs and the control resource granularity;
the control resource granularity is a first value, or the control resource granularity is a second value, the second value is smaller than the first value, and the second value is greater than 0; wherein when the control resource granularity is the second value, an aggregation level corresponding to the control resource granularity is greater than a preset aggregation level.

70. The apparatus according to claim 67, wherein
the first candidate frequency-domain resource comprises at least one CCE, the second candidate frequency-domain resource comprises at least one CCE, and for each CCE, the CCE comprises at least one RB; when generating non-consecutive frequency-domain resources based on the first candidate frequency-domain resource and the second candidate frequency-domain resource, the determining module is specifically configured to perform operations comprising:
when the first candidate frequency-domain resource comprises a first CCE, wherein part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource;
when the second candidate frequency-domain resource comprises a second CCE, wherein part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource; and
generating the non-consecutive frequency-domain resources based on the first target frequency-domain resource and the second target frequency-domain resource.

71. The apparatus according to claim 67, wherein
the first candidate frequency-domain resource comprises at least one CCE, the second candidate frequency-domain resource comprises at least one CCE, and for each CCE, the CCE comprises at least one RB; when generating non-consecutive frequency-domain resources based on the first candidate frequency-domain resource and the second candidate frequency-domain resource, the determining module is specifically configured to perform operations comprising:
determining the first candidate frequency-domain resource and the second candidate frequency-domain resource as the non-consecutive frequency-domain resources;
wherein after determining the first candidate frequency-domain resource and the second candidate frequency-domain resource as the non-consecutive frequency-domain resources, the determining module is further configured to perform operations comprising: when the first candidate frequency-domain resource comprises a first CCE, wherein part of RBs of the first CCE are occupied by the overlapping resource, performing rate matching on data corresponding to the first CCE; when the second candidate frequency-domain resource comprises a second CCE, wherein part of RBs of the second CCE are occupied by the overlapping resource, performing rate matching on data corresponding to the second CCE.

72. The apparatus according to claim 67, wherein after determining the target PDCCH frequency-domain resource based on the non-consecutive frequency-domain resources, the determining module is further configured to perform operations comprising: when the target PDCCH frequency-domain resource needs to be interleaved, and the target PDCCH frequency-domain resource comprises the non-consecutive frequency-domain resources, splicing the non-consecutive frequency-domain resources and then interleaving.

73. The apparatus according to claim 67, wherein the transmitting module is further configured to perform operations comprising: sending a PDCCH resource reconfiguration message to the UE, wherein the PDCCH resource reconfiguration message comprises resource information corresponding to the target PDCCH frequency-domain resource; wherein the target PDCCH frequency-domain resource comprises the non-consecutive frequency-domain resources, and the resource information comprises resource information corresponding to the non-consecutive frequency-domain resources.

74. The apparatus according to claim 55, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
determining the initial SBFD time-frequency resource as the target SBFD time-frequency resource; and
excluding the overlapping resource from the initial PDCCH frequency-domain resource to obtain a candidate PDCCH frequency-domain resource, and when the initial SBFD time-frequency resource comprises a downlink sub-band, determining the target PDCCH frequency-domain resource based on the candidate PDCCH frequency-domain resource and a frequency-domain resource corresponding to the downlink sub-band.

75. The apparatus according to claim 55, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
determining the target PDCCH frequency-domain resource based on the overlapping resource of the initial PDCCH frequency-domain resource and the initial SBFD time-frequency resource, and excluding the target PDCCH frequency-domain resource from the initial SBFD time-frequency resource to determine a remaining time-frequency resource as the target SBFD time-frequency resource.

76. The apparatus according to claim 75, wherein
the initial PDCCH frequency-domain resource and the initial SBFD time-frequency resource are in uplink slots or uplink symbols, and the initial SBFD time-frequency resource comprises a downlink sub-band; or,
the initial PDCCH frequency-domain resource and the initial SBFD time-frequency resource are in Flexible slots or Flexible symbols, the initial SBFD time-frequency resource comprises a downlink sub-band, and the Flexible slots or the Flexible symbols are used for an uplink sub-band; or,
the initial PDCCH frequency-domain resource and the initial SBFD time-frequency resource are in Flexible slots or Flexible symbols, the initial SBFD time-frequency resource comprises a downlink sub-band, the Flexible slots or the Flexible symbols are used for a Flexible sub-band, and the Flexible sub-band is used for uplink.

77. The apparatus according to claim 75 or 76, wherein the transmitting module is further configured to perform operations comprising: sending a PDCCH resource reconfiguration message to the UE, wherein the PDCCH resource reconfiguration message comprises resource information corresponding to the target PDCCH frequency-domain resource; wherein the target PDCCH frequency-domain resource comprises the overlapping resource, and the resource information comprises resource information corresponding to the overlapping resource.

78. The apparatus according to claim 55, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
determining the initial PDCCH frequency-domain resource as the target PDCCH frequency-domain resource, and excluding the overlapping resource from the initial SBFD time-frequency resource to obtain the target SBFD time-frequency resource.

79. The apparatus according to claim 78, wherein
the initial PDCCH frequency-domain resource and the initial SBFD time-frequency resource are in downlink slots or downlink symbols, and the initial SBFD time-frequency resource comprises at least one of an uplink sub-band or a guard sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, and the Flexible slots or the Flexible symbols are used for a downlink sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, the Flexible slots or the Flexible symbols are used for a Flexible sub-band, and the Flexible sub-band is used for downlink.

80. The apparatus according to claim 55, wherein when a target frame comprises K downlink slots configured with the initial PDCCH frequency-domain resource in all slots of the target frame, and the initial PDCCH frequency-domain resource in M downlink slots overlaps with the initial SBFD time-frequency resource, M is smaller than K; when sending downlink data corresponding to the PDCCH based on the target PDCCH frequency-domain resource, the transmitting module is specifically configured to perform operations comprising:
sending the downlink data corresponding to the PDCCH based on the target PDCCH frequency-domain resources in the K downlink slots; or,
sending the downlink data corresponding to the PDCCH based on the target PDCCH frequency-domain resource in the M downlink slots, and sending the downlink data corresponding to the PDCCH on the initial PDCCH frequency-domain resource in remaining downlink slots rather than the M downlink slots.

81. The apparatus according to claim 55, wherein
the UE corresponds to N dedicated PDCCH frequency-domain resources and P dedicated PDCCH frequency-domain resources, the N dedicated PDCCH frequency-domain resources are initially configured PDCCH frequency-domain resources, and the P dedicated PDCCH frequency-domain resources are re-configured PDCCH frequency-domain resources; or,
the UE corresponds to N dedicated PDCCH frequency-domain resources, the N dedicated PDCCH frequency-domain resources comprise initially configured PDCCH frequency-domain resources and re-configured PDCCH frequency-domain resources.

82. A data transmission apparatus, applied to a user equipment (UE), comprising:
a determining module, configured to, when there is an overlapping resource between an initial physical downlink control channel (PDCCH) frequency-domain resource of a PDCCH and an initial sub-band full-duplex (SBFD) time-frequency resource of SBFD, determine a target PDCCH frequency-domain resource and a target SBFD time-frequency resource based on the initial PDCCH frequency-domain resource and the initial SBFD time-frequency resource, wherein the target PDCCH frequency-domain resource does not overlap with the target SBFD time-frequency resource; and
a transmitting module, configured to receive downlink data corresponding to the PDCCH based on the target PDCCH frequency-domain resource.

83. The apparatus according to claim 82, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
determining the initial SBFD time-frequency resource as the target SBFD time-frequency resource; and
excluding the overlapping resource from the initial PDCCH frequency-domain resource to obtain a candidate PDCCH frequency-domain resource, and determining the target PDCCH frequency-domain resource based on the candidate PDCCH frequency-domain resource.

84. The apparatus according to claim 83, wherein
the initial PDCCH frequency-domain resource and the initial SBFD time-frequency resource are in downlink slots or downlink symbols, and the initial SBFD time-frequency resource comprises at least one of an uplink sub-band or a guard sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, and the Flexible slots or the Flexible symbols are used for a downlink sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, the Flexible slots or the Flexible symbols are used for a Flexible sub-band, and the Flexible sub-band is used for downlink.

85. The apparatus according to claim 83 or 84, wherein when determining the target PDCCH frequency-domain resource based on the candidate PDCCH frequency-domain resource, the determining module is specifically configured to perform operations comprising:
when the candidate PDCCH frequency-domain resource comprises a first candidate frequency-domain resource and a second candidate frequency-domain resource, determining a first target frequency-domain resource and a second target frequency-domain resource;
determining the target PDCCH frequency-domain resource based on the first target frequency-domain resource and the second target frequency-domain resource; wherein the first target frequency-domain resource and the second target frequency-domain resource are non-consecutive frequency-domain resources, the first target frequency-domain resource is determined based on the first candidate frequency-domain resource, the second target frequency-domain resource is determined based on the second candidate frequency-domain resource; the first target frequency-domain resource corresponds to a control resource set (CORESET), and the second target frequency-domain resource corresponds to another CORESET.

86. The apparatus according to claim 85, wherein the first candidate frequency-domain resource comprises at least one control channel element (CCE), and for each CCE, a number of resource blocks (RB) in the CCE is related to control resource granularity; when determining a first target frequency-domain resource based on the first candidate frequency-domain resource, the determining module is specifically configured to perform operations comprising:
determining a total number of RBs corresponding to the first candidate frequency-domain resource;
determining a to-be-excluded number of RBs based on the total number of RBs and the control resource granularity, and excluding the to-be-excluded number of RBs from all RBs of the first candidate frequency-domain resource; and
generating the first target frequency-domain resource based on remaining RBs of the first candidate frequency-domain resource.

87. The apparatus according to claim 86, wherein
the to-be-excluded number is a remainder result of the total number of RBs and the control resource granularity;
the control resource granularity is a first value, or the control resource granularity is a second value, the second value is smaller than the first value, and the second value is greater than 0; wherein when the control resource granularity is the second value, an aggregation level corresponding to the control resource granularity is greater than a preset aggregation level.

88. The apparatus according to claim 85, wherein the first candidate frequency-domain resource comprises at least one CCE, and for each CCE, the CCE comprises at least one RB; when determining a first target frequency-domain resource based on the first candidate frequency-domain resource, the determining module is specifically configured to perform operations comprising:
when the first candidate frequency-domain resource comprises a first CCE, wherein part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource.

89. The apparatus according to claim 85, wherein the first candidate frequency-domain resource comprises at least one CCE, and for each CCE, the CCE comprises at least one RB; when determining a first target frequency-domain resource based on the first candidate frequency-domain resource, the determining module is specifically configured to perform operations comprising:
determining the first candidate frequency-domain resource as the first target frequency-domain resource;
wherein after determining the first candidate frequency-domain resource as the first target frequency-domain resource, the determining module is further configured to perform operations comprising: when the first candidate frequency-domain resource comprises a first CCE, wherein part of RBs of the first CCE are occupied by the overlapping resource, performing rate matching on data corresponding to the first CCE.

90. The apparatus according to claim 85, wherein
when determining the first target frequency-domain resource and the second target frequency-domain resource, and determining the target PDCCH frequency-domain resource based on the first target frequency-domain resource and the second target frequency-domain resource, the determining module is specifically configured to perform operations comprising:
receiving a PDCCH resource reconfiguration message, wherein the PDCCH resource reconfiguration message comprises resource information corresponding to the first target frequency-domain resource and resource information corresponding to the second target frequency-domain resource;
determining the first target frequency-domain resource based on the resource information corresponding to the first target frequency-domain resource; determining the second target frequency-domain resource based on the resource information corresponding to the second target frequency-domain resource; determining the target PDCCH frequency-domain resource based on the first target frequency-domain resource and the second target frequency-domain resource.

91. The apparatus according to claim 83 or 84, wherein when determining the target PDCCH frequency-domain resource based on the candidate PDCCH frequency-domain resource, the determining module is specifically configured to perform operations comprising:
when the candidate PDCCH frequency-domain resource comprises a first candidate frequency-domain resource and a second candidate frequency-domain resource, generating consecutive frequency-domain resources based on the first candidate frequency-domain resource and the second candidate frequency-domain resource; and
determining the target PDCCH frequency-domain resource based on the consecutive frequency-domain resources; wherein the consecutive frequency-domain resources correspond to one CORESET.

92. The apparatus according to claim 91, wherein when generating consecutive frequency-domain resources based on the first candidate frequency-domain resource and the second candidate frequency-domain resource, the determining module is specifically configured to perform operations comprising:
when the candidate PDCCH frequency-domain resource occupies a single orthogonal frequency division multiplexing (OFDM) symbol, performing resource integration on the first candidate frequency-domain resource and the second candidate frequency-domain resource on the single OFDM symbol to obtain the consecutive frequency-domain resources; and
when the candidate PDCCH frequency-domain resource occupies a plurality of OFDM symbols, performing resource integration on the first candidate frequency-domain resource and the second candidate frequency-domain resource on the plurality of OFDM symbols to obtain the consecutive frequency-domain resources.

93. The apparatus according to claim 83 or 84, wherein when determining the target PDCCH frequency-domain resource based on the candidate PDCCH frequency-domain resource, the determining module is specifically configured to perform operations comprising:
receiving a PDCCH resource reconfiguration message, wherein the PDCCH resource reconfiguration message comprises resource information corresponding to the consecutive frequency-domain resources, the consecutive frequency-domain resources are generated based on a first candidate frequency-domain resource and a second candidate frequency-domain resource in the candidate PDCCH frequency-domain resource by a base station; and
determining the target PDCCH frequency-domain resource based on the consecutive frequency-domain resource corresponding to the resource information.

94. The apparatus according to claim 83 or 84, wherein when determining the target PDCCH frequency-domain resource based on the candidate PDCCH frequency-domain resource, the determining module is specifically configured to perform operations comprising:
when the candidate PDCCH frequency-domain resource comprises a first candidate frequency-domain resource and a second candidate frequency-domain resource, generating non-consecutive frequency-domain resources based on the first candidate frequency-domain resource and the second candidate frequency-domain resource; and
determining the target PDCCH frequency-domain resource based on the non-consecutive frequency-domain resources; wherein the non-consecutive frequency-domain resources correspond to one CORESET.

95. The apparatus according to claim 94, wherein the first candidate frequency-domain resource comprises at least one CCE, the second candidate frequency-domain resource comprises at least one CCE, and for each CCE, a number of RBs in the CCE is related to control resource granularity; when generating non-consecutive frequency-domain resources based on the first candidate frequency-domain resource and the second candidate frequency-domain resource, the determining module is specifically configured to perform operations comprising:
determining a total number of RBs corresponding to the first candidate frequency-domain resource and the second candidate frequency-domain resource;
determining a to-be-excluded number of RBs based on the total number of RBs and the control resource granularity, and excluding the to-be-excluded number of RBs from all RBs of the first candidate frequency-domain resource and the second candidate frequency-domain resource; and
generating the non-consecutive frequency-domain resources based on remaining RBs of the first candidate frequency-domain resource and the second candidate frequency-domain resource.

96. The apparatus according to claim 95, wherein
the to-be-excluded number is a remainder result of the total number of RBs and the control resource granularity;
the control resource granularity is a first value, or the control resource granularity is a second value, the second value is smaller than the first value, and the second value is greater than 0; wherein when the control resource granularity is the second value, an aggregation level corresponding to the control resource granularity is greater than a preset aggregation level.

97. The apparatus according to claim 97, wherein the first candidate frequency-domain resource comprises at least one CCE, the second candidate frequency-domain resource comprises at least one CCE, and for each CCE, the CCE comprises at least one RB; when generating non-consecutive frequency-domain resources based on the first candidate frequency-domain resource and the second candidate frequency-domain resource, the determining module is specifically configured to perform operations comprising:
when the first candidate frequency-domain resource comprises a first CCE, wherein part of RBs of the first CCE are occupied by the overlapping resource, excluding the first CCE from all CCEs of the first candidate frequency-domain resource to obtain the first target frequency-domain resource; otherwise, determining the first candidate frequency-domain resource as the first target frequency-domain resource;
when the second candidate frequency-domain resource comprises a second CCE, wherein part of RBs of the second CCE are occupied by the overlapping resource, excluding the second CCE from all CCEs of the second candidate frequency-domain resource to obtain the second target frequency-domain resource; otherwise, determining the second candidate frequency-domain resource as the second target frequency-domain resource; and
generating the non-consecutive frequency-domain resources based on the first target frequency-domain resource and the second target frequency-domain resource.

98. The apparatus according to claim 97, wherein the first candidate frequency-domain resource comprises at least one CCE, the second candidate frequency-domain resource comprises at least one CCE, and for each CCE, the CCE comprises at least one RB; when generating non-consecutive frequency-domain resources based on the first candidate frequency-domain resource and the second candidate frequency-domain resource, the determining module is specifically configured to perform operations comprising:
determining the first candidate frequency-domain resource and the second candidate frequency-domain resource as the non-consecutive frequency-domain resources;
wherein after determining the first candidate frequency-domain resource and the second candidate frequency-domain resource as the non-consecutive frequency-domain resources, the determining module is further configured to perform operations comprising: when the first candidate frequency-domain resource comprises a first CCE, wherein part of RBs of the first CCE are occupied by the overlapping resource, performing rate matching on data corresponding to the first CCE; when the second candidate frequency-domain resource comprises a second CCE, wherein part of RBs of the second CCE are occupied by the overlapping resource, performing rate matching on data corresponding to the second CCE.

99. The apparatus according to claim 94, wherein after determining the target PDCCH frequency-domain resource based on the non-consecutive frequency-domain resources, the determining module is further configured to perform operations comprising: when the target PDCCH frequency-domain resource needs to be interleaved, and the target PDCCH frequency-domain resource comprises the non-consecutive frequency-domain resources, splicing the non-consecutive frequency-domain resources and then interleaving.

100. The apparatus according to claim 83 or 84, wherein when determining the target PDCCH frequency-domain resource based on the candidate PDCCH frequency-domain resource, the determining module is specifically configured to perform operations comprising:
receiving a PDCCH resource reconfiguration message, wherein the PDCCH resource reconfiguration message comprises resource information corresponding to the non-consecutive frequency-domain resources, the non-consecutive frequency-domain resources are generated based on a first candidate frequency-domain resource and a second candidate frequency-domain resource in the candidate PDCCH frequency-domain resource by a base station;
determining the target PDCCH frequency-domain resource based on the non-consecutive frequency-domain resource corresponding to the resource information.

101. The apparatus according to claim 82, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
determining the initial SBFD time-frequency resource as the target SBFD time-frequency resource; and
excluding the overlapping resource from the initial PDCCH frequency-domain resource to obtain a candidate PDCCH frequency-domain resource, and when the initial SBFD time-frequency resource comprises a downlink sub-band, determining the target PDCCH frequency-domain resource based on the candidate PDCCH frequency-domain resource and a frequency-domain resource corresponding to the downlink sub-band.

102. The apparatus according to claim 82, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
determining the target PDCCH frequency-domain resource based on the overlapping resource of the initial PDCCH frequency-domain resource and the initial SBFD time-frequency resource, and excluding the target PDCCH frequency-domain resource from the initial SBFD time-frequency resource to determine a remaining time-frequency resource as the target SBFD time-frequency resource.

103. The apparatus according to claim 102, wherein
the initial PDCCH frequency-domain resource and the initial SBFD time-frequency resource are in uplink slots or uplink symbols, and the initial SBFD time-frequency resource comprises a downlink sub-band; or,
the initial PDCCH frequency-domain resource and the initial SBFD time-frequency resource are in Flexible slots or Flexible symbols, the initial SBFD time-frequency resource comprises a downlink sub-band, and the Flexible slots or the Flexible symbols are used for an uplink sub-band; or,
the initial PDCCH frequency-domain resource and the initial SBFD time-frequency resource are in Flexible slots or Flexible symbols, the initial SBFD time-frequency resource comprises a downlink sub-band, the Flexible slots or the Flexible symbols are used for a Flexible sub-band, and the Flexible sub-band is used for uplink.

104. The apparatus according to claim 82, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
receiving a PDCCH resource reconfiguration message, wherein the PDCCH resource reconfiguration message comprises resource information corresponding to the overlapping resource of the initial PDCCH frequency-domain resource and the initial SBFD time-frequency resource, and determining the target PDCCH frequency-domain resource based on the overlapping resource corresponding to the resource information; and
excluding the target PDCCH frequency-domain resource from the initial SBFD time-frequency resource, and determining a remaining time-frequency resource after excluding the target PDCCH frequency-domain resource as the target SBFD time-frequency resource.

105. The apparatus according to claim 82, wherein
when determining a target PDCCH frequency-domain resource and a target SBFD time-frequency resource based on the initial PDCCH frequency-domain resource and the initial SBFD time-frequency resource, the determining module is specifically configured to perform operations comprising:
determining the initial PDCCH frequency-domain resource as the target PDCCH frequency-domain resource, and excluding the overlapping resource from the initial SBFD time-frequency resource to obtain the target SBFD time-frequency resource.

106. The apparatus according to claim 105, wherein
the initial PDCCH frequency-domain resource and the initial SBFD time-frequency resource are in downlink slots or downlink symbols, and the initial SBFD time-frequency resource comprises at least one of an uplink sub-band or a guard sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, and the Flexible slots or the Flexible symbols are used for a downlink sub-band; or,
the initial PDCCH frequency-domain resource and the initial SBFD time-frequency resource are in Flexible slots or Flexible symbols, the initial SBFD time-frequency resource comprises at least one of an uplink sub-band or a guard sub-band, the Flexible slots or the Flexible symbols are used for a Flexible sub-band, and the Flexible sub-band is used for downlink.

107. The apparatus according to claim 82, wherein when a target frame comprises K downlink slots configured with the initial PDCCH frequency-domain resource in all slots of the target frame, and the initial PDCCH frequency-domain resource in M downlink slots overlaps with the initial SBFD time-frequency resource, M is smaller than K; when receiving downlink data corresponding to the PDCCH based on the target PDCCH frequency-domain resource, the transmitting module is specifically configured to perform operations comprising:
receiving the downlink data corresponding to the PDCCH based on the target PDCCH frequency-domain resources in the K downlink slots; or,
receiving the downlink data corresponding to the PDCCH based on the target PDCCH frequency-domain resource in the M downlink slots, and receiving the downlink data corresponding to the PDCCH on the initial PDCCH frequency-domain resource in remaining downlink slots rather than the M downlink slots.

108. The apparatus according to claim 82, wherein
the UE corresponds to N dedicated PDCCH frequency-domain resources and P dedicated PDCCH frequency-domain resources, the N dedicated PDCCH frequency-domain resources are initially configured PDCCH frequency-domain resources, and the P dedicated PDCCH frequency-domain resources are re-configured PDCCH frequency-domain resources; or,
the UE corresponds to N dedicated PDCCH frequency-domain resources, the N dedicated PDCCH frequency-domain resources comprise initially configured PDCCH frequency-domain resources and re-configured PDCCH frequency-domain resources.

109. An electronic device, comprising a processor and a machine-readable storage medium, wherein the machine-readable storage medium stores a machine-executable instruction executable by the processor; the processor is configured to execute the machine-executable instruction to implement the method according to any one of claims 1-54.
